(19) Europäisches Patentamt
European Patent Office
Office européen des brevets

(11) **EP 4 535 682 A1**

(12) **EUROPEAN PATENT APPLICATION**
published in accordance with Art. 153(4) EPC

(43) Date of publication:
**09.04.2025 Bulletin 2025/15**

(21) Application number: **23829927.5**

(22) Date of filing: **12.06.2023**

(51) International Patent Classification (IPC):
**H04B 7/06** (2006.01)

(52) Cooperative Patent Classification (CPC):
**H04B 7/0456; H04B 7/06; H04L 5/00**

(86) International application number:
**PCT/CN2023/099696**

(87) International publication number:
**WO 2024/001744 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.06.2022 CN 202210784942**

(71) Applicant: **Huawei Technologies Co., Ltd.
Shenzhen, Guangdong 518129 (CN)**

(72) Inventors:
• **FAN, Li
Shenzhen, Guangdong 518129 (CN)**

• **QIN, Qibo
Shenzhen, Guangdong 518129 (CN)**
• **CHEN, Shujing
Shenzhen, Guangdong 518129 (CN)**
• **ZHONG, Zhimeng
Shenzhen, Guangdong 518129 (CN)**
• **JIN, Huangping
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **CHANNEL STATE INFORMATION REPORTING METHOD AND COMMUNICATION APPARATUS**

(57) Embodiments of this application provide a channel state information reporting method and a communications apparatus. In the method, a receiving device obtains first channel state information CSI and second CSI, and determines reference information based on the first CSI and the second CSI. The first CSI is correlated with the second CSI, the reference information includes first quantization information and second quantization information, the first quantization information includes projection quantization information of a common subspace, the second quantization information includes projection quantization information of a first non-common subspace, the common subspace includes an intersection of a first space used to quantize the first CSI and a second space used to quantize the second CSI, and the first non-common subspace includes a subspace other than the common subspace in the first space. The receiving device sends the reference information to a sending device, and the sending device determines the first CSI based on the reference information and the second CSI. The method can reduce air interface overheads for CSI feedback of the receiving device.

FIG. 9

**Description**

**CROSS-REFERENCE TO RELATED APPLICATIONS**

This application claims priority to Chinese Patent Application No. 202210784942.8, filed with the China National Intellectual Property Administration on June 29, 2022 and entitled "CHANNEL STATE INFORMATION REPORTING METHOD AND COMMUNICATIONS APPARATUS", which is incorporated herein by reference in its entirety.

**TECHNICAL FIELD**

Embodiments of this application relate to the field of communications technologies, and in particular, to a channel state information reporting method and a communications apparatus.

**BACKGROUND**

A multiple-input multiple-output (multiple-input multiple-output, MIMO) technology is a core technology of a long term evolution (long term evolution, LTE) system and 5th generation (5th generation, 5G) new radio (new radio, NR). In the MIMO technology, when sending data to a terminal device, a network device needs to perform precoding on a to-be-sent signal based on downlink channel state information (channel state Information, CSI).

The terminal device may obtain the CSI based on a codebook separately compressed in spatial domain and frequency domain, and feed back the CSI to the network device. Because compression is separately performed in spatial domain and frequency domain, when feeding back the CSI, the terminal device may feed back one or more selected spatial domain vectors and one or more selected frequency domain vectors to the network device. However, the separate compression of the codebook in spatial domain and frequency domain utilizes only sparse characteristics of a channel in a spatial domain (corresponding to an angular domain) and a frequency domain (corresponding to a delay domain), that is, spatial domain information related characteristics on different subbands (subbands), to perform compression and feedback. Therefore, a spatial domain basis (formed by one or more spatial domain vectors), a frequency domain basis (formed by one or more frequency domain vectors), and a full bandwidth (full bandwidth) combination coefficient need to be reported, and air interface overheads are high. How to feed back the CSI more efficiently is an urgent problem that needs to be resolved for efficient application of the MIMO technology.

**SUMMARY**

This application provides a channel state information reporting method and a communications apparatus, to reduce feedback overheads of a terminal device.

According to a first aspect, this application provides a channel state information reporting method. The method may be implemented through interaction between a sending device and a receiving device. In a downlink data transmission scenario, the receiving device may be a user equipment (user equipment, UE), a vehicle-mounted device, a terminal device, or the like; and the sending device may be a transmission reception point (transmission reception point, TRP), a 5G base station (gNodeB, gNB), or the like. In an uplink data transmission scenario, the receiving device and the sending device may be interchanged. For example, the receiving device includes a gNB, and the sending device includes a UE. In a scenario of data transmission between terminal devices, the sending device and the receiving device are different terminal devices. The transmission scenario is not specifically limited in this application. The method is performed as follows.

The receiving device obtains first channel state information (channel state information, CSI) and second CSI. The receiving device determines reference information, where the reference information is determined based on the first CSI and the second CSI, the first CSI is correlated with the second CSI, the reference information includes first quantization information and second quantization information, the first quantization information includes projection quantization information of a common subspace, the second quantization information includes projection quantization information of a first non-common subspace, the common subspace includes an intersection of a first space for the first CSI and a second space for the second CSI, and the first non-common subspace includes a subspace other than the common subspace in the first space. The receiving device sends the reference information to the sending device. Correspondingly, the sending device obtains the second CSI, receives the reference information, and determines the first CSI based on the reference information and the second CSI.

In this application, the first CSI and the second CSI may belong to different moments of the same sending device, the first CSI and the second CSI may belong to the same moment or different moments of different sending devices, or the first CSI and the second CSI may belong to the same frequency band or different frequency bands. This is not specifically limited in this application. The receiving device determines the reference information of the first CSI based on the second CSI, that is, a differential quantization manner is introduced to determine the reference information. Compared with a scheme in which the terminal device separately reports a spatial domain basis, a frequency domain basis, and a full bandwidth combination coefficient or in which the terminal device reports a large amount of parameter information such as a spatial-frequency joint basis and a full bandwidth combination coefficient, so that the network device determines the first CSI, this application designs a new feedback scheme by using an association relationship between the first CSI and the second CSI, and a small quantity of parameters are reported. This manner significantly reduces air interface overheads of feedback.

In an optional manner, before determining the reference information of the first CSI, the receiving device may receive a downlink reference signal from the sending device, or send an uplink reference signal to the sending device. The downlink reference signal may include a channel state information reference signal (channel state information reference signal, CSI-RS), a synchronization signal/physical broadcast channel block (synchronization signal/physical broadcast channel block, SSB), a demodulation reference signal (demodulation reference signal, DMRS), or the like. The uplink reference signal may include a sounding reference signal (sounding reference signal, SRS) or the like. This is not specifically limited in this application.

In an optional manner, that the first CSI is correlated with the second CSI includes one or more of the following: the first CSI is associated with the second CSI in time domain, the first CSI is associated with the second CSI in spatial domain, or the first CSI is associated with the second CSI in frequency domain.

It should be noted that the first CSI is associated with the second CSI in time domain may be understood as CSI of the same sending device or receiving device at different moments. For example, CSI of a TRP 1 at a moment 1 is the second CSI, and CSI of the TRP 1 at a moment 2 is the first CSI. The first CSI is associated with the second CSI in spatial domain may be understood as CSI of two sending devices or receiving devices at the same moment or different moments. For example, CSI of the TRP 1 at the moment 1 is the second CSI, and CSI of a TRP 2 at the moment 1 is the first CSI. The first CSI is associated with the second CSI in frequency domain may be understood as CSI of the same sending device or receiving device on different frequency bands. For example, CSI of the TRP 1 on a frequency band 1 is the second CSI, and CSI of the TRP 1 on a frequency band 2 is the first CSI. Certainly, in actual application, this is not limited to the foregoing several association relationships, and may be a combination of the foregoing association relationships, for example, a combination of multiple receiving devices or multiple TRPs, multiple frequencies, and multiple moments.

The foregoing is merely an example for description, and is not specifically limited. This application can reduce air interface overheads for feedback by using the correlation between the first CSI and the second CSI.

In an optional manner, one or more first basis vectors used to quantize the first space form a first basis, and one or more second basis vectors used to quantize the second space form a second basis.

It should be noted that a quantity of first basis vectors forming the first basis may be the same as or different from a quantity of second basis vectors forming the second basis. This is not specifically limited in this application.

In an optional manner, the projection quantization information of the common subspace includes a first projection quantization parameter of the common subspace on the second basis, and the projection quantization information of the first non-common subspace includes index information of a third basis vector forming a third basis and a second projection quantization parameter of the first non-common subspace on the third basis, where the third basis is formed by one or more third basis vectors used to quantize the first non-common subspace.

In this manner, the reference information is determined based on the projection quantization parameter of the common subspace and the projection quantization parameter of the first non-common subspace, and the first CSI is determined based on the feedback reference information. Compared with the feedback of the spatial domain basis, the frequency domain basis, and the full bandwidth combination coefficient, feedback overheads of the receiving device can be reduced.

In an optional manner, the first space includes a first spatial domain space and a first frequency domain space, the second space includes a second spatial domain space and a second frequency domain space, the common subspace includes a spatial domain common subspace and a frequency domain common subspace, the first basis includes a first spatial domain basis and a first frequency domain basis, the second basis includes a second spatial domain basis and a second frequency domain basis, the third basis includes a third spatial domain basis and a third frequency domain basis, the first non-common subspace includes a first spatial domain non-common subspace and a first frequency domain non-common subspace, the spatial domain common subspace includes an intersection of the first spatial domain space and the second spatial domain space, the frequency domain common subspace includes an intersection of the first frequency domain space and the second frequency domain space, the first spatial domain non-common subspace includes a subspace other than the spatial domain common subspace in the first spatial domain space, the first frequency domain non-common subspace includes a subspace other than the frequency domain common subspace in the first frequency domain space, the third basis vector includes a third spatial domain basis vector and a third frequency domain basis vector, the third spatial domain basis is formed by one or more third spatial domain basis vectors used to quantize the first spatial domain non-common subspace, and the third frequency domain basis is formed by one or more third frequency domain basis vectors used to quantize the first frequency domain non-common subspace; and

the projection quantization information of the common subspace includes a projection quantization parameter of the spatial domain common subspace on the second spatial domain basis and a projection quantization parameter of the frequency domain common subspace on the second frequency domain basis, and the projection quantization information of the first non-common subspace includes index information of the third spatial domain basis vector forming the third spatial domain basis, index information of the third frequency domain basis vector forming the third frequency domain basis, a projection quantization parameter of the first spatial domain non-common subspace on the third spatial domain basis, and a projection quantization parameter of the first frequency domain non-common subspace on the third frequency domain basis.

In this manner, feedback overheads of the receiving device can be reduced.

In an optional manner, the spatial domain common subspace is determined based on a projection matrix of the first spatial domain space and a projection matrix of the second spatial domain space, the frequency domain common subspace is determined based on a projection matrix of the first frequency domain space and a projection matrix of the second frequency domain space, the first spatial domain non-common subspace includes a subspace of the first spatial domain space that is orthogonal to the spatial domain common subspace, and the first frequency domain non-common subspace includes a subspace of the first frequency domain space that is orthogonal to the frequency domain common subspace; the projection quantization parameter of the spatial domain common subspace on the second spatial domain basis is determined by quantizing a projection coefficient of the spatial domain common subspace on a quantization basis of the second spatial domain basis; the projection quantization parameter of the frequency domain common subspace on the second frequency domain basis is determined by quantizing a projection coefficient of the frequency domain common subspace on a quantization basis of the second frequency domain basis; the projection quantization parameter of the first spatial domain non-common subspace on the third spatial domain basis is determined by quantizing a projection coefficient of the first spatial domain common subspace on the third spatial domain basis; and the projection quantization parameter of the first frequency domain non-common subspace on the third frequency domain basis is determined by quantizing a projection coefficient of the first frequency domain common subspace on the third frequency domain basis.

In this manner, feedback overheads of the receiving device can be reduced.

In an optional manner, the first space includes a first joint spatial-frequency domain space, the second space includes a second joint spatial-frequency domain space, the common subspace includes a joint spatial-frequency domain common subspace, the first basis includes a first joint spatial-frequency domain basis, the second basis includes a second joint spatial-frequency domain basis, the third basis includes a third joint spatial-frequency domain basis, the first non-common subspace includes a first joint spatial-frequency domain non-common subspace, the joint spatial-frequency domain common subspace includes an intersection of the first joint spatial-frequency domain space and the second joint spatial-frequency domain space, the first joint spatial-frequency domain non-common subspace includes a subspace other than the joint spatial-frequency domain common subspace in the first joint spatial-frequency domain space, the third basis vector includes a third joint spatial-frequency domain basis vector, and the third joint spatial-frequency domain basis is formed by one or more third joint spatial-frequency domain basis vectors used to quantize the first joint spatial-frequency domain non-common subspace; and

the projection quantization information of the common subspace includes a projection quantization parameter of the joint spatial-frequency domain common subspace on the second joint spatial-frequency domain basis, and the projection quantization information of the first non-common subspace includes index information of the third joint spatial-frequency domain basis vector forming the third joint spatial-frequency domain basis and a projection quantization parameter of the first joint spatial-frequency domain non-common subspace on the third joint spatial-frequency domain basis.

In this manner, feedback overheads of the receiving device can be reduced.

In an optional manner, the joint spatial-frequency domain common subspace is determined based on a projection matrix of the first joint spatial-frequency domain space and a projection matrix of the second joint spatial-frequency domain space, and the first joint spatial-frequency domain non-common subspace includes a subspace of the first joint spatial-frequency domain space that is orthogonal to the joint spatial-frequency domain common subspace; the projection quantization parameter of the joint spatial-frequency domain common subspace on the second joint spatial-frequency domain basis is determined by quantizing a projection coefficient of the joint spatial-frequency domain common subspace on a quantization basis of the second joint spatial-frequency domain basis; and the projection quantization parameter of the first joint spatial-frequency domain non-common subspace on the third joint spatial-frequency domain basis is determined by quantizing a second projection coefficient of the first joint spatial-frequency domain non-common subspace on the third spatial domain basis.

In this manner, feedback overheads of the receiving device can be reduced.

In an optional manner, the first basis, the second basis, and the third basis are bases of a same type, and the bases of the same type include one or a combination of the following:

a spatial domain basis, an angular domain basis, a frequency domain basis, a delay domain basis, a time domain basis, or a Doppler domain basis.

In an optional manner, the first basis vector, the second basis vector, and the third basis vector are basis vectors of a same type, and the basis vectors of the same type include one of the following:

a discrete Fourier transform (discrete Fourier transform, DFT) basis vector, a fast Fourier transform (fast fourier transform, FFT) basis vector, an oversampled DFT basis vector, an oversampled FFT basis vector, a vector determined based on a preset rule, or a basis vector determined based on the second CSI.

According to a second aspect, this application provides a channel state information reporting method. The method may be implemented through interaction between a sending device and a receiving device. In a downlink data transmission scenario, the receiving device may be a UE, a vehicle-mounted device, a terminal device, or the like; and the sending device may be a TRP, a gNB, or the like. In an uplink data transmission scenario, the receiving device and the sending device may be interchanged. For example, the receiving device includes a gNB, and the sending device includes a UE. In a scenario of data transmission between terminal devices, the sending device and the receiving device are different terminal devices. The transmission scenario is not specifically limited in this application. The method is performed as follows.

The receiving device obtains first CSI and second CSI; determines reference information, where the reference information is determined based on the first CSI and the second CSI, the first CSI is correlated with the second CSI, the reference information includes index information of basis vectors forming a third set and a third projection quantization parameter of a first basis on a fourth basis, the fourth basis includes a basis corresponding to a fourth space, the fourth space includes a union of a second space used to quantize the second CSI and a space formed by basis vectors corresponding to the third set, the index information of the basis vectors of the third set belongs to a first set but does not belong to a second set, the first set is formed by index information of basis vectors for projection quantization of the first basis, the second set is formed by index information of basis vectors for projection quantization of a second basis, the first basis is formed by one or more first basis vectors used to quantize a first space for the first CSI, and the second basis is formed by one or more second basis vectors used to quantize a second space; and sends the reference information to the sending device. Correspondingly, the sending device obtains the second CSI, receives the reference information, and determines the first CSI based on the reference information and the second CSI.

In this application, a differential feedback scheme is designed by using an association relationship between the first CSI and the second CSI, and a small quantity of quantization parameters are reported. In this manner, feedback overheads of the receiving device are significantly reduced.

In an optional manner, the first basis includes the first spatial domain basis and the first frequency domain basis, the second basis includes the second spatial domain basis and the second frequency domain basis, the fourth basis includes a fourth spatial domain basis and a fourth frequency domain basis, the first set includes a first spatial domain set and a first frequency domain set, the second set includes a second spatial domain set and a second frequency domain set, the third set includes a third spatial domain set and a third frequency domain set, the fourth space includes a fourth spatial domain space and a fourth frequency domain space, the first space includes the first spatial domain space and the first frequency domain space, and the second space includes a second spatial domain space and a second frequency domain space.

The reference information includes index information of the basis vectors forming the third spatial domain set, index information of the basis vectors forming the third frequency domain set, a projection quantization parameter of the first spatial domain basis on the fourth spatial domain basis, and a projection quantization parameter of the first frequency domain basis on the fourth spatial domain basis. The second spatial domain set is formed by codebook indexes used to project the second spatial domain basis. The second frequency domain set is formed by codebook indexes used to project the second frequency domain basis. The first spatial domain set is formed by codebook indexes used to project the first spatial domain basis. The first frequency domain set is formed by codebook indexes used to project the first frequency domain basis. The third spatial domain set is formed by codebook indexes that are in the first spatial domain set but are not in the second spatial domain set; the third frequency domain set is formed by codebook indexes that are in the first frequency domain set but are not in the second frequency domain set; the fourth spatial domain space is determined through orthogonalization of the second spatial domain space and a space formed by basis vectors corresponding to the third spatial domain set; and the fourth frequency domain space is determined through orthogonalization of the second frequency domain space and a space formed by basis vectors corresponding to the third frequency domain set.

The projection quantization parameter of the first spatial domain basis on the fourth spatial domain basis is determined by quantizing the projection coefficient of the first spatial domain basis on the fourth spatial domain basis. The projection quantization parameter of the first frequency domain basis on the fourth frequency domain basis is determined by quantizing the projection coefficient of the first frequency domain basis on the fourth frequency domain basis.

In this manner, feedback overheads of the receiving device can be reduced.

In an optional manner, the first basis includes a first joint spatial-frequency domain basis, the second basis includes a second joint spatial-frequency domain basis, the fourth basis includes a fourth joint spatial-frequency domain basis, the first set includes a first joint spatial-frequency domain set, the second set includes a second joint spatial-frequency domain set, the third set includes a third joint spatial-frequency domain set, the fourth space includes a fourth joint spatial-frequency domain space, the first space includes a first joint spatial-frequency domain space, and the second space includes a second joint spatial-frequency domain space.

The reference information includes index information of the basis vectors forming the third joint spatial-frequency domain set and the projection quantization parameter of the first joint spatial-frequency domain basis on the fourth joint spatial-frequency domain basis. The second joint spatial-frequency domain set is formed by codebook indexes used to project the second joint spatial-frequency domain basis. The first joint spatial-frequency domain set is formed by codebook indexes used to project the first joint spatial-frequency domain basis. The third joint spatial-frequency domain set is formed by codebook indexes that are in the first joint spatial-frequency domain set but are not in the second joint spatial-frequency domain set. The fourth joint spatial-frequency domain space is determined through orthogonalization of the second joint spatial-frequency domain space and the space formed by the basis vectors corresponding to the third joint spatial-frequency domain set.

The projection quantization parameter of the first joint spatial-frequency domain basis on the fourth joint spatial-frequency domain basis is determined by quantizing the projection coefficient of the first joint spatial-frequency domain basis on the fourth joint spatial-frequency domain basis.

In this manner, feedback overheads of the receiving device can be reduced.

In an optional manner, the first basis, the second basis, and the fourth basis are bases of the same type, and the bases of the same type include one or a combination of the following:

a spatial domain basis, an angular domain basis, a frequency domain basis, a delay domain basis, a time domain basis, or a Doppler domain basis.

In an optional manner, the first basis vector, the second basis vector, and the fourth basis vector are basis vectors of the same type, and the basis vectors of the same type include one of the following:

a DFT basis vector, an FFT basis vector, an oversampled DFT basis vector, an oversampled FFT basis vector, a vector determined based on a preset rule, or a basis vector determined based on the second CSI.

In an optional manner, that the first CSI is correlated with the second CSI includes one or more of the following: the first CSI is associated with the second CSI in time domain, the first CSI is associated with the second CSI in spatial domain, or the first CSI is associated with the second CSI in frequency domain.

According to a third aspect, an embodiment of this application provides a communications apparatus. The communications apparatus may be a receiving device or a chip disposed in the receiving device, or may be a sending device or a chip disposed in the sending device. The communications apparatus has a function of implementing the first aspect or the second aspect. For example, the communications apparatus includes a corresponding module, unit, or means (means) for performing the steps in any one of the first aspect, or a corresponding module, unit, or means for performing the steps in any one of the second aspect. The function, unit, or means may be implemented by software or hardware, or may be implemented by hardware executing corresponding software.

In a possible design, the communications apparatus includes a processing unit and a transceiver unit. The transceiver unit may be configured to send and receive signals, to implement communication between the communications apparatus and another apparatus. For example, the transceiver unit is configured to receive reference information from a receiving device. The processing unit may be configured to perform some internal operations of the communications apparatus. The transceiver unit may be referred to as an input/output unit, a communications unit, or the like, and the transceiver unit may be a transceiver. The processing unit may be a processor. When the communications apparatus is a module (for example, a chip) in a communications device, the transceiver unit may be an input/output interface, an input/output circuit, an input/output pin, or the like, and may also be referred to as an interface, a communications interface, an interface circuit, or the like; and the processing unit may be a processor, a processing circuit, a logic circuit, or the like.

In another possible design, the communications apparatus includes a processor, and may further include a transceiver. The transceiver is configured to send and receive signals, and the processor executes program instructions to complete the method in any possible design or implementation of the first aspect or the second aspect. The communications apparatus may further include one or more memories. The memory may be configured to be coupled to the processor, and the memory may store a necessary computer program or instructions for implementing the functions in the first aspect or the second aspect. The processor may execute the computer program or instructions stored in the memory. When the computer program or instructions are executed, the communications apparatus is enabled to implement the method in any possible design or implementation of the first aspect or the second aspect.

In another possible design, the communications apparatus includes a processor. The processor may be configured to be coupled to a memory. The memory may store a necessary computer program or instructions for implementing the functions in the first aspect or the second aspect. The processor may execute the computer program or instructions stored in the memory. When the computer program or instructions are executed, the communications apparatus is enabled to implement the method in any possible design or implementation of the first aspect or the second aspect.

In another possible design, the communications apparatus includes a processor and an interface circuit. The processor is configured to communicate with another apparatus via the interface circuit and perform the method in any possible design or implementation of the first aspect or the second aspect.

It may be understood that in the third aspect, the processor may be implemented by hardware or software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and there may be one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fourth aspect, this application provides a chip system. The chip system includes a processor and may further include a memory, to implement the method in any one of the possible designs of the first aspect or the second aspect. The chip system may include a chip, or may include a chip and another discrete component.

According to a fifth aspect, this application further provides a computer-readable storage medium. The computer-readable storage medium stores computer-readable instructions. When the computer-readable instructions are run on a computer, the computer is enabled to perform the method in any one of the possible designs of the first aspect or the second aspect.

According to a sixth aspect, this application provides a computer program product containing instructions. When the computer program product is run on a computer, the computer is enabled to perform the method in the embodiments of the first aspect or the second aspect.

For technical effects that can be achieved in the second aspect to the sixth aspect, refer to descriptions of the technical effects that can be achieved in the corresponding possible design solutions in the first aspect. Details are not described herein again in this application.

## BRIEF DESCRIPTION OF DRAWINGS

FIG. 1 is a diagram of a network architecture according to an embodiment of this application;
FIG. 2 is a diagram of matrix decomposition of a codebook separately compressed in spatial domain and frequency domain;
FIG. 3 is a diagram of feedback of a codebook separately compressed in spatial domain and frequency domain;
FIG. 4 is a schematic flowchart of a CSI measurement and feedback scheme;
FIG. 5 is a diagram of a separate spatial-frequency domain representation and a joint spatial-frequency domain representation of a channel H;
FIG. 6 is a diagram of matrix decomposition of a codebook jointly compressed in both of a spatial domain and a frequency domain;
FIG. 7 is a diagram of feedback of a codebook jointly compressed in both of a spatial domain and a frequency domain;
FIG. 8 is a diagram of a common subspace;
FIG. 9 is a schematic flowchart of a CSI reporting method according to an embodiment of this application;
FIG. 10 is a diagram of a common subspace according to an embodiment of this application;
FIG. 11A is a diagram of another codebook feedback according to an embodiment of this application;
FIG. 11B is a diagram of another codebook feedback according to an embodiment of this application;
FIG. 12A is a diagram of another codebook feedback according to an embodiment of this application;
FIG. 12B is a diagram of another codebook feedback according to an embodiment of this application;
FIG. 13 is a diagram of multi-CSI differential feedback according to an embodiment of this application;
FIG. 14 is a diagram of multi-CSI differential feedback according to an embodiment of this application;
FIG. 15 is a diagram of a structure of a communications apparatus according to an embodiment of this application;
FIG. 16 is a diagram of a structure of a terminal device according to an embodiment of this application; and
FIG. 17 is a diagram of a structure of a network device according to an embodiment of this application.

## DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two. Therefore, for implementations of the apparatus and the method, reference may be made to each other, and repeated parts are not described again.

The technical solutions provided in embodiments of this application may be applied to a 5G system, or applied to a future communications system or another similar communications system. In addition, the technical solutions provided in embodiments of this application may be applied to a cellular link, a public land mobile network (public land mobile network, PLMN), a machine-to-machine (machine to machine, M2M) network, an internet of things (internet of things, IoT) network, or another network. The technical solutions may also be applied to a link between devices, for example, a device-to-device (device to device, D2D) link. The D2D link may also be referred to as a sidelink (sidelink), and the sidelink may also be referred to as a side-link, a secondary link, or the like. In embodiments of this application, all the foregoing terms refer to links established between devices of the same type, and have the same meaning. The link between the devices of the same type may be a link between terminal devices, a link between base stations, a link between relay nodes, or the like. This is not limited in embodiments of this application. For the link between the terminal devices, there is a D2D link defined in the 3rd generation partnership project (third generation partnership project, 3GPP) release (Release, Rel)-12/13, and there is also a V2X link between vehicles, between a vehicle and a mobile phone, or between a vehicle and any entity that is defined by 3GPP for the internet of vehicles, including Rel-14/15. A V2X link based on a new radio (new radio, NR) system in Rel-18 and a later release is further included.

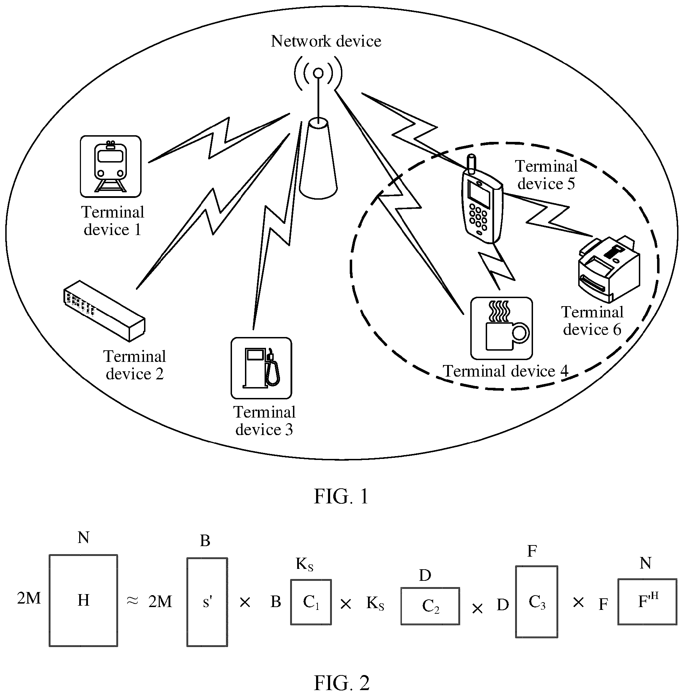

FIG. 1 shows an application scenario to which embodiments of this application are applied, or a network architecture to which embodiments of this application are applied. FIG. 1 includes a network device and six terminal devices. It should be understood that a quantity of terminal devices in FIG. 1 is merely an example, and there may be more or fewer terminal devices. The network architecture may further include another network device, for example, may further include a wireless relay device and a wireless backhaul device, which are not shown in FIG. 1. The network device is an access device by which the terminal device accesses a network wirelessly, and may be a base station. The network device corresponds to different devices in different systems. For example, the network device may correspond to an evolved NodeB (evolved Node B, eNB) in a 4th-generation mobile communications technology (4th-generation, 4G) system, and may correspond to a next-generation NodeB (next-generation Node B, gNB) in a 5G system. The six terminal devices may be cellular phones, smartphones, portable computers, handheld communications devices, handheld computing devices, satellite radio apparatuses, global positioning systems, personal digital assistants (personal digital assistants, PDAs), and/or any other suitable devices for communication in a wireless communications system, and may all be connected to the network device.

Embodiments of this application are applicable to uplink signal transmission, downlink signal transmission, and D2D signal transmission. For downlink signal transmission, a sending device is a network device, and a corresponding receiving device is a terminal device. For uplink signal transmission, a sending device is a terminal device, and a corresponding receiving device is a network device. For D2D signal transmission, a sending device is a terminal device, and a receiving device is also a terminal device. For example, three terminal devices shown in a dashed-line area in FIG. 1 are applicable to D2D signal transmission. A signal transmission direction is not limited in embodiments of this application.

The terminal device may be a wireless terminal device that can receive scheduling and indication information of the network device. The wireless terminal device may be a device that provides voice and/or data connectivity for a user, a handheld device having a wireless connection function, or another processing device connected to a wireless modem. The wireless terminal device may communicate with one or more core networks or the internet via a radio access network (for example, radio access network, RAN). The wireless terminal device may be a mobile terminal device, such as a mobile phone (or referred to as a "cellular" phone or a cell phone (mobile phone)), a computer, and a data card, for example, may be a portable, pocket-sized, handheld, computer built-in, or vehicle-mounted mobile apparatus that exchanges voice and/or data with the radio access network. For example, the wireless terminal device may be a personal communication service (personal communication service, PCS) telephone, a cordless telephone, a session initiation protocol (session initiation protocol, SIP) telephone, a wireless local loop (wireless local loop, WLL) station, a PDA, a tablet computer (Pad), and a computer having a wireless transceiver function. The wireless terminal device may also be referred to as a system, a subscriber unit (subscriber unit), a subscriber station (subscriber station), a mobile station (mobile station), a mobile station (mobile station, MS), a remote station (remote station), an access point (access point, AP), a remote terminal (remote terminal) device, an access terminal (access terminal) device, a user terminal (user terminal) device, a user agent (user agent), a subscriber station (subscriber station, SS), customer premises equipment (customer premises equipment, CPE), a terminal (terminal), user equipment (user equipment, UE), a mobile terminal (mobile terminal, MT), or the like. Alternatively, the wireless terminal device may be a wearable device, or a terminal device in a next-generation communications system, for example, a terminal device in a 5G network, a terminal device in a future evolved public land mobile network (public land mobile network, PLMN) network, or a terminal device in an NR communications system.

The network device is an entity, such as a TRP or a gNB, for transmitting or receiving a signal on a network side. The network device may be a device for communication with a mobile device. The network device may be an AP in a wireless local area network (wireless local area networks, WLAN) or a base transceiver station (base transceiver station, BTS) in a global system for mobile communications (global system for mobile communications, GSM) or code division multiple access (code division multiple access, CDMA), or may be a NodeB (NodeB, NB) in a wideband code division multiple access (wideband code division multiple access, WCDMA), or may be an evolved NodeB (evolved Node B, eNB or eNodeB) in long-term evolution (long-term evolution, LTE), or a relay station or an access point, or a vehicle-mounted device, a wearable device, and a network device in a future 5G network or a network device in a future evolved PLMN, or a gNodeB/gNB in an NR system, or the like. In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing non-real-time protocols and services, for example, implementing radio resource control (radio resource control, RRC), a service data adaptation protocol (service data adaptation protocol, SDAP) function, and a function of a packet data convergence protocol (packet data convergence protocol, PDCP) layer. The DU is responsible for processing physical layer protocols and real-time services, for example, implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. In addition, in embodiments of this application, the network device provides a service for a cell, and the terminal device communicates with the network device by using a transmission resource (for example, a frequency domain resource, or referred to as a spectrum resource) used by the cell. The cell may be a cell corresponding to the network device (for example, a base station). The cell may belong to a macro base station, or may belong to a base station corresponding to a small cell (small cell). The small cell herein may include: a metro cell (Metro cell), a micro cell (Micro cell), a pico cell (Pico cell), a femto cell (Femto cell), and the like. These small cells have characteristics of a small coverage area and low transmit power, and are suitable to provide a high-rate data transmission service. In addition, in another possible case, the network device may be another apparatus providing a wireless communication function for the terminal device. A specific technology and a specific device form that are used by the network device are not limited in embodiments of this application. For ease of description, in embodiments of this application, an apparatus that provides a wireless communications function for a terminal device is referred to as a network device.

When sending data to the terminal device, the network device needs to perform modulation and coding and signal precoding based on CSI fed back by the terminal device. For ease of understanding embodiments of this application, the following first briefly describes terms in embodiments of this application.

It should be noted that, in embodiments of this application, transformation of a matrix and a vector is involved in a plurality of places. For ease of description, uniform description is provided herein. The superscript $T$ represents transpose; for example, $A^T$ represents the transpose of a matrix (or vector) $A$. The superscript $H$ represents conjugate transpose; for example, $A^H$ represents the conjugate transpose of a matrix (or vector) $A$. The superscript * represents conjugate; for example, $A^*$ represents the conjugate of a matrix (or vector) $A$. For brevity, description of same or similar cases is omitted below.

(1) Precoding technology: When channel state information is known, a sending device may process a to-be-sent signal by using a precoding matrix that matches a channel resource, so that the precoded to-be-sent signal is adapted to a channel, and received signal quality (for example, a signal-to-interference-plus-noise ratio (signal-to-interference-plus-noise ratio, SINR)) of a receiving device is improved, thereby reducing complexity of eliminating inter-channel influence by the receiving device. By using the precoding technology, the sending device can send a plurality of parallel data streams that occupy the same time-frequency resources to one receiving device, that is, single-user multiple-input multiple-output (single-user multiple-input multiple-output, SU-MIMO) is implemented; or the sending device and a plurality of receiving devices can transmit data on the same time-frequency resources, that is, multi-user multiple-input multiple-output (multiple-user multiple-input multiple-output, MU-MIMO) is implemented. It should be noted that the related description of the precoding technology is merely an example for ease of understanding, and not intended to limit the scope of protection of embodiments of this application. In a specific implementation process, the sending device may alternatively perform precoding in another manner. For example, when no channel state information is known, precoding is performed by using a preset precoding matrix or in a weighted processing manner. For brevity, specific content thereof is not described in this specification.

(2) Precoding matrix indicator (precoding matrix indicator, PMI): It may be used to indicate a precoding matrix, and the sending device restores the precoding matrix based on the PMI. Generally, the receiving device determines a precoding matrix through channel measurement, and reports, to the sending device, a PMI corresponding to the precoding matrix. The sending device determines, based on the received PMI, precoding for transmitting data to the receiving device. The precoding matrix may be a precoding matrix determined by the receiving device based on a channel matrix of frequency domain units. The frequency domain unit, that is, the unit of frequency domain resources, may represent different frequency domain resource granularities. The frequency domain unit may include but is not limited to a subband (subband), a resource block (resource block, RB), a subcarrier, a resource block group (resource block group, RBG), a precoding resource block group (precoding resource block group, PRG), or the like. One or more parts of the subband may consist of one or more RBs and RBGs. For example, one RB corresponds to 12 contiguous subcarriers in frequency domain, and one RBG corresponds to {2, 4, 8, 16} RBs in frequency domain. The PRG is a precoding granularity, which is used to indicate how many RBs can use the same precoding. The channel matrix may be determined by the receiving device in a manner such as channel estimation or based on reciprocity of channels. It should be understood that a specific method for determining the precoding matrix by the receiving device is not limited to the foregoing descriptions. For a specific implementation, refer to the conventional technology. For brevity, implementations are not enumerated herein.

For example, the precoding matrix may be obtained by performing singular value decomposition (singular value decomposition, SVD) on a channel matrix or a covariance matrix of a channel matrix, or may be obtained by performing eigenvalue decomposition (eigenvalue decomposition, EVD) on a covariance matrix of a channel matrix. It should be understood that the foregoing listed manners of determining the precoding matrix are merely examples, and should not constitute any limitation on this application. For a manner of determining the precoding matrix, refer to the conventional technology. For brevity, the precoding matrix is not listed one by one herein.

(3) Precoding vector: A precoding matrix may consist of one or more precoding vectors. When there is one spatial layer and also one polarization direction of a transmit antenna, a precoding matrix is a precoding vector. When there are a plurality of spatial layers and one polarization direction of a transmit antenna, a precoding vector may be a component of a precoding matrix in one spatial layer. When there is one spatial layer and a plurality of polarization directions of a transmit antenna, a precoding vector may be a component of a precoding matrix in one polarization direction. When there are a plurality of spatial layers and also a plurality of polarization directions of a transmit antenna, a precoding vector may be a component of a precoding matrix in one spatial layer and one polarization direction.

It should be understood that the precoding vector may alternatively be determined by a vector in the precoding matrix, for example, obtained by performing mathematical transformation on the vector in the precoding matrix. A mathematical transformation relationship between the precoding matrix and the precoding vector is not limited in this application.

(4) Antenna port: It is also referred to as a port, and may be understood as a transmit antenna identified by a receiving device, or a transmit antenna that may be distinguished spatially. One antenna port may be preconfigured for one virtual antenna, and one virtual antenna may be one physical antenna or a weighted combination of a plurality of physical antennas. One antenna port may correspond to one reference signal. Therefore, one antenna port may be referred to as a port of one reference signal, for example, a CSI-RS port or an SRS port. In addition, one antenna port may be referred to as one transceiver unit (transceiver unit, TxRU).

(5) Spatial domain vector (spatial domain vector): It may also be referred to as a beam vector, a spatial domain beam basis vector (spatial beam basis vector), or a spatial domain basis vector. A length of the spatial domain vector may be a quantity $M$ of transmit antenna ports in one polarization direction, where $M$ is a positive integer greater than 1. For example, if the spatial domain vector is a column vector or a row vector of length $M$, $M$ column vectors or row vectors correspond to $M$ transmit antenna ports, respectively. This is not limited in this application. Elements in the spatial domain vector may represent weights of antenna ports. Signals of the antenna ports are linearly superposed based on the weights of the antenna ports represented by the elements in the spatial domain vector, so that an area with strong signals can be formed spatially in a specific direction or some directions.

Optionally, the spatial domain vector may be determined based on a DFT vector. In other words, the spatial domain vector may be a DFT vector. The spatial domain vector may be, for example, a DFT vector defined in a type II (type II) codebook in the 3rd generation partnership project (3rd generation partnership project, 3GPP) technical specification TS 38.214 release 15 (release 15, R15).

(6) Spatial domain vector set: It may include a plurality of spatial domain vectors of different lengths, to correspond to different quantities of antenna ports, or may include a plurality of spatial domain vectors of the same length, to correspond to different beams for a specific quantity of antenna ports. In embodiments of this application, the length of the spatial domain vector is $M$. Therefore, lengths of spatial domain vectors in a spatial domain vector set to which spatial domain vectors reported by the receiving device belongs are all $M$.

The plurality of spatial domain vectors included in the spatial domain vector set may be orthogonal or non-orthogonal to each other. Each spatial domain vector in the spatial domain vector set may be taken from a two-dimensional (two-dimensional, 2D)-DFT matrix. 2D may represent two different directions, for example, a horizontal direction and a vertical direction. If quantities of antenna ports in the horizontal direction and the vertical direction are respectively M1 and M2, $M=M_1 \times M_2$.

(7) Frequency domain vector (frequency domain vector): It may also be referred to as a frequency domain basis vector, which is a vector used to represent a change rule of a channel in frequency domain. One frequency domain vector may represent one change rule. When a signal is transmitted on a radio channel, the signal may arrive at a receive antenna through a plurality of paths from a transmit antenna. Frequency selective fading caused by a multipath delay is a change of a frequency domain channel. Therefore, change rules of channels in frequency domain that are caused by delays on different transmission paths may be represented by different frequency domain vectors.

A length of the frequency domain vector may be determined by a quantity of to-be-reported frequency domain units that is configured on the network side in a reporting bandwidth, or may be a value predefined in a protocol. The length of the frequency domain vector is not limited in this application. The reporting bandwidth may be, for example, indicated by a CSI reporting bandwidth (CSI-ReportingBand) carried in a CSI reporting configuration in higher layer signaling (such as an RRC message).

The length of the frequency domain vector may be denoted as $N$, where $N$ is a positive integer greater than 1. The frequency domain vector may be, for example, a column vector or a row vector whose length includes $N$. This is not limited in this application.

(8) Frequency domain vector set: It may include a plurality of frequency domain vectors of different lengths, or may include a plurality of frequency domain vectors of the same length. In embodiments of this application, the length of the frequency domain vector is $N$. Therefore, lengths of frequency domain vectors in a frequency domain vector set to which frequency domain vectors reported by the receiving device belongs are all $N$. The plurality of frequency domain vectors included in the frequency domain vector set may be orthogonal or non-orthogonal to each other. Each frequency domain vector in the frequency domain vector set may be taken from a DFT matrix or an IDFT matrix (that is, a conjugate transpose matrix of the DFT matrix).

(9) Separate compression in spatial domain and frequency domain: It refers to quantization using the sparsity of a channel in spatial domain and the sparsity of a channel in frequency domain, which reduces a quantity of weighting coefficients that need to be reported, thereby implementing compression of a channel matrix.

For ease of understanding, FIG. 2 is a diagram of decomposition of a channel matrix $H \in \mathbb{C}^{2M \times N}$. Herein, it is assumed that a sending device is a network device, a receiving device is a terminal device, and a transmit antenna of the network device is a dual-polarized antenna. In other words, a quantity of rows of the channel matrix $H$ is 2M (where $M$ is a quantity of transmit antenna ports in one polarization direction). If the network device is a single-polarized antenna, that is, a quantity of rows of the channel matrix $H$ is $M$, then $H \in \mathbb{C}^{M \times N}$. The dual-polarized antenna is used as an example herein. However, in actual application, a polarization type of the antenna is not limited. For the single-polarized antenna, refer to the description of the dual-polarized antenna for understanding. As shown in FIG. 2, the channel matrix $H$ may satisfy formula (1):

$$H \approx S'C_1C_2C_3F'^H \quad (1)$$

In formula (1), $S' \in \mathbb{C}^{2M \times B}$; $C_1 \in \mathbb{C}^{B \times K_S}$; $C_2 \in \mathbb{C}^{K_S \times D}$; $C_3 \in \mathbb{C}^{D \times F}$; and $F' \in \mathbb{C}^{N \times F}$. $S'$ is a spatial domain basis, which is a matrix formed by $B$ spatial domain vectors; $F'$ is a frequency domain basis, which is a matrix formed by $F$ frequency domain vectors; $C_1$ is a superposition coefficient matrix 1, which is used to represent a coefficient matrix formed by a plurality of groups of spatial domain vector coefficients, or represent a coefficient matrix formed by weighting coefficients corresponding to each of the $B$ spatial domain vectors; $C_2$ is a superposition coefficient matrix 2, which is used to represent a coefficient matrix formed by weighting coefficients corresponding to a group of spatial-frequency vectors formed by each of the $B$ spatial domain vectors and each of the $F$ frequency domain vectors, or a coefficient matrix formed by weighting coefficients corresponding to each of the $B$ spatial domain vectors and each of the $F$ frequency domain vectors; $C_3$ is a superposition coefficient matrix 3, which is used to represent a matrix formed by a plurality of groups of frequency domain vector coefficients, or represent a coefficient matrix formed by weighting coefficients corresponding to each of the $F$ frequency domain vectors. $M$ is a quantity of transmit antenna ports in one polarization direction, and $B$ is a quantity of spatial domain vectors determined by the network device or the terminal device. $K_S$ represents a quantity of weighting coefficients corresponding to each spatial domain vector. $D$ represents a quantity of weighting coefficients corresponding to each frequency domain vector. $F$ is a quantity of frequency domain vectors determined by the network device or the terminal device. $N$ is a quantity of frequency domain units, that is, a length of a frequency domain vector, and $\mathbb{C}$ represents a complex set in this specification. It can be learned that $H$ is a complex matrix with 2$M$ rows and $N$ columns. It should be understood that a basis is a set including one or more vectors (basis vectors). For example, a spatial domain basis includes one or more spatial domain vectors, and a frequency domain basis includes one or more frequency domain vectors.

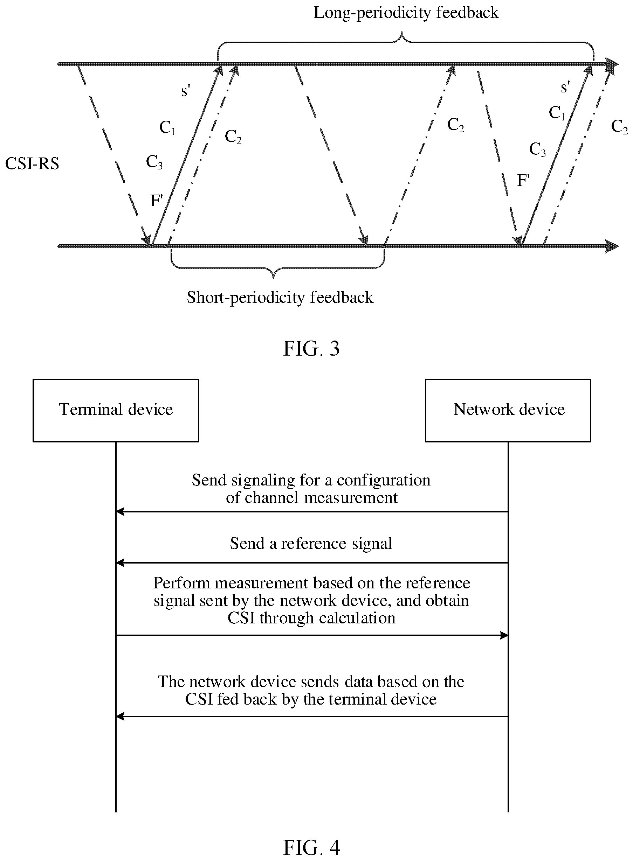

For example, the terminal device calculates a full-bandwidth superposition coefficient matrix $C$ corresponding to a downlink channel, where $C = C_1C_2C_3$. The terminal device may divide the superposition coefficient matrix into a plurality of parts. Some of the superposition coefficients are reported to the network device according to a long periodicity (that is, a first periodicity), and some of the superposition coefficients are reported to the network device according to a short periodicity (that is, a second periodicity), to reduce air interface feedback overheads. It should be understood that a duration of the first periodicity is greater than that of the second periodicity. For example, the duration of the first periodicity is a plurality of integer multiples of that of the second periodicity. It should be noted that the short periodicity is measured based on one reference signal, and the long periodicity is measured based on a plurality of delivered reference signals. Specifically, the reference signals may be counted starting from the latest long-periodicity reporting of the superposition coefficients to the next long-periodicity reporting of the superposition coefficients. This is not specifically limited in this application. In addition, it should be further noted that the reference signal may be a CSI-RS, an SSB, a DMRS, or the like delivered by a base station side. This is not specifically limited in this application. In addition, the reference signal is described below by using a CSI-RS as an example. In addition, the long-periodicity feedback and the short-periodicity feedback are described below by using CSI-RS measurement as an example. The terminal device may report $C_1$ and $C_3$ to the network device according to the long periodicity, and report $C_2$ to the network device according to the short periodicity or aperiodically (that is, once or aperiodically multiple times), to reconstruct the downlink channel. In this way, the terminal device does not need to report all of $C_1$, $C_2$, and $C_3$ each time, thereby reducing air interface feedback overheads. As shown in FIG. 3, after measuring the CSI-RS, the terminal device may feed back $S'$, $C_1$, $F'$, and $C_3$ according to the long periodicity, and feed back $C_2$ according to the short periodicity.

Accordingly, a codebook used by the terminal device to feed back information about the precoding matrix may satisfy formula (2):

$$W = W_S C_1 C_2 C_3 W_f^H \ (2)$$

In formula (2), $W \in \mathbb{C}^{2M \times N}$; $W_S \in \mathbb{C}^{2M \times B}$; $C_1 \in \mathbb{C}^{B \times K_S}$; $C_2 \in \mathbb{C}^{K_S \times D}$; $C_3 \in \mathbb{C}^{D \times F}$; and $W_f \in \mathbb{C}^{N \times F}$. Refer to the foregoing formula (1) for meanings of the letters for the matrix dimensions in formula (2), and details are not described herein again.

It should be noted that $R_S = \mathbb{E}\{HH^H\} = U_S \Lambda_S U_S^H$, $U_S = W_S C_1$, or $U_S \approx W_S C_1$, where $R_S$ is a spatial domain statistical covariance matrix of $H$, $U_S$ is a matrix formed by eigenvectors of $R_S$, eigenvalues corresponding to each column of $U_S$ are elements on a diagonal of a diagonal matrix $\Lambda_S$, and the elements on the diagonal of $\Lambda_S$ are arranged in descending order; $R_S \in \mathbb{C}^{2M \times 2M}$; $U_S \in \mathbb{C}^{2M \times K_S}$; and $\Lambda_S \in \mathbb{C}^{K_S \times K_S}$. $\mathbb{E}$ represents calculating an expectation for a random number/matrix. $R_F = \mathbb{E}\{H^H H\} = U_F \Lambda_F U_F^H$, $U_F = W_f C_3^H$, or $U_F \approx W_f C_3^H$, where $R_F$ is a frequency domain statistical covariance matrix of $H$, $U_F$ is a matrix formed by eigenvectors of $R_F$, eigenvalues corresponding to each column of $U_F$ are elements on a diagonal of a diagonal matrix $\Lambda_F$, and the elements on the diagonal of $\Lambda_F$ are arranged in descending order; $R_F \in \mathbb{C}^{N \times N}$; $U_F \in \mathbb{C}^{N \times D}$; and $\Lambda_F \in \mathbb{C}^{D \times D}$. $W_S$ is a spatial domain basis of the downlink channel determined by the network device or the terminal device, and $W_f$ is a frequency domain basis of the downlink channel determined by the network device or the terminal device. The meanings of $C_1$, $C_2$, $C_3$ are the same as those of the foregoing formula (1), and details are not described herein again. That is, the terminal device separately corrects the spatial domain basis and the frequency domain basis. A data amount that originally needs to be fed back is the dimensions of $W$, that is, $M \times N$. Because the projection of a spatial-frequency channel on the basis has sparsity, only $C_1$, $C_2$, $C_3$ and indexes of the basis need to be fed back now, and the feedback data amount is reduced, thereby achieving the compression effect.

(10) Channel state information (CSI) report: It is information that is reported by a receiving device to a sending device and that is used to describe channel attributes of a communications link in a wireless communications system. The CSI report may include, for example, but is not limited to, a precoding matrix indicator (PMI), a rank indicator (rank indicator, RI), a channel quality indicator (channel quality indicator, CQI), a channel state information reference signal (channel state information reference signal), a CSI-RS resource indicator (CSI-RS resource indicator, CRI), and a layer indicator (layer indicator, LI). It should be understood that the foregoing enumerated specific content of the CSI is merely example description, and should not constitute any limitation on embodiments of this application. The CSI may include one or more of the foregoing enumerated items, or may include other information used to represent the CSI than the foregoing enumerated items. This is not limited in embodiments of this application.

In this specification, unless otherwise specified, "/" represents "or". For example, A/B may represent A or B. The term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. The terms such as "first" and "second" do not limit a quantity and an execution sequence, and the terms such as "first" and "second" do not indicate a definite difference.

It should be noted that in this specification, the term such as "example" or "for example" represents giving an example, an illustration, or a description. Any embodiment or design scheme described as an "example" or "for example" in this application should not be explained as being more preferred or having more advantages than another embodiment or design scheme. To be precise, the use of the term such as "example" or "for example" is intended to present a relative concept in a specific manner.

In a frequency division duplex (frequency division duplex, FDD) system, a network device needs to rely on a terminal device to feed back CSI of a downlink channel to the network device. FIG. 4 is a schematic flowchart of CSI measurement by a terminal device. The network device first sends, to the terminal device, signaling for a configuration of channel measurement, to notify the terminal device of a time and a behavior of performing channel measurement, and then the network device sends a reference signal to the terminal device for channel measurement. The reference signal may be a CSI-RS, an SSB, a DMRS, or the like. This is not specifically limited in this application. The terminal device performs measurement based on the reference signal sent by the network device, and obtains final CSI through calculation. Then, the network device sends data based on the CSI fed back by the terminal device. For example, the network device determines, based on an RI included in the CSI fed back by the terminal device, a quantity of streams for transmitting data to the terminal device; the network device determines, based on a CQI included in the CSI fed back by the terminal device, a modulation order and a channel coding bit rate for transmitting data to the terminal device; and the network device determines, based on a PMI included in the CSI fed back by the terminal device, precoding applied to the data transmitted to the terminal device. In actual wireless communication, conditions of a signal are time-varying due to an external environment and mobility of the terminal device. Therefore, the network device usually periodically sends the reference signal, and the terminal device may periodically report the CSI.

In the related art, the terminal device obtains CSI based on a codebook separately compressed in spatial domain and frequency domain, and feeds back the CSI to the network device. Further, the terminal device may perform quantization by using sparsity of a channel in a joint spatial-frequency domain, to further reduce redundancy in comparison with separate quantization in spatial domain and frequency domain, thereby achieving a further compression objective. The downlink channel is used as an example. The channel matrix $H$ may be represented by formula (3), that is, $H$ satisfies formula (3):

$$H = SCF^H \quad (3)$$

In formula (3), $H \in \mathbb{C}^{2M \times N}$, $S \in \mathbb{C}^{2M \times L}$, $F \in \mathbb{C}^{N \times L}$, and $C \in \mathbb{C}^{L \times L}$, that is, $C$ is an $L \times L$ diagonal matrix, where $M$ is a quantity of transmit antenna ports in one polarization direction, $L$ is a quantity of channel multipaths, $N$ is a quantity of frequency domain units, that is, a length of a frequency domain vector, $S$ is a spatial domain basis, and $F$ is a frequency domain basis.

Assuming that $H$ in formula (3) is expanded by column, that is, a channel represented by a spatial domain-frequency domain matrix is represented by a spatial-frequency domain column vector, there is:

$$h = \begin{bmatrix} H(:,1) \\ H(:,2) \\ \dots \\ H(:,N) \end{bmatrix},$$

where $(:, i)$ represents an $i^{th}$ column of the matrix, and $i=1, ..., N$.

$$h = (F^* \odot S)c \in \mathbb{C}^{2MN \times 1} \quad (4)$$

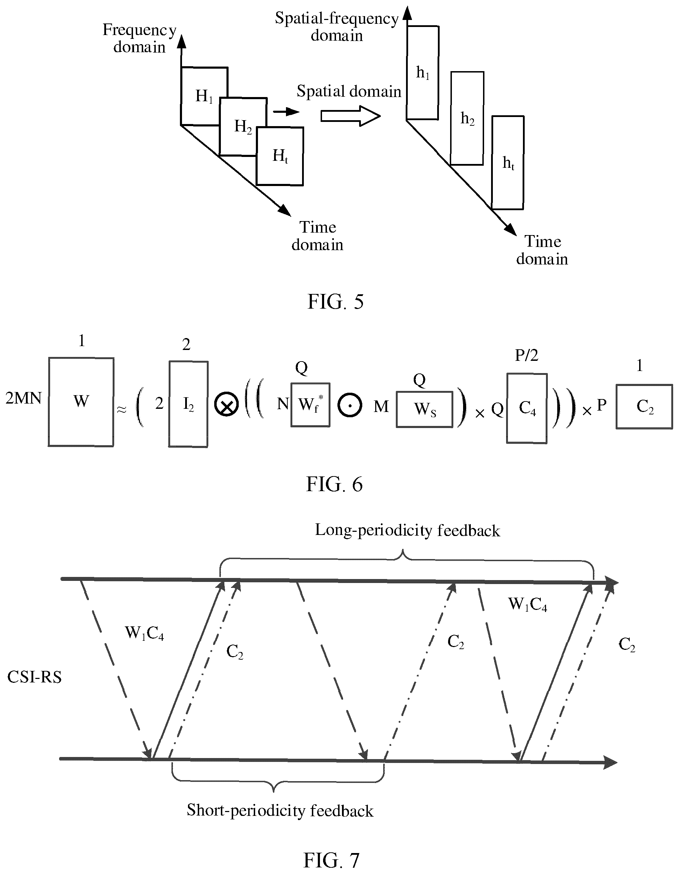

Refer to FIG. 5. FIG. 5 is a diagram of representing a channel matrix $H$ by a column vector, and $h$ may also be considered as a representation of the channel in a joint spatial-frequency domain (a joint domain of a spatial domain and a frequency domain). For ease of description, in the specification, $h$ represents a spatial-frequency domain channel. In formula (4), $c = diag(C)$, $diag(C)$ represents a column vector $(F^* \odot S) \in \mathbb{C}^{2MN \times L}$ formed by diagonal elements of a matrix $C$, and $\odot$ represents a *Khatri-Rao* product. For example, $A \odot B = [a_1 \otimes b_1 ... a_n \otimes b_n]$, where $a_i$ is an $i^{th}$ column of $A$, $\otimes$ is a Kronecker product (Kronecker product), $b_i$ is an $i^{th}$ column of $B$, and $i$ is an integer greater than 0. An $i^{th}$ ($i=1, ..., N$) column of the matrix $F^* \odot S$ may satisfy formula (5):

$$(\boldsymbol{F}^* \odot \boldsymbol{S})(:, i) = (\boldsymbol{F}(:, i))^* \otimes \boldsymbol{S}(:, i) \in \mathbb{C}^{2MN \times 1} \quad (5)$$

where $(:, i)$ represents an $i^{th}$ column of the matrix.

For $\boldsymbol{h}$ represented by the column vector, its statistical covariance matrix satisfies formula (6):

$$\boldsymbol{R}_h = \mathbb{E}\{\boldsymbol{h}\boldsymbol{h}^H\} = \boldsymbol{U}\boldsymbol{\Lambda}\boldsymbol{U}^H \quad (6)$$

where $\boldsymbol{R}_h \in \mathbb{C}^{2MN \times 2MN}$, $\mathbb{E}$ represents calculating an expectation for a random number/matrix, $\boldsymbol{U}$ is a matrix formed by eigenvectors of the covariance matrix $\boldsymbol{R}_h$, an $i^{th}$ column of $\boldsymbol{U}$ is an $i^{th}$ eigenvector of $\boldsymbol{R}_h$, an eigenvalue corresponding to the eigenvector is an $i^{th}$ element on a diagonal of a diagonal matrix $\boldsymbol{\Lambda}$, eigenvalues corresponding to each column of $\boldsymbol{U}$ are elements on the diagonal of the diagonal matrix $\boldsymbol{\Lambda}$, and the elements on the diagonal of $\boldsymbol{\Lambda}$ are arranged in descending order. An inter-polarization average covariance matrix satisfies formula (7):

$$\overline{\boldsymbol{R}}_h = \mathbb{E}\left\{\frac{\boldsymbol{h}_+\boldsymbol{h}_+^H + \boldsymbol{h}_-\boldsymbol{h}_-^H}{2}\right\} = \overline{\boldsymbol{U}}\,\overline{\boldsymbol{\Lambda}}\,\overline{\boldsymbol{U}}^H \quad (7)$$

where $\boldsymbol{h}_+$ is a channel corresponding to positive polarization, $\boldsymbol{h}_-$ is a channel corresponding to negative polarization, $\overline{\boldsymbol{U}}$ is a matrix formed by eigenvectors of the average covariance matrix $\overline{\boldsymbol{R}}_h \in \mathbb{C}^{MN \times MN}$, an $i^{th}$ column of $\overline{\boldsymbol{U}}$ is an $i^{th}$ eigenvector of $\overline{\boldsymbol{R}}_h$, an eigenvalue corresponding to the eigenvector is an $i^{th}$ element on a diagonal of a diagonal matrix $\overline{\boldsymbol{\Lambda}}$, eigenvalues corresponding to each column of $\overline{\boldsymbol{U}}$ are elements on the diagonal of the diagonal matrix $\overline{\boldsymbol{\Lambda}}$, and the elements on the diagonal of $\overline{\boldsymbol{\Lambda}}$ are arranged in descending order. Then, an instantaneous channel may satisfy formula (8):

$$\boldsymbol{h} = \boldsymbol{U}\widehat{\boldsymbol{h}} \quad (8)$$

where $\hat{h}$ is a projection of $\boldsymbol{h}$ on $\boldsymbol{U}$, $\hat{\boldsymbol{h}}_p = \boldsymbol{U}_p\boldsymbol{h}$, which is a projection of $\boldsymbol{h}$ on $\boldsymbol{U}_p$, and $\boldsymbol{U}_p \in \mathbb{C}^{2MN \times P} = \boldsymbol{U}(:, 1:P)$, which represents that $\boldsymbol{U}_p$ is a matrix formed by selecting columns 1 to P from $\boldsymbol{U}$. Alternatively, $\boldsymbol{h} \approx \boldsymbol{U}_p\hat{\boldsymbol{h}}_p$, that is, $\boldsymbol{U}_p\hat{\boldsymbol{h}}_p$ represents an approximation of $\boldsymbol{h}$.

A projection of the instantaneous channel for $\overline{\boldsymbol{U}}$ may satisfy formula (9):

$$\widehat{\boldsymbol{h}}_p \approx \left(\boldsymbol{I}_2 \otimes \overline{\boldsymbol{U}}_p\right)^H \boldsymbol{h} \quad (9)$$

where $\overline{\boldsymbol{U}}_p \in \mathbb{C}^{MN \times \frac{P}{2}}$ is a matrix formed by the first $\frac{P}{2}$ columns of $\overline{\boldsymbol{U}}$, $\otimes$ represents a Kronecker product, and $\boldsymbol{I}_2$ is an identity matrix of dimensions 2*2.

It should be understood that a channel has sparse characteristics in an angular domain (that is, a spatial domain) and a delay domain (that is, a frequency domain), that is, in $\hat{h}$, only some elements are non-zero or have relatively large values, and values of the other elements are zero or negligibly small.

An angular delay changes slowly, that is, within a period of time, it may be considered that $\boldsymbol{U}$ basically remains unchanged. However, the projection $\hat{h}$ of the instantaneous channel changes rapidly, and $\hat{h}$ has different values at different moments. For example, the projection of the instantaneous channel is $\hat{h}_1$ at a moment 1, the projection of the instantaneous channel is $\hat{h}_2$, at a moment 2, and the projection of the instantaneous channel is $\hat{h}_t$ at a moment $t$. In the design of a CSI feedback scheme, $\overline{\boldsymbol{U}}_p$ may be quantized and fed back in a long periodicity, and $\hat{h}_p$ may be quantized and fed back in a short periodicity or aperiodically (that is, once or aperiodically multiple times). For example, a CSI compression and reporting process may be divided into the following operations:

S1: The terminal device obtains a statistical spatial-frequency joint covariance matrix for a downlink channel, and performs inter-polarization averaging to obtain $\overline{\boldsymbol{R}}_h$; performs SVD or eigen decomposition on $\overline{\boldsymbol{R}}_h$ to obtain a matrix $\overline{\boldsymbol{U}}$ formed by eigenvectors; and truncates the matrix $\overline{\boldsymbol{U}}$, and selects $\frac{P}{2}$ columns corresponding to $\frac{P}{2}$ eigenvalues with large energy to form a matrix $\overline{\boldsymbol{U}}_p$, where $\overline{\boldsymbol{U}}_p$ includes most of the energy of the channel (a value of $P$ may be determined by the UE, or may be selected by the terminal device from an optional range configured by the network device, or may be directly configured by the network device for the terminal device, or may be predefined in a protocol).

S2: The terminal device uses an agreed codebook, where the agreed codebook may be a codebook agreed upon in advance by the terminal device and the network device, for example, a DFT codebook or an oversampled DFT codebook. This is not specifically limited herein. For example, the oversampled DFT codebook is used to approximate a matrix $\overline{U}_p$ formed by statistical eigenvectors, that is, determine $W_f$, $W_s$, and $C_4$, so that

$$\overline{U}_p \approx \left(W_f^* \otimes W_s\right)C_4 = W_1 C_4 \qquad \text{or} \qquad \overline{U}_p \approx \left(W_f^* \odot W_s\right)C_4 = W_1 C_4 \qquad \text{. When}$$

$$\overline{U}_p \approx \left(W_f^* \otimes W_s\right)C_4 = W_1 C_4, \ \overline{U}_p \in \mathbb{C}^{MN \times \frac{P}{2}}, \ W_S \in \mathbb{C}^{M \times B}, \ W_f \in \mathbb{C}^{N \times F}, \ C_4 \in \mathbb{C}^{BF \times \frac{P}{2}}, \text{ and}$$

$$W_1 = \left(W_f^* \otimes W_s\right)$$, which may represent a spatial-frequency joint basis (that is, the basis may represent common characteristics in the spatial domain and the frequency domain). For the meanings of B and F, refer to the foregoing formula (1). Details are not described herein again. When

$$\overline{U}_p \approx \left(W_f^* \odot W_s\right)C_4 = W_1 C_4, \ \overline{U}_p \in \mathbb{C}^{MN \times \frac{P}{2}}, \ W_S \in \mathbb{C}^{M \times Q}, \ W_f \in \mathbb{C}^{N \times Q}, \ C_4 \in \mathbb{C}^{Q \times \frac{P}{2}}, \text{ and}$$

$$\left(W_f^* \odot W_s\right)$$ may also represent a spatial-frequency joint basis, where Q is a preset parameter, which is used to indicate a quantity of spatial domain/frequency domain vectors selected by the terminal device. In actual application, a representation form of the spatial-frequency joint basis is not limited.

$C_4$ **is** a projection of $\overline{U}_p$ on the quantization matrix $W_1$, that is, $W_1$ is corrected to a statistical characteristic matrix $\overline{U}_p$ (the matrix dimensions designed in this step are shown in FIG. 6). $W_f$, $W_S$, and $C_4$ that **are** obtained by the terminal device through calculation in this step are reported to the network device in a long periodicity.

S3: The terminal device calculates, based on the instantaneous channel $h$ and $W_1 C_4$ that is obtained in S2, a codebook $C_2$ that needs to be fed back, where $C_2$ may be a projection of the instantaneous channel $h$ on $W_1 C_4$, that is,

$$C_2 = \left(I_2 \otimes (W_1 C_4)\right)^H h \in \mathbb{C}^{P \times 1}$$, or may be obtained through calculation in another form (for example, when columns of $W_1 C_4$ are not orthogonal, $W_1 C_4$ needs to be orthogonalized). $C_2$ is reported to the network device in a short periodicity or aperiodically (that is, once or aperiodically multiple times), to reconstruct the downlink channel.

The foregoing technical solution is mapped to a codebook form, which is shown in the following formula (10):

$$W = \left(I_2 \otimes \left(\left(W_f^* \odot W_s\right)C_4\right)\right)C_2 \quad (10)$$

In formula (10), $\odot$ represents a Khatri-Rao product, $\left(W_f^* \odot W_s\right) \in \mathbb{C}^{MN \times Q}$, $C_4 \in \mathbb{C}^{Q \times \frac{P}{2}}$, and $C_2 \in \mathbb{C}^{P \times 1}$.

The foregoing formula corresponds to a decomposition diagram in FIG. 6. Because $W_f$, $W_S$, and $C_1$ are used to approximate $\overline{U}_p$ through quantization, there is $2Q \geq P$. $W_f^* \odot W_s$ is a group of bases, for example, oversampled DFT bases, that are obtained by quantizing the spatial-frequency joint basis. Because joint compression is performed in the spatial-frequency domain (where dimensions of $\hat{h}_p$ are P × 1, and dimensions of data that needs to be fed back are less than dimensions ($2MN \times 1$) of $h$, the sparsity of projection coefficients of the channel $H$ on the spatial-frequency joint bases is enhanced, and CSI feedback overheads can be reduced.

Based on the foregoing solution, the terminal device may perform feedback with reference to FIG. 7. After the network device sends the CSI-RS, the terminal device feeds back $W_1 C_4$ in a long periodicity and feeds back $C_2$ in a short periodicity. The downlink spatial-frequency joint channel statistical eigenvector $\overline{U}_p$ is quantized after being projected using $W_1$, and $W_1$ includes a group of pre-agreed basis vectors, such as oversampled/non-oversampled DFT basis vectors.

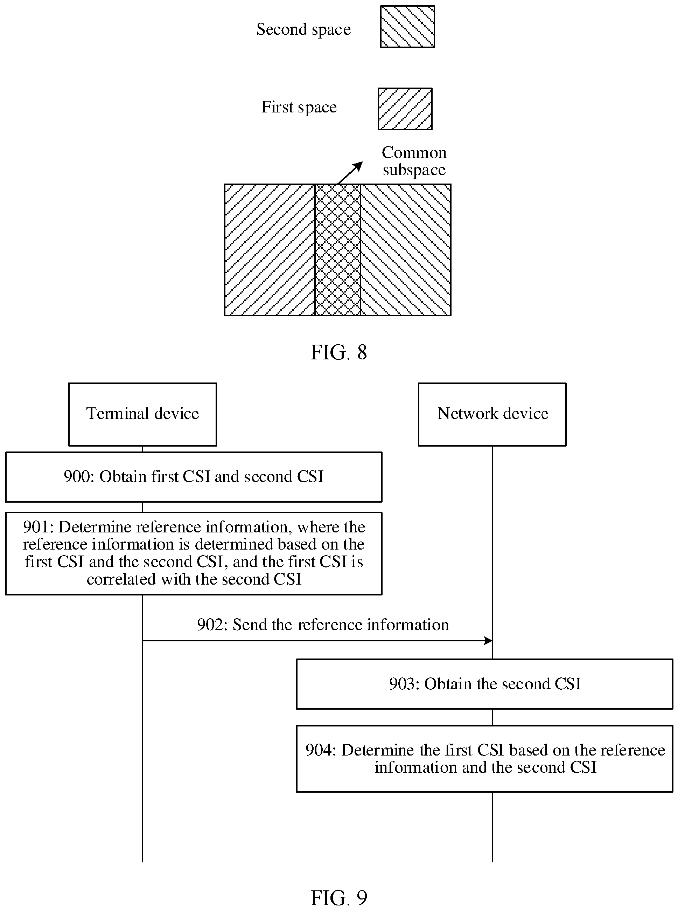

In actual channel changes, channel statistical characteristics change slowly. For example, during codebook feedback using joint spatial-frequency domain compression, there is a specific correlation between statistical covariance matrices at different moments. For example, there is a correlation between a statistical covariance matrix $R_h^{t_1}$ at a

moment $t_1$ and a statistical covariance matrix $R_h^{t_2}$ at a moment $t_2$. For example, a time difference between the moment $t_1$ and the moment $t_2$ is less than a coherence time of the channel. In other words, there is a large probability that $W_1^{t_1}$ and $W_1^{t_2}$ at the moment $t_1$ and the moment $t_2$ has a common subspace, where $W_1^{t_1}$ may be understood as a spatial-frequency joint basis determined at the moment $t_1$, and $W_1^{t_2}$ may be understood as a spatial-frequency joint basis determined at the moment $t_2$. A subspace is a part of space whose dimensions are less than or equal to whose of a full space. FIG. 8 shows a first space (indicated by a left shade) corresponding to $W_1^{t_1}$ at the moment $t_1$, and a second space (indicated by a right shade) corresponding to $W_1^{t_2}$ at the moment $t_2$. An intersection of the first space and the second space is a common subspace (indicated by a grid). The common subspace may be represented by a vector linear combination, or may be represented in another manner. In FIG. 8, the common subspace is indicated as a space at which the first space intersects the second space, or may be an intersection point of the first space and the second space. Details are not described herein. However, in such a design, the CSI reporting scheme does not utilize the characteristic that there is a specific correlation between statistical covariance matrices at different moments, and an amount of feedback data is relatively large.

For example, 64 transmit antennas (dual-polarized antennas) and 50 RBs are configured, 64 DFT column vectors are used to approximate $\overline{U}_p$, and a quantity of columns of $\overline{U}_p$ is 13. In this case, $W_1 \in \mathbb{C}^{1600 \times 64}$, $C_1 \in \mathbb{C}^{64 \times 13}$. Each time a basis is fed back in a long periodicity, even if a feedback amount required for $W_1$ is not considered, $64 \times 13 = 832$ coefficients (generally, one coefficient is fed back through 8 bits, and the 832 coefficients need to be fed back through 6,656 bits) that form $C_1$ need to be fed back, which causes large air interface overheads.

In view of separate compression and feedback in the spatial domain and the frequency domain in the conventional technology, this application provides a CSI reporting method, to effectively reduce feedback overheads of a long-periodicity basis of a terminal device by using a correlation between statistical covariance matrices. Further, the CSI reporting method provided in this application may also be used for joint spatial-frequency domain compression and feedback. In addition, in actual application, the solution may be used for uplink signal transmission, or may be used for downlink signal transmission, or may be applied to a D2D scenario. This is not specifically limited herein in this application, and may be understood by means of data interaction between a sending device and a receiving device.

Herein, downlink signal transmission is used as an example for description. The sending device is a network device, and the receiving device is a terminal device. The following describes the technical solution of this application in detail with reference to FIG. 9 by using a specific method embodiment. It should be noted that, FIG. 9 is a schematic flowchart of the method embodiment of this application, which shows detailed communication steps or operations of the method. However, these steps or operations are merely examples. Other operations or variants of the operations in FIG. 9 may be further performed in embodiments of this application. In addition, the steps in FIG. 9 may be performed in an order different from that presented in FIG. 9, and not all the operations in FIG. 9 may be necessarily performed. As shown in FIG. 9, the method is performed as follows:

Step 900: The terminal device obtains first CSI and second CSI.
The first CSI and the second CSI may be obtained by the terminal device through measurement after receiving a CSI-RS, or may be first CSI and second CSI that are obtained by the terminal device from another device (for example, a core network device) and that are measured by the another terminal device after receiving a CSI-RS. The source of the first CSI and the second CSI is not specifically limited herein in this application.
Step 901: The terminal device determines reference information, where the reference information is determined based on the first CSI and the second CSI, and the second CSI is correlated (correlated) with the first CSI.

It should be noted that, that the first CSI is correlated with the second CSI may be understood as one or more of the following: the first CSI is associated (correlation) with the second CSI in time domain, the first CSI is associated with the second CSI in spatial domain, or the first CSI is associated with the second CSI in frequency domain.

For example, the first CSI is associated with the second CSI in time domain may be understood as association between CSI of the same network device-terminal device pair at different moments. For example, for a wireless connection between a TRP 1 and a UE 1 at three consecutive moments T0, T1, and T2, CSI at T1 is the second CSI, and CSI at T2 is the first CSI. Certainly, CSI at T0 may also be the second CSI, provided that the terminal device and the network device agree in advance that the moment corresponding to the second CSI is one or more moments before the moment corresponding to the first CSI, where one moment corresponds to one CSI-RS measurement performed by the terminal device.

For example, the first CSI is associated with the second CSI in spatial domain may be understood as association between CSI of a plurality of network devices and one terminal device at the same moment. For example, CSI of a TRP 1-UE 1 pair at a moment 1 is the second CSI, and CSI of a TRP 2-UE 1 pair at the moment 1 is the first CSI. The first CSI is associated with the second CSI in spatial domain may also be understood as association between CSI of a plurality of terminal devices and one network device at the same moment. For example, the CSI of the TRP 1-UE 1 pair at the moment 1 is the second CSI, and CSI of a TRP 1-UE 2 pair at the moment 1 is the first CSI.

For example, the first CSI is associated with the second CSI in frequency domain may be understood as association between CSI of the same network device-terminal device pair on different frequency bands. For example, CSI of the TRP 1-UE 1 pair on a frequency band 1 is the second CSI, and CSI of the TRP 1-UE 1 pair on a frequency band 2 is the first CSI.

For example, the first CSI is associated with the second CSI in time domain and spatial domain may be understood as association between CSI of a plurality of network devices and one terminal device at different moments. For example, CSI of the TRP 1-UE 1 pair at the moment 1 is the second CSI, and CSI of the TRP 2-UE 1 pair at a moment 2 is the first CSI. The first CSI is associated with the second CSI in time domain and spatial domain may also be understood as association between CSI of a plurality of terminal devices and one network device at different moments. For example, the CSI of the TRP 1-UE 1 pair at the moment 1 is the second CSI, and CSI of the TRP 1-UE 2 pair at the moment 2 is the first CSI.

For example, the first CSI is associated with the second CSI in spatial domain and frequency domain may be understood as association between CSI of a plurality of network devices and one terminal device on different frequency bands. For example, CSI of the TRP 1-UE 1 pair on the frequency band 1 is the second CSI, and CSI of the TRP 2-UE 1 pair on the frequency band 2 is the first CSI. The first CSI is associated with the second CSI in spatial domain and frequency domain may also be understood as association between CSI of a plurality of terminal devices and one network device on different frequency bands. For example, the CSI of the TRP 1-UE 1 pair on the frequency band 1 is the second CSI, and CSI of the TRP 1-UE 2 pair on the frequency band 2 is the first CSI.

Certainly, in actual application, this is not limited to the foregoing several association relationships, and may further be a combination of the foregoing association relationships, for example, a combination of one or more TRPs and one or more UEs at different moments and on different frequency bands.

Specifically, the terminal device and the network device may pre-agree on which association relationship the terminal device and the network device are to refer to and which CSI the terminal device and the network device are specifically to select as the second CSI. For example, it is agreed that the first CSI is associated with the second CSI in time domain and that the second CSI is CSI fed back at the first moment preceding the first CSI (that is, CSI at a second moment is determined with reference to CSI at a first moment, and CSI at a third moment is determined with reference to the CSI at the second moment). Alternatively, it is agreed that the first CSI is associated with the second CSI in time domain and that the second CSI is CSI fed back at the second moment preceding the first CSI (that is, the CSI at the third moment is determined with reference to the CSI at the first moment, and CSI at a fourth moment is determined with reference to the CSI at the second moment). In this application, the first CSI is determined with reference to the second CSI. In actual application, there is not necessarily one piece of second CSI. For example, it is agreed that the first CSI is associated with the second CSI in time domain and that the second CSI is CSI fed back at the first and second moments preceding the first CSI (that is, the CSI at the moment 3 is determined with reference to the CSI at the moment 1 and the CSI at the moment 2, and the CSI at the moment 4 is determined with reference to the CSI at the moment 2 and the CSI at the moment 3). The second CSI may be specifically calculated by using a weighting or interpolation method (for example, interpolation is performed on the CSI at the first moment and the CSI at the second moment to calculate the second CSI). This is not specifically limited in this application. This application can reduce air interface overheads for feedback by using the correlation between the first CSI and the second CSI.

Optionally, before determining the reference information of the first CSI, the terminal device may receive a downlink reference signal from the network device, or send an uplink reference signal to the network device. The downlink reference signal may be a CSI-RS, an SSB, a DMRS, or the like. The uplink reference signal may include an SRS or the like. This is not specifically limited herein. The following uses an example in which the downlink reference signal is a CSI-RS for description.

Step 902: The terminal device sends the reference information to the network device.

Correspondingly, the network device receives the reference information.

Step 904: The network device determines the first CSI based on the reference information and the second CSI.

It should be noted that before performing step 904, the network device further performs step 903 to obtain the second CSI. Specifically, the second CSI may be directly reported by the terminal device, or may be obtained in a manner similar to that of obtaining the second CSI in this application. This is not limited in this application.

In this application, the terminal device determines the reference information of the first CSI based on the second CSI, and the reference information is determined based on the second CSI. Compared with a scheme in which the terminal device separately reports a spatial domain basis, a frequency domain basis, and a full bandwidth combination coefficient or in which the terminal device reports a large amount of parameter information such as a spatial-frequency joint basis and a full bandwidth combination coefficient, so that the network device determines the first CSI, this application designs a new feedback scheme by using an association relationship between the first CSI and the second CSI, and a small quantity of parameters are reported. This manner significantly reduces air interface overheads for feedback.

For a better understanding of the reference information, refer to the following two implementations. In implementation 1, the reference information includes first quantization information and second quantization information, where a feedback sequence of the first quantization information and the second quantization information is not limited herein. In implementation 2, the reference information includes index information of basis vectors forming a third set and a third projection quantization parameter of a first basis on a fourth basis. It should be noted that in actual application, the reference information may not necessarily be determined by using only the two implementations, and the reference information may also be determined in another manner. This is not specifically limited in this application.

Implementation 1: The reference information includes the first quantization information and the second quantization information.

The first quantization information includes projection quantization information of a common subspace, and the second quantization information includes projection quantization information of a non-common subspace. The common subspace includes an intersection of a first space used to quantize the first CSI and a second space used to quantize the second CSI, and the first non-common subspace includes a subspace other than the common subspace in the first space. The first space may be a space represented by a first basis corresponding to the first CSI, and the second space may be a space represented by a second basis corresponding to the second CSI. The first basis is formed by one or more first basis vectors used to determine the first CSI, and the one or more first basis vectors are used to quantize the first space. The second basis is formed by one or more second basis vectors used to determine the second CSI, and the one or more second basis vectors are used to quantize the second space. It should be understood that a quantity of first basis vectors forming the first basis may be the same as or different from a quantity of second basis vectors forming the second basis. This is not specifically limited in this application.

The projection quantization information of the common subspace includes a first projection quantization parameter of the common subspace on the second basis; and the projection quantization information of the first non-common subspace includes index information of a third basis vector forming a third basis and a second projection quantization parameter of the first non-common subspace on the third basis. The third basis is formed by one or more third basis vectors used to quantize the first non-common subspace. The index information of the third basis vector forming the third basis may include a codebook index of the third basis vector forming the third basis, or other information used to indicate the third basis vector. This is not specifically limited in this application.

Therefore, the common subspace is represented by the projection quantization information of the common subspace (that is, a projection coefficient of the common subspace), and the first non-common subspace is represented by the projection quantization information of the first non-common subspace (that is, a projection coefficient of the non-common subspace).

It should be noted that the basis may be understood as a spatial domain vector (spatial domain (or angular domain)) basis, a frequency domain vector (frequency domain (or delay domain)) basis, or a time domain vector (time domain (or Doppler domain)) basis described above, or a combination of the foregoing plurality of bases, for example, a spatial-frequency joint basis, a spatial-time-frequency joint basis, a time-frequency joint basis, or a spatial-time joint basis. This is not specifically limited in this application. The first basis, the second basis, and the third basis are bases of a same type. For example, they are all spatial domain bases, frequency domain bases, or spatial-frequency joint bases. In actual application, the type of the bases may be flexibly selected based on a requirement. This is not specifically limited in this application.

In addition, a quantity of first basis vectors forming the first basis may be the same as or different from a quantity of second basis vectors forming the second basis and a quantity of third basis vectors forming the third basis. For example, the quantity of first basis vectors forming the first basis is 10, the quantity of second basis vectors forming the second basis may also be 10, and the quantity of third basis vectors forming the third basis is 8. This is merely an example for description, and is not specifically limited herein.

In addition, the first basis vector, the second basis vector, and the third basis vector may be basis vectors of the same type, for example, one of the following: a DFT vector, an FFT vector, an oversampled DFT vector, an oversampled FFT vector, a vector determined based on a preset rule, or a vector determined based on the second CSI. The DFT basis vector is a vector determined based on a DFT codebook. The FFT vector is a vector determined based on an FFT codebook. The vector determined based on the preset rule is a vector agreed on by the terminal device and the network device based on the preset rule. The basis vector determined based on the second CSI is a vector determined by the network device based on a vector forming the second CSI after the network device obtains the second CSI. Specifically, a specific type of the first basis vector, the second basis vector, and the third basis vector may be agreed on by the network device and the terminal device through a protocol, or may be directly indicated by the network device. This is not specifically limited in this application.

For a better understanding of the index information of the third basis vector forming the third basis, the codebook index of the third basis vector forming the third basis is used as an example for description. It is assumed that the third basis vector forming the third basis is a DFT basis vector, and the third basis is formed by three DFT basis vectors. However, in practice, a plurality of DFT basis vectors may be arranged in sequence. Assuming that the first, third, and fifth DFT basis vectors are selected to construct the third basis, the codebook index of the third basis is {1, 3, 5}.

In addition, it should be further noted that, the third basis and a space formed by the basis vector corresponding to the index information of the third basis in the specification may be equivalently understood, which is not specifically limited herein. For example, a projection of the first non-common subspace on the third basis may also be understood as a projection of the first non-common subspace on the space formed by the basis vector corresponding to the index information of the third basis.

In Implementation 1, an example in which the terminal device is a UE and the network device is a gNB is used for description. Herein, an example in which the first CSI is associated with the second CSI in time domain is used for description. During specific execution, there may be the following two manners 1.1 and 1.2, namely, separate compression of a feedback codebook based on a spatial domain and a frequency domain, and compression of a feedback codebook based on a joint spatial-frequency domain.

Manner 1.1: Separate compression of a feedback codebook based on a spatial domain and a frequency domain

The first space includes a first spatial domain space and a first frequency domain space, the second space includes a second spatial domain space and a second frequency domain space, the common subspace includes a spatial domain common subspace and a frequency domain common subspace, the first basis includes a first spatial domain basis and a first frequency domain basis, the second basis includes a second spatial domain basis and a second frequency domain basis, the third basis includes a third spatial domain basis and a third frequency domain basis, the first non-common subspace includes a first spatial domain non-common subspace and a first frequency domain non-common subspace, the spatial domain common subspace is an intersection of the first spatial domain space and the second spatial domain space, the frequency domain common subspace includes an intersection of the first frequency domain space and the second frequency domain space, the first spatial domain non-common subspace includes a subspace other than the spatial domain common subspace in the first spatial domain space, the first frequency domain non-common subspace includes a subspace other than the frequency domain common subspace in the first frequency domain space, the third basis vector includes a third spatial domain basis vector and a third frequency domain basis vector, the third spatial domain basis is formed by one or more third spatial domain basis vectors used to quantize the first spatial domain non-common subspace, and the third frequency domain basis is formed by one or more third frequency domain basis vectors used to quantize the first frequency domain non-common subspace.

The projection quantization information of the common subspace includes a projection quantization parameter of the spatial domain common subspace on the second spatial domain basis and a projection quantization parameter of the frequency domain common subspace on the second frequency domain basis, and the projection quantization information of the first non-common subspace includes index information of the third spatial domain basis vector forming the third spatial domain basis, index information of the third frequency domain basis vector forming the third frequency domain basis, a projection quantization parameter of the first spatial domain non-common subspace on the third spatial domain basis, and a projection quantization parameter of the first frequency domain non-common subspace on the third frequency domain basis.

The scheme for Manner 1.1 is described for the channel model described in formula (1), that is, $H \approx S'C_1C_2C_3F'^H$,

where $H \in \mathbb{C}^{2M \times N}$, $S' \in \mathbb{C}^{2M \times B}$; $C_1 \in \mathbb{C}^{B \times K_S}$; $C_2 \in \mathbb{C}^{K_S \times D}$; $C_3 \in \mathbb{C}^{D \times F}$; $F' \in \mathbb{C}^{N \times F}$, $M$ is a quantity of transmit antenna ports in one polarization direction, and $N$ is a quantity of frequency domain units, that is, a length of a frequency domain vector. If $H$ is changed, for example, to $H^T$, the corresponding formula needs to be changed. Herein, only the specific form of formula (1) is used as an example for description.

It should be noted that a basis corresponding to the second CSI (that is, CSI to be fed back for the $(n-1)^{th}$ time) includes two parts: a second spatial domain basis $\overline{U}_S^{n-1} \in \mathbb{C}^{M \times K_S^{n-1}}$ and a second frequency domain basis $\overline{U}_f^{n-1} \in \mathbb{C}^{N \times D^{n-1}}$, where $B^{n-1}$ is a quantity of second spatial domain basis vectors selected by the network device or the terminal device, $K_S^{n-1}$ represents a quantity of weighting coefficients corresponding to each second spatial domain basis vector, that is, a quantity of columns of the second spatial domain basis, $D^{n-1}$ represents a quantity of weighting coefficients corresponding to each second frequency domain basis vector, that is, a quantity of columns of the second frequency domain basis, and $F^{n-1}$ is a quantity of second frequency domain basis vectors selected by the network device or the terminal device.

A basis corresponding to the first CSI (that is, CSI to be fed back for the $n^{\text{th}}$ time) includes two parts: a first spatial domain basis $\overline{U}_S^n \in \mathbb{C}^{M \times K_S^n}$ and a first frequency domain basis $\overline{U}_f^n \in \mathbb{C}^{N \times D^n}$, where $B^n$ is a quantity of first spatial domain basis vectors selected by the network device or the terminal device, $K_S^n$ represents a quantity of weighting coefficients corresponding to each first spatial domain basis vector, that is, a quantity of columns of the first spatial domain basis, $D^n$ represents a quantity of weighting coefficients corresponding to each first frequency domain basis vector, that is, a quantity of columns of the first frequency domain basis, and $F^n$ is a quantity of first frequency domain basis vectors selected by the network device or the terminal device.

In the scheme of separate compression of a feedback codebook based on the spatial domain and the frequency domain, the first basis includes the first spatial domain basis and the first frequency domain basis, and the second basis includes the second spatial domain basis and the second frequency domain basis. Based on this, in Manner 1.1, projection quantization is performed on $\overline{U}_S^{n-1}$, to obtain $\widetilde{U}_S^{n-1}$ (the quantization basis of the second spatial domain basis), $\widetilde{U}_S^{n-1} = P_{W_S^{n-1}} \overline{U}_S^{n-1}$, where $P_{W_S^{n-1}} \in \mathbb{C}^{M \times M}$, $W_S^{n-1}$ is an agreed group of bases, for example, oversampled DFT bases, and $W_S^{n-1} \left( W_S^{n-1H} W_S^{n-1} \right)^{-1} W_S^{n-1H}$ is a projection matrix corresponding to $W_S^{n-1}$; and projection quantization is performed on $\overline{U}_f^{n-1}$, to obtain $\widetilde{U}_f^{n-1}$ (the quantization basis of the second frequency domain basis), $\widetilde{U}_f^{n-1} = P_{W_f^{n-1}} \overline{U}_f^{n-1}$, where $P_{W_f^{n-1}} \in \mathbb{C}^{N \times N}$, $W_f^{n-1}$, is a group of agreed bases, for example, oversampled DFT bases, and $W_f^{n-1} \left( W_f^{n-1H} W_f^{n-1} \right)^{-1} W_f^{n-1H}$ is a projection matrix corresponding to $W_f^{n-1}$.

Both the gNB and the UE know $\widetilde{U}_S^{n-1}$ and $\widetilde{U}_f^{n-1}$. During the $n^{\text{th}}$ long-periodicity feedback, the UE calculates the first spatial domain basis $\overline{U}_S^n$ and the first frequency domain basis $\overline{U}_f^n$, performs projection quantization on $\overline{U}_S^n$ by using $\widetilde{U}_S^{n-1}$ and the DFT basis vector, and performs projection quantization on $\overline{U}_f^n$ by using $\widetilde{U}_f^{n-1}$ and the DFT basis vector. For $n > 1$, a specific process is shown as follows. In addition, the following calculation process is merely an example, and another method may be used to search for the common subspace or an approximate subspace of the common subspace, which is not specifically limited in actual application. Herein, projection quantization using the DFT basis vector is merely used as an example for description, but a basis vector used for projection quantization is not specifically limited. The basis vector may also be the oversampled DFT vector and another basis vector described above. The DFT basis vector mentioned below is also merely an example, and a type of the basis vector is not specifically limited. This is not repeated hereinafter.

S1: The UE calculates $\overline{U}_S^n$ and $\overline{U}_f^n$, and calculates a spatial domain common subspace between $\widetilde{U}_S^{n-1}$ and $\overline{U}_S^n$ and a frequency domain common subspace between $\widetilde{U}_f^{n-1}$ and $\overline{U}_f^n$, where the spatial domain common subspace is determined based on a projection matrix of the first spatial domain space and a projection matrix of the second spatial domain space, the spatial domain common subspace is denoted as $V_S^n$, and any column vector $v_S^n$ in $V_S^n$ satisfies (in actual application, approximately satisfies, as long as a difference between the left and right sides of the equation is relatively small) formula (11); the frequency domain common subspace is determined based on a projection matrix of the first frequency domain space and a projection matrix of the second frequency domain space, the frequency domain common subspace is denoted as $V_f^n$, and any column vector $v_f^n$ in $V_f^n$ satisfies (in actual application, approximately satisfies, as long as a difference between the left and right sides of the equation is relatively small) formula (12):

$$v_S^n = P_{\overline{U}_S^n} P_{\widetilde{U}_S^{n-1}} v_S^n \quad (11)$$

where dimensions of the spatial domain common subspace are $N_{S,c}^n$, dimensions of the first spatial domain non-common subspace are $N_{S,d}^n$, satisfying $N_{S,c}^n + N_{S,d}^n = K_S^n$, $P_{\overline{U}_S^n} = \overline{U}_S^n((\overline{U}_S^n)^H \overline{U}_S^n)^{-1}(\overline{U}_S^n)^H \in \mathbb{C}^{M \times M}$ is the projection matrix of the first spatial

$$P_{\widetilde{U}_S^{n-1}} = \widetilde{U}_S^{n-1}\left(\left(\widetilde{U}_S^{n-1}\right)^H \widetilde{U}_S^{n-1}\right)^{-1}\left(\widetilde{U}_S^{n-1}\right)^H \in \mathbb{C}^{M \times M}$$

domain space, and is the projection matrix of the second spatial domain space. $v_S^n = P_{\widetilde{U}_S^{n-1}} v_S^n$ represents that $v_S^n$ is in a space (that is, the second spatial domain space) corresponding to $\widetilde{U}_S^{n-1}$, and $v_S^n = P_{\overline{U}_S^n} v_S^n$ represents that $v_S^n$ is in a space (that is, the first spatial domain space) corresponding to $\overline{U}_S^n$.

$$v_f^n = P_{\overline{U}_f^n} P_{\widetilde{U}_f^{n-1}} v_f^n \quad (12)$$

where dimensions of the frequency domain common subspace are $N_{f,c}^n$, dimensions of the first frequency domain non-common subspace are $N_{f,d}^n$, satisfying $N_{f,c}^n + N_{f,d}^n = D^n$, $P_{\overline{U}_f^n} = \overline{U}_f^n\left(\left(\overline{U}_f^n\right)^H \overline{U}_f^n\right)^{-1}\left(\overline{U}_f^n\right)^H \in \mathbb{C}^{N \times N}$ is the projection matrix of the first

$$P_{\widetilde{U}_f^{n-1}} = \widetilde{U}_f^{n-1}\left(\left(\widetilde{U}_f^{n-1}\right)^H \widetilde{U}_f^{n-1}\right)^{-1}\left(\widetilde{U}_f^{n-1}\right)^H \in \mathbb{C}^{N \times N}$$

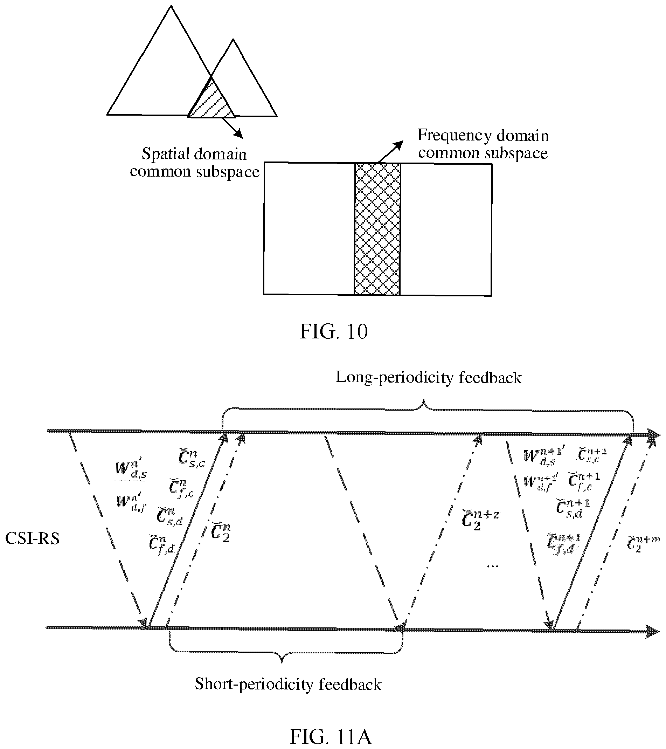

frequency domain space, and is the projection matrix of the second frequency domain space. $v_f^n = P_{\widetilde{U}_f^{n-1}} v_f^n$ represents that $v_f^n$ is in a space (that is, the second frequency domain space) corresponding to $\widetilde{U}_f^{n-1}$, and $\widetilde{U}_f^{n-1} = P_{\overline{U}_f^n} \widetilde{U}_f^{n-1}$ represents that $\widetilde{U}_f^{n-1}$ is in a space (that is, the first frequency domain space) corresponding to $\overline{U}_f^n$. FIG. 10 shows the spatial domain common subspace of the first spatial domain space and the second spatial domain space, as shown by a shaded part in the figure, and the frequency domain common subspace of the first frequency domain space and the second frequency domain space, as shown by a grid part in the figure.

The projection quantization parameter of the spatial domain common subspace on the second spatial domain basis is determined by quantizing a projection coefficient of the spatial domain common subspace on a quantization basis of the second spatial domain basis. In other words, projection quantization is performed on $V_S^n$ by using $\widetilde{U}_S^{n-1}$, as shown in the following formula (13):

$$V_S^n = \widetilde{U}_S^{n-1} C_{S,c}^n \quad (13)$$

where $C_{S,c}^n \in \mathbb{C}^{K_S^{n-1} \times N_{S,c}^n}$ represents the projection coefficient of the spatial domain common subspace $V_S^n$ on $\widetilde{U}_S^{n-1}$.

The projection quantization parameter of the frequency domain common subspace on the second frequency domain basis is determined by quantizing a projection coefficient of the frequency domain common subspace on a quantization basis of the second frequency domain basis. In other words, projection quantization is performed on $V_f^n$ by using $\widetilde{U}_f^{n-1}$, as shown in the following formula (14):

$$V_f^n = \widetilde{U}_f^{n-1} C_{f,c}^n \quad (14)$$

where $C_{f,c}^n \in \mathbb{C}^{D^{n-1} \times N_{f,c}^n}$ represents the projection coefficient of the frequency domain common subspace $V_f^n$ on $\widetilde{U}_f^{n-1}$.

S2: The first spatial domain non-common subspace includes a subspace of the first spatial domain space that is orthogonal to the spatial domain common subspace, where the subspace (that is, the first spatial domain non-common subspace) of the first spatial domain space that is orthogonal to $V_S^n$ is $D_S^n$, as shown in formula (15):

$$D_S^n \oplus V_S^n = \overline{U}_S^n \quad (15)$$

where $\oplus$ represents a direct sum of the subspaces. The projection quantization parameter of the first spatial domain non-common subspace on the third spatial domain basis is determined by quantizing a projection coefficient of the first spatial domain common subspace on the third spatial domain basis. For example, projection quantization is performed on $D_S^n$ by using a DFT basis vector, as shown in formula (16):

$$D_S^n = W_{d,s}^{n'} C_{s,d}^n \quad (16)$$

where $W_{d,s}^{n'} \in \mathbb{C}^{M \times B_d}$ (the third spatial domain basis), and $C_{s,d}^n \in \mathbb{C}^{B_d \times N_{S,d}^n}$ represents the projection coefficient of $D_S^n$ on the third spatial domain basis.

The first frequency domain non-common subspace includes a subspace of the first frequency domain space that is orthogonal to the frequency domain common subspace, where the subspace (that is, the first frequency domain non-common subspace) of the first frequency domain space that is orthogonal to $V_f^n$ is $D_f^n$, as shown in formula (17):

$$D_f^n \oplus V_f^n = \overline{U}_f^n \quad (17)$$

where $\oplus$ represents a direct sum of the subspaces. The projection quantization parameter of the first frequency domain non-common subspace on the third frequency domain basis is determined by quantizing a projection coefficient of the first frequency domain common subspace on the third frequency domain basis. For example, projection quantization is performed on $D_f^n$ by using a DFT basis vector, as shown in formula (18):

$$D_f^n = W_{d,f}^{n'} C_{f,d}^n \quad (18)$$

where $W_{d,f}^{n'} \in \mathbb{C}^{N \times F_d}$ (the third frequency domain basis), and $C_{f,d}^n \in \mathbb{C}^{F_d \times N_{f,d}^n}$ represents the projection coefficient of $D_f^n$ on the third frequency domain basis.

S3: Based on a quantization manner agreed on in a protocol (the quantization manner may include independent quantization of an amplitude and a phase, with non-uniform quantization used for the amplitude, and uniform quantization used for the phase), the UE quantizes $C^n_{s,c}$ and $C^n_{f,c}$, which are denoted as

$$\breve{C}^n_{s,c}$$

and

$$\breve{C}^n_{f,c}$$

(denoted as the first projection quantization parameter), quantizes $C^n_{s,d}$ and $C^n_{f,d}$, which are denoted as

$$\breve{C}^n_{s,d}$$

and

$$\breve{C}^n_{f,d}$$

(denoted as the second projection quantization parameter), determines $\widetilde{U}^n_S$ (the quantization basis of the first spatial domain basis) based on

$$\breve{C}^n_{s,c}, \quad \breve{C}^n_{s,d}, \quad \widetilde{U}^{n-1}_S,$$

and $W^{n'}_{d,s}$, and determines $\widetilde{U}^n_f$ (the quantization basis of the first frequency domain basis) based on

$$\breve{C}^n_{f,c}, \quad \breve{C}^n_{f,d}, \quad \widetilde{U}^{n-1}_f,$$

and $W^{n'}_{d,f}$, as shown in formula (19):

$$\widetilde{U}^n_S = oth\{[\widetilde{U}^{n-1}_S \breve{C}^n_{s,c} \quad W^{n'}_{d,s} \breve{C}^n_{s,d}]\}$$

$$\widetilde{U}^n_f = oth\{[\widetilde{U}^{n-1}_f \breve{C}^n_{f,c} \quad W^{n'}_{d,f} \breve{C}^n_{f,d}]\} \quad (19)$$

where *oth*{*A*} represents orthogonalization on columns of a matrix *A*. Because quantization may damage orthogonality between columns of a long-periodicity basis, orthogonalization needs to be performed. Long-periodicity feedback coefficients of the UE for the *n*th time are only indexes of basis vectors corresponding to

$$\breve{C}^n_{s,c}, \quad \breve{C}^n_{f,c}, \quad \breve{C}^n_{s,d}, \quad \breve{C}^n_{f,d}, \quad W^{n'}_{d,s},$$

and $W^{n'}_{d,f}$. In addition, in actual application, the UE and the gNB may agree in advance on whether to first feed back

$$\breve{C}_{s,c}^{n}$$

and

$$\breve{C}_{f,c}^{n}$$

or indexes of the basis vectors corresponding to

$$\breve{C}_{s,d}^{n}, \ \breve{C}_{f,d}^{n}, \ W_{d,s}^{n'},$$

and $W_{d,f}^{n'}$ . This is not specifically limited in this application.

S4: The UE calculates, based on $\widetilde{U}_{S}^{n}$ and $\widetilde{U}_{f}^{n}$ , a short-periodicity feedback coefficient at a subsequent moment, which is denoted as $C_{2}^{n}$ . For example, for a single antenna of the UE, a calculation formula is (20):

$$C_{2}^{n} = \left(I_{2}\otimes\widetilde{U}_{S}^{n}\right)^{H}H\widetilde{U}_{f}^{n} \quad (20)$$

The UE may further quantize $C_{2}^{n}$ , denoted as

$$\breve{C}_{2}^{n} \in \mathbb{C}^{2K_{S}^{n}\times D^{n}}.$$

S5: The gNB restores the first CSI based on the bases $\widetilde{U}_{S}^{n}$ and $\widetilde{U}_{f}^{n}$ obtained through calculation for the long-periodicity feedback and the coefficient

$$\breve{C}_{2}^{n}$$

of the short-periodicity feedback. Assuming that the UE has a single antenna, the first CSI may be indicated by the following formula (21):

$$\widetilde{H}_{n} = \left(I_{2}\otimes\widetilde{U}_{S}^{n}\right)\breve{C}_{2}^{n}\left(\widetilde{U}_{f}^{n}\right)^{H} \quad (21)$$

The feedback scheme of this application may be shown in FIG. 11A. In this application, after receiving a CSI-RS, the terminal device may feed back the coefficients

$$\breve{C}_{s,c}^{n}, \ \breve{C}_{f,c}^{n}, \ \breve{C}_{s,d}^{n},$$

$$\breve{C}_{f,d}^{n}$$

, and the indexes of the DFT basis vectors corresponding to $W_{d,s}^{n'}, W_{d,f}^{n'}$ in an $n^{th}$ long periodicity, and feed back the coefficient

$$\breve{C}_2^n$$

in a short periodicity. Because the short periodicity is shorter than the long periodicity in time, the short-periodicity feedback coefficient may have been fed back multiple times before an $(n+1)^{th}$ long-periodicity feedback. FIG. 11A shows

$$\breve{C}_2^{n+z}$$

merely as an example, where $z$ is an integer greater than 0. Then, the coefficients

$$\breve{C}_{S,c}^{n+1}, \ \breve{C}_{f,c}^{n+1}$$

,

$$\breve{C}_{s,d}^{n+1}, \ \breve{C}_{f,d}^{n+1}$$

and the indexes of the DFT basis vectors corresponding to $W_{d,s}^{n+1'}, W_{d,f}^{n+1'}$ may be fed back in the $(n+1)^{th}$ long periodicity, and the coefficient

$$\breve{C}_2^{n+m}$$

may be fed back in the short periodicity, where $m$ is an integer greater than 0. This is merely an example description herein.

In the foregoing scheme of separate compression of a feedback codebook based on the spatial domain and the frequency domain in FIG. 3, assuming that feedback of the long-periodicity bases at each moment satisfies $B^n = B^{n-1} = B$,

$K_S^n = K_S^{n-1} = K_S$, $D^n = D^{n-1} = D$, $F^n = F^{n-1} = F$ and feedback overheads of $W_{d,s}^{n'}$ and $W_{d,f}^{n'}$ are ignored, that is, when only $C_1$, $C_3$ is considered, a quantity of feedback complex coefficients is $B \times K_S + D \times F$. When the scheme of this application is used, if feedback overheads of $W_{d,s}^{n'}$ and $W_{d,f}^{n'}$ are ignored, and only

$$\breve{C}_{s,c}^n$$

$$\breve{C}_{f,c}^n, \ \breve{C}_{s,d}^n$$

, , and

$$\breve{C}_{f,d}^n$$

are considered, a quantity of feedback complex coefficients is $K_S \times N_{S,c}^n + \ D \times N_{f,c}^n + B_d \times N_{S,d}^n + F_d \times N_{f,d}^n$ .

For example, in the case of $B = B_d = 16$, $F = F_d = 8$, $K_S = 8$, $D = 4$, $N_{S,c}^n = 4$ , and $N_{f,c}^n = 2$ , in the scheme corresponding to FIG. 3, a quantity of complex coefficients to be fed back is 160 (that is, 16*8+4*8), but in the scheme of this application, a quantity of complex coefficients to be fed back is 120 (that is, 8*4+4*2+16*4+8*2). This effectively reduces a quantity of coefficients to be fed back, thereby effectively reducing air interface overheads for feedback.

Manner 1.2: Compression of a feedback codebook based on a joint spatial-frequency domain

The first space includes a first joint spatial-frequency domain space, the second space includes a second joint spatial-frequency domain space, the common subspace includes a joint spatial-frequency domain common subspace, the first basis includes a first joint spatial-frequency domain basis, the second basis includes a second joint spatial-frequency domain basis, the third basis includes a third joint spatial-frequency domain basis, the first non-common subspace includes a first joint spatial-frequency domain non-common subspace, the joint spatial-frequency domain common subspace includes an intersection of the first joint spatial-frequency domain space and the second joint spatial-frequency domain space, the first joint spatial-frequency domain non-common subspace includes a subspace other than the joint spatial-frequency domain common subspace in the first joint spatial-frequency domain space, the third basis vector includes a third joint spatial-frequency domain basis vector, and the third joint spatial-frequency domain basis is formed by one or more third joint spatial-frequency domain basis vectors used to quantize the first joint spatial-frequency domain non-common subspace.

The projection quantization information of the common subspace includes a projection quantization parameter of the joint spatial-frequency domain common subspace on the second joint spatial-frequency domain basis, and the projection quantization information of the first non-common subspace includes index information of the third joint spatial-frequency domain basis vector forming the third joint spatial-frequency domain basis and a projection quantization parameter of the first joint spatial-frequency domain non-common subspace on the third joint spatial-frequency domain basis.

The scheme for Manner 1.2 is described for the channel model described in formula (4), that is,

$$h = (F^* \odot S)c \in \mathbb{C}^{2MN \times 1}$$

, where $h$ may be considered as a representation of the channel in a joint spatial-frequency domain (a joint domain of a spatial domain and a frequency domain). In formula (4), $c = diag(C)$, and $diag(C)$ represents a column vector $(F^* \odot S) \in \mathbb{C}^{2MN \times 1}$ formed by diagonal elements of the matrix $C$, where $M$ is a quantity of transmit antenna ports in one polarization direction, and $N$ is a quantity of frequency domain units, that is, a length of a frequency domain vector. If $h$ is changed, for example, to $h^T$, the corresponding formula needs to be changed. Herein, only the specific form of formula (4) is used as an example for description.

It should be noted that, the basis corresponding to the second CSI (that is, CSI to be fed back for the $(n-1)^{th}$ time) is the second joint spatial-frequency domain basis $\overline{U}_p^{n-1} \in \mathbb{C}^{MN \times Y}$, and $Y$ is a quantity of second joint spatial-frequency domain basis vectors selected by the network device or the terminal device, that is, a quantity of columns of the second joint spatial-frequency domain basis; the basis corresponding to the first CSI (that is, CSI to be fed back for the $n^{th}$ time) is the first joint spatial-frequency domain basis $\overline{U}_p^n \in \mathbb{C}^{MN \times X}$, and $X$ is a quantity of first joint spatial-frequency domain basis vectors selected by the network device or the terminal device, that is, a quantity of columns of the first joint spatial-frequency domain basis, where $K=MN$.

In the foregoing scheme of compression of a feedback codebook in the joint spatial-frequency domain, the first basis is the first joint spatial-frequency domain basis, and the second basis is the second joint spatial-frequency domain basis. Based on this, in Manner 1.2, projection quantization is performed on $\overline{U}_p^{n-1}$, to obtain $\widetilde{U}_p^{n-1}$ (the quantization basis of the second joint spatial-frequency domain basis), $\widetilde{U}_p^{n-1} = P_{W_P^{n-1}} \overline{U}_p^{n-1}$, where $P_{W_P^{n-1}} \in \mathbb{C}^{MN \times MN}$, $W_P^{n-1}$ is a group of agreed bases, for example, oversampled DFT bases, and $W_P^{n-1} \left( W_P^{n-1 H} W_P^{n-1} \right)^{-1} W_P^{n-1 H}$ is a projection matrix corresponding to $W_P^{n-1}$.

Both the gNB and the UE know $\widetilde{U}_p^{n-1}$. During the $n^{th}$ long-periodicity feedback, the UE calculates the first joint spatial-frequency domain basis $\overline{U}_p^n$, and performs projection quantization on $\overline{U}_p^n$ by using $\widetilde{U}_p^{n-1}$ and the group of agreed bases, for example, the oversampled DFT bases. For $n > 1$, a specific process is shown as follows. In addition, the following calculation process is merely an example, and many other methods may be used to search for the common subspace or an approximate subspace of the common subspace, which is not specifically limited in actual application.

S1: The UE calculates $\overline{U}_p^n$, and calculates a joint spatial-frequency domain common subspace between $\overline{U}_p^n$ and $\widetilde{U}_p^{n-1}$, where the joint spatial-frequency domain common subspace is determined based on a projection matrix of the first joint spatial-frequency domain space and a projection matrix of the second joint spatial-frequency domain space.

For example, the joint spatial-frequency domain common subspace is denoted as $V_1^n$, and any column vector $v_1$ in $V_1^n$ satisfies formula (22):

$$v_1 = P_{\overline{U}_p^n} P_{\widetilde{U}_p^{n-1}} v_1 \quad (22)$$

where $v_1 = P_{\widetilde{U}_p^{n-1}} v_1$ represents that $v_1$ is in a space (that is, the second joint spatial-frequency domain space) corresponding to $\widetilde{U}_p^{n-1}$, and $v_1 = P_{\overline{U}_p^n} v_1$ represents that $v_1$ is in a space (that is, the first joint spatial-frequency domain space) corresponding to $\overline{U}_p^n$. $P_{\overline{U}_p^n} = \overline{U}_p^n \left( \left( \overline{U}_p^n \right)^H \overline{U}_p^n \right)^{-1} \left( \overline{U}_p^n \right)^H \in \mathbb{C}^{MN \times MN}$ is the projection matrix of the first joint spatial-frequency domain space, and $P_{\widetilde{U}_p^{n-1}} = \widetilde{U}_p^{n-1} \left( \left( \widetilde{U}_p^{n-1} \right)^H \widetilde{U}_p^{n-1} \right)^{-1} \left( \widetilde{U}_p^{n-1} \right)^H \in \mathbb{C}^{MN \times MN}$ is the projection matrix of the second spatial-frequency domain space. The projection quantization parameter of the joint spatial-frequency domain common subspace on the second joint spatial-frequency domain basis is determined by quantizing a projection coefficient of the joint spatial-frequency domain common subspace on a quantization basis of the second joint spatial-frequency domain basis. For example, projection quantization is performed on $V_1^n$ by using $\widetilde{U}_p^{n-1}$, as shown in the following formula (23):

$$V_1^n = \widetilde{U}_p^{n-1} C_c^n \quad (23)$$

where $C_c^n \in \mathbb{C}^{Y \times n_1}$ represents the projection coefficient (that is, a first projection parameter) of the joint spatial-frequency domain common subspace $V_1^n$ on $\widetilde{U}_p^{n-1}$, and $n_1$ is a quantity of dimensions of the common subspace.

S2: The first joint spatial-frequency domain non-common subspace includes a subspace of the first joint spatial-frequency domain space that is orthogonal to the joint spatial-frequency domain common subspace. For example, the subspace (that is, the first joint spatial-frequency domain non-common subspace) of the first joint spatial-frequency domain space that is orthogonal to $V_1^n$ is $D_1^n$, as shown in formula (24):

$$D_1^n \oplus V_1^n = \overline{U}_p^n \quad (24)$$

where $\oplus$ represents a direct sum of the subspaces. The projection quantization parameter of the first joint spatial-frequency domain non-common subspace on the third joint spatial-frequency domain basis is determined by quantizing a second projection coefficient of the first joint spatial-frequency domain non-common subspace on the third joint spatial-frequency domain basis. For example, projection quantization is performed on $D_1^n$ by using the group of agreed bases, for example, the oversampled DFT bases, as shown in formula (25):

$$D_1^n = W_d^{n\prime} C_d^n \quad (25)$$

where $W_d^{n\prime} \in \mathbb{C}^{K \times Q_1}$ represents the third joint spatial-frequency domain basis, $C_d^n \in \mathbb{C}^{Q_1 \times (X - n_1)}$ represents

the projection coefficient (that is, the second projection parameter) of $D_1^n$ on the third joint spatial-frequency domain basis, $Q_1$ is a quantity of columns of the third joint spatial-frequency domain basis, and $X - n_1$ is a quantity of dimensions of the joint spatial-frequency domain non-common subspace.

S3: Based on a quantization manner agreed on in a protocol (for the specific quantization manner, refer to the description of Manner 1.1), the UE quantizes $C_c^n$ and $C_d^n$, which are denoted as

$$\breve{C}_c^n \in \mathbb{C}^{Y \times n_1}$$

(the first projection quantization parameter) and

$$\breve{C}_d^n \in \mathbb{C}^{Q_1 \times (X - n_1)}$$

(the second projection quantization parameter), and determines $\widetilde{U}_p^n$ (the quantization basis of the first joint spatial-frequency domain basis) based on

$$\breve{C}_c^n, \quad \breve{C}_d^n, \quad W_d^{n'}$$

, and $\widetilde{U}_p^{n-1}$, as shown in formula (26):

$$\widetilde{U}_p^n = oth\left\{\left[\widetilde{U}_p^{n-1}\breve{C}_c^n \quad W_d^{n'}\breve{C}_d^n\right]\right\} \quad (26)$$

Long-periodicity feedback coefficients of the UE for the $n^{\text{th}}$ time are only indexes of DFT basis vectors corresponding to

$$\breve{C}_c^n, \quad \breve{C}_d^n,$$

and $W_d^{n'}$. In addition, in actual application, the UE and the gNB may agree in advance on whether to first feed back

$$\breve{C}_c^n$$

or indexes of the DFT basis vectors corresponding to

$$\breve{C}_d^n$$

and $W_d^{n'}$. This is not specifically limited in this application.

S4: The UE calculates, based on $\widetilde{U}_p^n$, a short-periodicity feedback coefficient at a subsequent moment, which is denoted as $C_2^n$. For example, for a single antenna of the UE, a calculation formula is (27):

$$C_2^n = \left(I_2 \otimes \widetilde{U}_p^n\right)^H h_n \quad (27)$$

The UE may further quantize $C_2^n \in \mathbb{C}^{2X \times 1}$, denoted as

$$\breve{C}_2^n$$

S5: The gNB restores the first CSI based on the basis $\widetilde{U}_p^n$ obtained through calculation for the long-periodicity feedback and the coefficient

$$\breve{C}_2^n$$

of the short-periodicity feedback. Assuming that the UE has a single antenna, the first CSI may be indicated by the following formula (28):

$$\widetilde{h}_n = (I_2 \otimes \widetilde{U}_p^n)\breve{C}_2^n \ (28)$$

It should also be noted that, in this scheme, the initial long-periodicity feedback coefficient is the same as the feedback coefficient in the joint spatial-frequency domain compression in FIG. 7, that is, quantization feedback is performed on the long-periodicity basis by using the DFT basis vector, which is not described herein again.

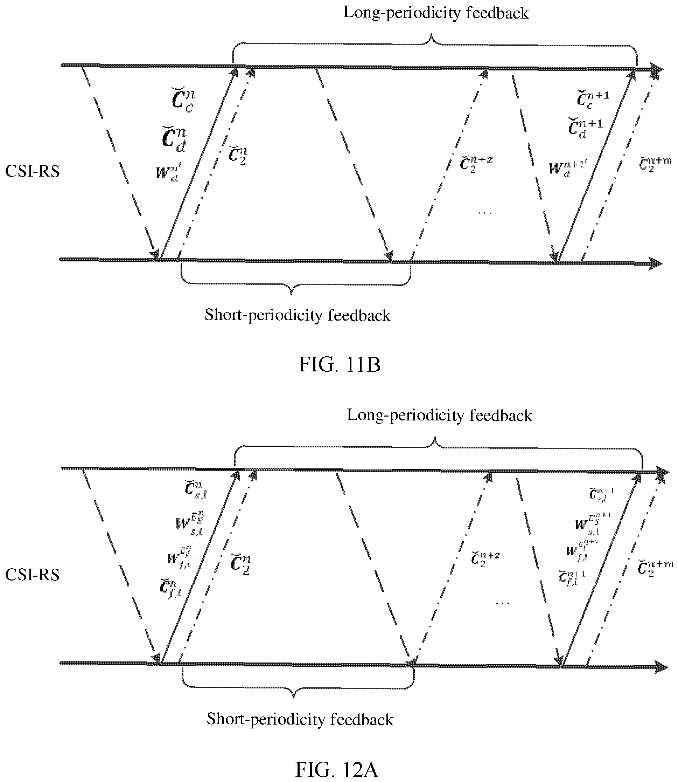

The feedback scheme of this application may be shown in FIG. 11B. In this application, after receiving a CSI-RS, the terminal device may feed back the coefficients

$$\breve{C}_c^n, \ \breve{C}_d^n$$

and the indexes of the DFT basis vectors corresponding to $W_d^{n'}$ in an $n$th long periodicity, and feed back the coefficient

$$\breve{C}_2^n$$

in a short periodicity. Because the short periodicity is shorter than the long periodicity in time, the short-periodicity feedback coefficient may have been fed back multiple times before an $(n+1)$th long-periodicity feedback. FIG. 11B shows

$$\breve{C}_2^{n+z}$$

merely as an example, where z is an integer greater than 0. Then, the coefficients

$$\breve{C}_c^{n+1}, \ \breve{C}_d^{n+1}$$

and the indexes of the DFT basis vectors corresponding to $W_d^{n+1'}$ may be fed back in the $(n+1)$th long periodicity, and the coefficient

$$\breve{C}_2^{n+m}$$

may be fed back in the short periodicity, where $m$ is an integer greater than 0. This is merely an example description herein.

In the scheme of joint spatial-frequency domain compression in FIG. 7, in terms of long-periodicity basis feedback overheads ($W_1$ feedback is not considered), a quantity of feedback complex coefficients is $Q \times \frac{P}{2}$ with only

$C_1$ considered. In the scheme of this application,

$$\breve{C}_c^n, \ \breve{C}_d^n$$

and the indexes of the DFT basis vectors corresponding to $W_d^{n'}$ need to be fed back, and when the indexes of the DFT basis vectors corresponding to $W_d^{n'}$ are ignored, a quantity of feedback complex coefficients is $Y \times n_1 + Q_1 \times (X - n_1)$. For example, in the case of $Q = Q_1 = 64$, $P = 26$, $X = Y = 13$, and $n_1 = 6$, in the scheme corresponding to FIG. 7, a quantity of complex coefficients to be fed back is 832 (that is, 64*26/2), but in the scheme of this application, a quantity of complex coefficients to be fed back is 526 (that is, 13*6+64*(13-6)). This effectively reduces a quantity of coefficients to be fed back, thereby effectively reducing air interface overheads for feedback. Compared with Manner 1.1, in Manner 1.2, quantization is performed by using sparsity of a channel in a joint spatial-frequency domain, to further reduce redundancy in comparison with separate quantization in spatial domain and frequency domain in Manner 1.1. In the scheme of Manner 1.1, the channel has limited sparsity in the spatial domain and the frequency domain. For example, the channel has relatively high energy in some angular directions, and the terminal device may select several spatial components with relatively high energy; the channel has relatively high energy in some delay components, and the terminal device may select several delay components with relatively high energy; and then the network device determines spatial-frequency components based on the angular directions and the delay components selected by the terminal device. Because multipath signals with different arrival delays may have similar angular directions, and arrival times of multipath signals in different angular directions may be close, multipath superposition occurs in an angular domain or a delay domain, and separate resolution of the channel in the angular domain and the delay domain is limited.

In Implementation 1, the reference information is determined based on the projection quantization parameter of the common subspace and the projection quantization parameter of the first non-common subspace, and the first CSI is determined based on the feedback reference information. Compared with the feedback of the spatial domain basis, the frequency domain basis, and the full bandwidth combination coefficient, feedback overheads of the receiving device can be reduced. In addition, accuracy of first CSI determined based on Implementation 1 is high.

Implementation 2: The reference information includes the index information of the basis vectors forming the third set and the third projection quantization parameter of the first basis on the fourth basis.

The first basis, the second basis, and the third basis, as well as the first basis vector, the second basis vector, and the third basis vector, are understood with reference to the description in the foregoing Implementation 1, and details are not described herein again.

The fourth basis includes a basis corresponding to a fourth space, the fourth space includes a union of a second space corresponding to the second CSI and a space formed by basis vectors corresponding to the third set, the index information of the basis vectors of the third set belongs to a first set but does not belong to a second set, the first set is formed by index information of basis vectors for projection quantization of the first basis, and the second set is formed by index information of basis vectors for projection quantization of a second basis. It should be understood that index information of a basis vector may be a codebook index of the basis vector, or may be other information used to indicate the basis vector. This is not specifically limited in this application.

The fourth basis includes one of the following: a spatial domain basis, a frequency domain basis, a spatial-frequency joint basis, or the like, and is a basis of the same type as the first basis, the second basis, and the third basis described above. This is not specifically limited in this application.

In Implementation 2, an example in which the terminal device is a UE and the network device is a gNB is used for description. Herein, an example in which the first CSI is associated with the second CSI in time domain is used for description. During specific execution, there may also be the following two manners 2.1 and 2.2, namely, separate compression of a feedback codebook based on a spatial domain and a frequency domain, and compression of a feedback codebook based on a joint spatial-frequency domain.

Manner 2.1: Separate compression of a feedback codebook based on a spatial domain and a frequency domain

The first basis includes the first spatial domain basis and the first frequency domain basis, the second basis includes the second spatial domain basis and the second frequency domain basis, the fourth basis includes a fourth spatial domain basis and a fourth frequency domain basis, the first set includes a first spatial domain set and a first frequency domain set, the second set includes a second spatial domain set and a second frequency domain set, the third set includes a third spatial domain set and a third frequency domain set, the fourth space includes a fourth spatial domain space and a fourth frequency domain space, the first space includes the first spatial domain space and the first frequency domain space, the second space includes a second spatial domain space and a second frequency domain space, the fourth spatial domain space includes a union of the second spatial domain space and a space formed by basis vectors corresponding to the third spatial domain set, the fourth frequency domain space includes a union of the second frequency domain space and a space formed by basis vectors corresponding to the third frequency domain set.

The reference information includes index information of the basis vectors forming the third spatial domain set, index information of the basis vectors forming the third frequency domain set, a projection quantization parameter of the first spatial domain basis on the fourth spatial domain basis, and a projection quantization parameter of the first frequency domain basis on the fourth spatial domain basis.

The scheme for Manner 2.1 is described for the channel model described in formula (1), that is, $H \approx S'C_1 C_2 C_3 F'^H$,

where $H \in \mathbb{C}^{2M \times N}$ , $S' \in \mathbb{C}^{2M \times B}$; $C_1 \in \mathbb{C}^{B \times K_S}$; $C_2 \in \mathbb{C}^{K_S \times D}$; $C_3 \in \mathbb{C}^{D \times F}$; $F' \in \mathbb{C}^{N \times F}$ , $M$ is a quantity of transmit antenna ports in one polarization direction, and $N$ is a quantity of frequency domain units, that is, a length of a frequency domain vector. If $H$ is changed, for example, to $H^T$, the corresponding formula needs to be changed. Herein, only the specific form of formula (1) is used as an example for description.

It should be noted that a basis corresponding to the second CSI (that is, CSI to be fed back for the $(n-1)^{th}$ time) includes two parts: a second spatial domain basis $\overline{U}_S^{n-1} \in \mathbb{C}^{M \times K_S^{n-1}}$ and a second frequency domain basis $\overline{U}_f^{n-1} \in \mathbb{C}^{N \times D^{n-1}}$, where $K_S^{n-1}$ represents a quantity of weighting coefficients corresponding to each second spatial domain basis vector, that is, a quantity of columns of the second spatial domain basis, $D^{n-1}$ represents a quantity of weighting coefficients corresponding to each second frequency domain basis vector, that is, a quantity of columns of the second frequency domain basis, $Q_S^{n-1}$ is a quantity of second spatial domain basis vectors selected by the network device or the terminal device, and $Q_f^{n-1}$ is a quantity of second frequency domain basis vectors selected by the network device or the terminal device.

A basis corresponding to the first CSI (that is, CSI to be fed back for the $n^{th}$ time) includes two parts: a first spatial domain basis $\overline{U}_S^n \in \mathbb{C}^{M \times K_S^n}$ and a first frequency domain basis $\overline{U}_f^n \in \mathbb{C}^{N \times D^n}$, where $K_S^n$ represents a quantity of weighting coefficients corresponding to each first spatial domain basis vector, that is, a quantity of columns of the first spatial domain basis, $D^n$ represents a quantity of weighting coefficients corresponding to each first frequency domain basis vector, that is, a quantity of columns of the first frequency domain basis, $Q_S^n$ is a quantity of first spatial domain basis vectors selected by the network device or the terminal device, and $Q_f^n$ is a quantity of first frequency domain basis vectors selected by the network device or the terminal device.

In the scheme of separate compression of a feedback codebook in the spatial domain and the frequency domain, the first basis includes the first spatial domain basis and the first frequency domain basis, and the second basis includes the second spatial domain basis and the second frequency domain basis. Based on this, in Manner 2.1, projection quantization is performed on $\overline{U}_S^{n-1}$, to obtain $\widetilde{U}_S^{n-1}$ (the quantization basis of the second spatial domain basis), $\widetilde{U}_S^{n-1} = P_{W_S^{n-1}} \overline{U}_S^{n-1}$, where $P_{W_S^{n-1}} \in \mathbb{C}^{M \times M}$, $W_S^{n-1}$ is an agreed group of bases, for example, oversampled DFT bases, and $W_S^{n-1} \left( W_S^{n-1 H} W_S^{n-1} \right)^{-1} W_S^{n-1 H}$ is a projection matrix corresponding to $W_S^{n-1}$; and projection quantization is performed on $\overline{U}_f^{n-1}$, to obtain $\widetilde{U}_f^{n-1}$ (the quantization basis of the second frequency domain basis), $\widetilde{U}_f^{n-1} = P_{W_f^{n-1}} \overline{U}_f^{n-1}$, where $P_{W_f^{n-1}} \in \mathbb{C}^{N \times N}$, $W_f^{n-1}$ is a group of agreed bases, for example, oversampled DFT bases, and $W_f^{n-1} \left( W_f^{n-1 H} W_f^{n-1} \right)^{-1} W_f^{n-1 H}$ is a projection matrix corresponding to $W_f^{n-1}$.

Both the gNB and the UE know $\widetilde{U}_S^{n-1}$ and $\widetilde{U}_f^{n-1}$. The UE calculates the first spatial domain basis $\overline{U}_S^n$ and the first frequency domain basis $\overline{U}_f^n$, performs projection quantization on $\overline{U}_S^n$ by using $\widetilde{U}_S^{n-1}$ and the DFT basis vector, and performs projection quantization on $\overline{U}_f^n$ by using $\widetilde{U}_f^{n-1}$ and the DFT basis vector. For $n > 1$, a specific process is as follows:

S1: The UE calculates the second spatial domain basis $\overline{U}_S^{n-1}$, which satisfies formula (29):

$$\overline{U}_S^{n-1} \approx W_S^{n-1} C_S^{n-1} \quad (29)$$

The UE calculates the second frequency domain basis $\overline{U}_f^{n-1}$, which satisfies formula (30):

$$\overline{U}_f^{n-1} \approx W_f^{n-1} C_f^{n-1} \quad (30)$$

The second spatial domain set is formed by codebook indexes used to project the second spatial domain basis. The second frequency domain set is formed by codebook indexes used to project the second frequency domain basis. For example, $W_S^{n-1} \in \mathbb{C}^{M \times Q_S^{n-1}}$, $W_f^{n-1} \in \mathbb{C}^{N \times Q_f^{n-1}}$, codebook indexes corresponding to $W_S^{n-1}$ form the second spatial domain set, denoted as $S_S^{n-1}$, and codebook indexes corresponding to $W_f^{n-1}$ form the second frequency domain set, denoted as $S_f^{n-1}$, where $C_S^{n-1} \in \mathbb{C}^{Q_S^{n-1} \times K_S^{n-1}}$ and $C_f^{n-1} \in \mathbb{C}^{Q_f^{n-1} \times D^{n-1}}$.

S2: The UE calculates the first spatial domain basis $\overline{U}_S^n$, which satisfies formula (31):

$$\overline{U}_S^n \approx W_S^n C_S^n \quad (31)$$

The UE calculates the first frequency domain basis $\overline{U}_f^n$, which satisfies formula (32):

$$\overline{U}_f^n \approx W_f^n C_f^n \quad (32)$$

The first spatial domain set is formed by codebook indexes used to project the first spatial domain basis. The first frequency domain set is formed by codebook indexes used to project the first frequency domain basis. For example, $W_S^n \in \mathbb{C}^{M \times Q_S^n}$, $W_f^n \in \mathbb{C}^{N \times Q_f^n}$, codebook indexes corresponding to $W_S^n$ form the first spatial domain set, denoted as $S_S^n$, and codebook indexes corresponding to $W_f^n$ form the first frequency domain set, denoted as $S_f^n$, where $C_S^n \in \mathbb{C}^{Q_S^n \times K_S^n}$ and $C_f^n \in \mathbb{C}^{Q_f^n \times D^n}$.

S3: The third spatial domain set is formed by codebook indexes that are in the first spatial domain set but are not in the second spatial domain set; the third frequency domain set is formed by codebook indexes that are in the first frequency domain set but are not in the second frequency domain set; the fourth spatial domain space is determined through orthogonalization of the second spatial domain space and a space formed by basis vectors corresponding to the third spatial domain set; and the fourth frequency domain space is determined through orthogonalization of the second frequency domain space and a space formed by basis vectors corresponding to the third frequency domain set. For example, the UE calculates codebook indexes that are in the set $S_S^n$ but are not in the set $S_S^{n-1}$, to form the codebook indexes in the set $E_S^n$ (that is, the third spatial domain set), a subspace formed by basis vectors corresponding to the codebook indexes corresponding to $E_S^n$ is $W_{s,l}^{E_S^n} \in \mathbb{C}^{M \times Q_{E_S^n}}$, a joint subspace formed by $W_{s,l}^{E_S^n}$ and a subspace corresponding to the second spatial domain basis is the fourth spatial domain space, and a basis of the fourth spatial domain space is the fourth spatial domain basis, denoted as $\boldsymbol{P}_S^n \in \mathbb{C}^{M \times \left( K_S^{n-1} + Q_{E_S^n} \right)}$, where $Q_{E_S^n}$ is a potential of the set $E_S^n$.

The UE calculates codebook indexes that are in the set $S_f^n$ but are not in the set $S_f^{n-1}$, to form the codebook indexes in the set $E_f^n$ (that is, the third frequency domain set), a subspace formed by basis vectors corresponding to the codebook indexes corresponding to $E_f^n$ is $\boldsymbol{W}_{f,l}^{E_f^n} \in \mathbb{C}^{N \times Q_{E_f^n}}$, a joint subspace formed by $\boldsymbol{W}_{f,l}^{E_f^n}$ and a subspace corresponding to the second frequency domain basis is the fourth frequency domain space, and a basis of the fourth frequency domain space is the fourth frequency domain basis, denoted as $\boldsymbol{P}_f^n \in \mathbb{C}^{N \times \left( D^{n-1} + Q_{E_f^n} \right)}$, where $Q_{E_f^n}$ is a potential the set $E_f^n$. The projection quantization parameter of the first spatial domain basis on the fourth spatial domain basis is determined by quantizing the projection coefficient of the first spatial domain basis on the fourth spatial domain basis. For example, the quantization basis of the first spatial domain basis is approximated by the following two parts:

$$\boldsymbol{P}_S^n = oth\left\{ \begin{bmatrix} \widetilde{\boldsymbol{U}}_S^{n-1} & \boldsymbol{W}_{s,l}^{E_S^n} \end{bmatrix} \right\}$$

It should be noted that, $\overline{\boldsymbol{U}}_S^n \approx \boldsymbol{P}_S^n \boldsymbol{C}_{S,l}^n$, and

$$\breve{\boldsymbol{C}}_{s,l}^n$$

is a quantization result of $\boldsymbol{C}_{S,l}^n$

$$\widetilde{\boldsymbol{U}}_S^n = oth\left\{ \boldsymbol{P}_S^n \breve{\boldsymbol{C}}_{s,l}^n \right\}$$

Similarly, the projection quantization parameter of the first frequency domain basis on the fourth frequency domain basis is determined by quantizing the projection coefficient of the first frequency domain basis on the fourth frequency domain basis. For example, the quantization basis of the first frequency domain basis is approximated by the following two parts:

$$\boldsymbol{P}_f^n = oth\left\{ \begin{bmatrix} \widetilde{\boldsymbol{U}}_f^{n-1} & \boldsymbol{W}_{f,l}^{E_f^n} \end{bmatrix} \right\}$$

It should be noted that, $\overline{\boldsymbol{U}}_f^n \approx \boldsymbol{P}_f^n \boldsymbol{C}_{f,l}^n$, and

$$\breve{\boldsymbol{C}}_{f,l}^n$$

is a quantization result of $\boldsymbol{C}_{f,l}^n$.

$$\widetilde{\boldsymbol{U}}_f^n = oth\left\{ \boldsymbol{P}_f^n \breve{\boldsymbol{C}}_{f,l}^n \right\}$$

That is, projection quantization is performed on $\overline{U}_S^n, \overline{U}_f^n$ by using a joint subspace formed by a subspace corresponding to the bases $\widetilde{U}_S^{n-1}, \widetilde{U}_f^{n-1}$ and DFT basis vectors corresponding to $E_S^n, E_f^n$, to obtain

$$\breve{C}_{s,l}^n \in \mathbb{C}^{(K_S^{n-1}+Q_{E_S}^n)\times K_S^n}$$

and

$$\breve{C}_{f,l}^n \in \mathbb{C}^{(D^{n-1}+Q_{E_f}^n)\times D^n}$$

(that is, obtain the third projection quantization parameter).

The subsequent S4 and S5 are the same as those in Manner 1.1 of Implementation 1, and details are not described again.

The feedback scheme of this application may be shown in FIG. 12A. In this application, after receiving a CSI-RS, the terminal device may feed back the coefficients

$$\breve{C}_{s,l}^n, \ W_{s,l}^{E_S^n}, W_{f,l}^{E_f^n}, \breve{C}_{f,l}^n$$

in an $n^{\text{th}}$ long periodicity, and feed back the coefficient

$$\breve{C}_2^n$$

in a short periodicity. Because the short periodicity is shorter than the long periodicity in time, the short-periodicity feedback coefficient may have been fed back multiple times before an $(n+1)^{\text{th}}$ long-periodicity feedback. FIG. 12A shows

$$\breve{C}_2^{n+z}$$

merely as an example, where z is an integer greater than 0. Then, the coefficients

$$\breve{C}_{s,l}^{n+1}, \ W_{s,l}^{E_S^{n+1}}, W_{f,l}^{E_f^{n+1}}, \breve{C}_{f,l}^{n+1}$$

may be fed back in the $(n+1)^{\text{th}}$ long periodicity, and the coefficient

$$\breve{C}_2^{n+m}$$

may be fed back in the short periodicity, where $m$ is an integer greater than 0. This is merely an example description herein.

In the foregoing scheme of separate compression of a feedback codebook based on the spatial domain and the frequency domain in FIG. 3, when feedback overheads of $W_S$ and $W_f$ are ignored, and only $C_1, C_3$ is considered, a quantity of feedback complex coefficients is $B \times K_S + D \times F$. When the scheme of this application is used, if feedback overheads of

$$W_{s,l}^{E_S^n} \quad \text{and} \quad W_{f,l}^{E_f^n} \quad \text{are ignored, and only}$$

$$\breve{C}_{s,l}^n$$

and

$$\breve{C}_{f,l}^n$$

$$\breve{C}_{f,l}^n$$ are considered, a quantity of feedback complex coefficients is $(K_S^{n-1} + Q_{E_S^n}) \times K_S^n + (D^{n-1} + Q_{E_f^n}) \times D^n$. For example, in the case of $B = 16$, $F = 8$, $K_S = 8$, $D = 4$, $K_S^{n-1} = 4, K_S^n = 4, D^{n-1} = 2, D^n = 2, Q_{E_S^n} = 3, Q_{E_f^n} = 5$, in the scheme corresponding to FIG. 3, a quantity of complex coefficients to be fed back is 160 (that is, 16*8+4*8), but in the scheme of this application, a quantity of complex coefficients to be fed back is 42 (that is, (4+3)*4+(2+5)*2). This effectively reduces a quantity of coefficients to be fed back, thereby effectively reducing air interface overheads for feedback.

Manner 2.2: Compression of a feedback codebook based on a joint spatial-frequency domain

The first basis includes a first joint spatial-frequency domain basis, the second basis includes a second joint spatial-frequency domain basis, the fourth basis includes a fourth joint spatial-frequency domain basis, the first set includes a first joint spatial-frequency domain set, the second set includes a second joint spatial-frequency domain set, the third set includes a third joint spatial-frequency domain set, the fourth space includes a fourth joint spatial-frequency domain space, the first space includes a first joint spatial-frequency domain space, the second space includes a second joint spatial-frequency domain space, and the fourth joint spatial-frequency domain space is a union of the second joint spatial-frequency domain space and a space formed by basis vectors corresponding to the third joint spatial-frequency domain set.

The reference information includes index information of the basis vectors forming the third joint spatial-frequency domain set and the projection quantization parameter of the first joint spatial-frequency domain basis on the fourth joint spatial-frequency domain basis.

The scheme for Manner 2.2 is described for the channel model described in formula (4), that is, $h = (F^* \odot S)c \in \mathbb{C}^{2MN \times 1}$, where $h$ may be considered as a representation of the channel in a joint spatial-frequency domain (a joint domain of a spatial domain and a frequency domain). In formula (4), $c = diag(C)$, and $diag(C)$ represents a column vector $(F^* \odot S) \in \mathbb{C}^{2MN \times 1}$ formed by diagonal elements of the matrix C, where $M$ is a quantity of transmit antenna ports in one polarization direction, and $N$ is a quantity of frequency domain units, that is, a length of a frequency domain vector. If $h$ is changed, for example, to $h^T$, the corresponding formula needs to be changed. Herein, only the specific form of formula (4) is used as an example for description.

It should be noted that, the basis corresponding to the second CSI (that is, CSI to be fed back for the (n-1)th time) is the second joint spatial-frequency domain basis $\overline{U}_p^{n-1} \in \mathbb{C}^{MN \times Y}$, and $Y$ is a quantity of weighting coefficients corresponding to each second joint spatial-frequency domain basis vector, that is, a quantity of columns of the second joint spatial-frequency domain basis; and $Q_C^{n-1}$ is a quantity of second joint spatial-frequency domain basis vectors selected by the network device or the terminal device. The basis corresponding to the first CSI (that is, CSI to be fed back for the nth time) is the first joint spatial-frequency domain basis $\overline{U}_p^n \in \mathbb{C}^{MN \times X}$, and $X$ is a quantity of weighting coefficients corresponding to each first joint spatial-frequency domain basis vector, that is, a quantity of columns of the first joint spatial-frequency domain basis; and $Q_C^n$ is a quantity of first joint spatial-frequency domain basis vectors selected by the network device or the terminal device, where $K=MN$.

In the foregoing scheme of compression of a feedback codebook in the joint spatial-frequency domain, the first basis includes the first joint spatial-frequency domain basis, and the second basis includes the second joint spatial-frequency domain basis. Based on this, in Manner 2.2, projection quantization is performed on $\overline{U}_p^{n-1}$, to obtain $\widetilde{U}_p^{n-1}$ (the second joint spatial-frequency domain basis), $\widetilde{U}_p^{n-1} = P_{W_P^{n-1}} \overline{U}_p^{n-1}$, where $P_{W_P^{n-1}} \in \mathbb{C}^{MN \times MN}$, $W_P^{n-1}$ is a group of agreed bases, for example, oversampled DFT bases, and $W_P^{n-1} \left( W_P^{n-1^H} W_P^{n-1} \right)^{-1} W_P^{n-1^H}$ is a projection matrix corresponding to $W_P^{n-1}$.

Both the gNB and the UE know $\widetilde{U}_p^{n-1}$. The UE calculates the first joint spatial-frequency domain basis $\overline{U}_p^n$, and performs projection quantization on $\overline{U}_p^n$ by using $\widetilde{U}_p^{n-1}$ and the DFT basis vector. For n > 1, a specific process is as follows:

S1: The UE calculates $\overline{U}_p^{n-1}$, which satisfies formula (33):

$$\overline{U}_p^{n-1} \approx \left(\left(W_f^{n-1}\right)^* \odot W_s^{n-1}\right) C_c^{n-1} \quad (33)$$

The second joint spatial-frequency domain set is formed by codebook indexes used to project the second joint spatial-frequency domain basis. For example, codebook indexes corresponding to $\left(W_f^{n-1}\right)^* \odot W_s^{n-1} \in \mathbb{C}^{MN \times Q_C^{n-1}}$ form the second joint spatial-frequency domain set, denoted as $S^{n-1}$, where $C_c^{n-1} \in \mathbb{C}^{Q_C^{n-1} \times Y}$.

S2: The UE calculates $\overline{U}_p^n$, which satisfies formula (34):

$$\overline{U}_p^n \approx \left(\left(W_f^n\right)^* \odot W_s^n\right) C_c^n \quad (34)$$

The first joint spatial-frequency domain set is formed by codebook indexes used to project the first joint spatial-frequency domain basis. For example, codebook indexes corresponding to $\left(W_f^n\right)^* \odot W_s^n \in \mathbb{C}^{MN \times Q_C^n}$ form the first joint spatial-frequency domain set, denoted as $S^n$, where $C_c^n \in \mathbb{C}^{Q_C^n \times X}$, and $X$ is a quantity of columns of the first joint spatial-frequency domain basis.

S3: The third joint spatial-frequency domain set is formed by codebook indexes that are in the first joint spatial-frequency domain set but are not in the second joint spatial-frequency domain set; and the fourth joint spatial-frequency domain space is determined through orthogonalization of the second joint spatial-frequency domain space and the space formed by the basis vectors corresponding to the third joint spatial-frequency domain set. For example, the UE calculates indexes that are in the set $S^n$ but are not in the set $S^{n-1}$, to form a set $E^n$ (that is, the third joint spatial-frequency domain set), a subspace corresponding to the basis vectors corresponding to the codebook indexes corresponding to $E^n$ is $W_l^n \in \mathbb{C}^{MN \times Q_E}$, a joint space formed by $W_l^n$ and the subspace corresponding to the second joint spatial-frequency domain basis is the fourth joint spatial-frequency domain space, and a basis of the fourth space is the fourth joint spatial-frequency domain basis, denoted as $P^n \in \mathbb{C}^{MN \times (Y+Q_E)}$, where $Q_E$ is a potential (a quantity of elements in $E^n$) of the third joint spatial-frequency domain set, and the projection quantization parameter of the first joint spatial-frequency domain basis on the fourth joint spatial-frequency domain basis is determined by quantizing the projection coefficient of the first joint spatial-frequency domain basis on the fourth joint spatial-frequency domain basis. For example, the first joint spatial-frequency domain basis is approximated as follows:

$$P^n = oth\left\{\left[\widetilde{U}_p^{n-1} \quad W_l^n\right]\right\}$$

$$\overline{U}_p^n \approx P^n C_1^n$$

where $C_1^n \in \mathbb{C}^{(Y+Q_E) \times X}$ represents the projection coefficient of $\overline{U}_p^n$ on $P^n$, and the UE may further quantize $C_1^n$, denoted as

$$\breve{\boldsymbol{C}}_1^n$$

:

$$\overline{\boldsymbol{U}}_p^n \approx \widetilde{\boldsymbol{U}}_p^n = oth\{\boldsymbol{P}^n \breve{\boldsymbol{C}}_1^n\}$$

Projection quantization is performed on $\overline{\boldsymbol{U}}_p^n$ by using a joint subspace formed by a space corresponding to $\widetilde{\boldsymbol{U}}_p^{n-1}$ and DFT basis vectors corresponding to $E^n$, to determine

$$\breve{\boldsymbol{C}}_1^n \in$$

$$\mathbb{C}^{(Y+Q_E)\times X}$$

(that is, obtain the third projection quantization parameter) (

$$\breve{\boldsymbol{C}}_1^n$$

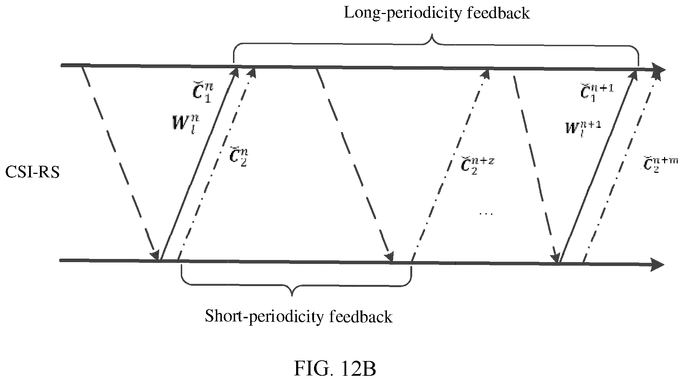

is a quantization result of $\boldsymbol{C}_1^n$ ).
The subsequent S4 and S5 are the same as those in Manner 1.2 of Implementation 1, and details are not described again.
The feedback scheme of this application may be shown in FIG. 12B. In this application, after receiving a CSI-RS, the terminal device may feed back the coefficients

$$\breve{\boldsymbol{C}}_1^n, \ \boldsymbol{W}_l^n$$

in an $n^{th}$ long periodicity, and feed back the coefficient

$$\breve{\boldsymbol{C}}_2^n$$

in a short periodicity. Because the short periodicity is shorter than the long periodicity in time, the short-periodicity feedback coefficient may have been fed back multiple times before an $(n+1)^{th}$ long-periodicity feedback. FIG. 12B shows

$$\breve{\boldsymbol{C}}_2^{n+z}$$

merely as an example, where z is an integer greater than 0. Then, the coefficients

$$\breve{\boldsymbol{C}}_1^{n+1}$$

and $\boldsymbol{W}_l^{n+1}$ may be fed back in the $(n+1)^{th}$ long periodicity, and the coefficient

$$\breve{\boldsymbol{C}}_2^{n+m}$$

may be fed back in the short periodicity, where $m$ is an integer greater than 0. This is merely an example description herein.

In the scheme of joint spatial-frequency domain compression in FIG. 7, in terms of long-periodicity basis feedback overheads ($W_1$ feedback is not considered), a quantity of feedback complex coefficients is $Q \times \frac{P}{2}$ with only $C_1$ considered. In the scheme of this application,

$$\breve{C}_1^n$$

needs to be fed back, and a quantity of feedback complex coefficients is $(Y + Q_E) \times X$. For example, in the case of $Q = 64$, $Q_E = 40$, $P = 26$, $X = Y = 13$, in the scheme corresponding to FIG. 7, a quantity of complex coefficients to be fed back is 832 (that is, 64*26/2), but in the scheme of this application, a quantity of complex coefficients to be fed back is 689 (that is, (13+40)* 13). This effectively reduces a quantity of coefficients to be fed back, thereby effectively reducing air interface overheads for feedback. In Manner 2.2, quantization is performed by using sparsity of a channel in a joint spatial-frequency domain, to further reduce redundancy in comparison with separate quantization in spatial domain and frequency domain in Manner 2.1. In the scheme of Manner 2.1, the channel has limited sparsity in the spatial domain and the frequency domain. For example, the channel has relatively high energy in some angular directions, and the terminal device may select several spatial components with relatively high energy; the channel has relatively high energy in some delay components, and the terminal device may select several delay components with relatively high energy; and then the network device determines spatial-frequency components based on the angular directions and the delay components selected by the terminal device. Because multipath signals with different arrival delays may have similar angular directions, and arrival times of multipath signals in different angular directions may be close, multipath superposition occurs in an angular domain or a delay domain, and separate resolution of the channel in the angular domain and the delay domain is limited.

In Implementation 2, the reference information is determined based on codebook indexes of a basis or the like, and the first CSI is determined based on the feedback reference information. Compared with the feedback of the spatial domain basis, the frequency domain basis, and the full bandwidth combination coefficient, feedback overheads of the receiving device can be reduced. Compared with Implementation 1 in which the projection quantization parameter of the common subspace and the projection quantization parameter of the first non-common subspace need to be calculated, in Implementation 2, the third projection quantization parameter of the first basis on the fourth basis is calculated, and the calculation complexity is reduced.

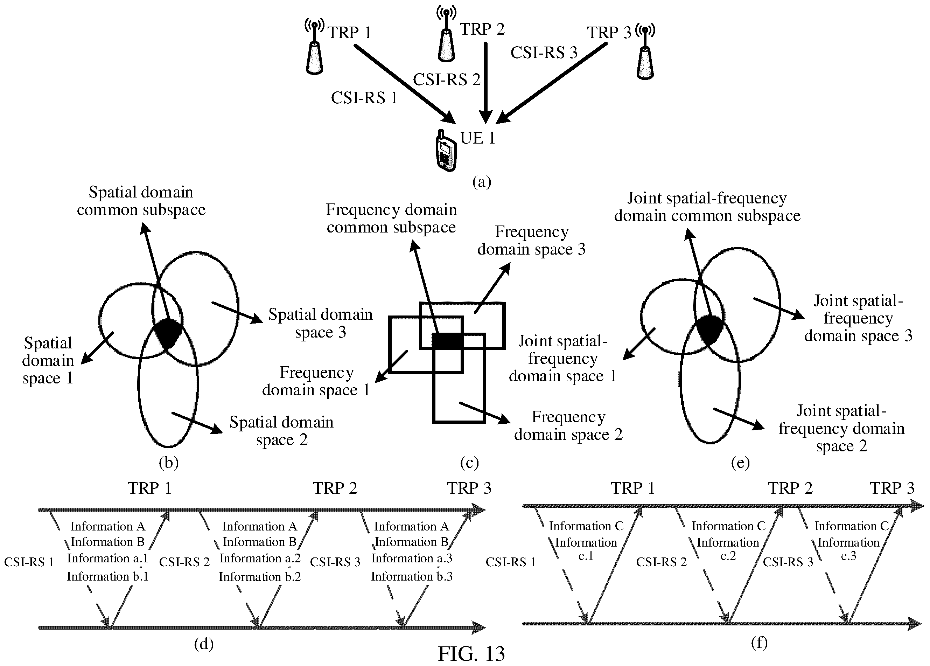

The foregoing Implementation 1 and Implementation 2 are described only in connection with differential feedback between the first CSI and the second CSI. However, in actual application, there may be differential feedback between a plurality of pieces of CSI. The following uses FIG. 13 as an example for description. (a) in FIG. 13 shows that a UE 1 needs to feed back CSI 1 when receiving a CSI-RS 1 from a TRP 1, and needs to feed back CSI 2 when receiving a CSI-RS 2 from a TRP 2, and needs to feed back CSI 3 when receiving a CSI-RS 3 from a TRP 3, where the CSI 1, the CSI 2, and the CSI 3 are associated in spatial domain.

During feedback of complex coefficients in Manner 1.1 of Implementation 1, (b) and (c) in FIG. 13 further show a spatial common subspace and a frequency domain common subspace, respectively. The CSI 1 corresponds to a spatial domain space 1 and a frequency domain space 1, the CSI 2 corresponds to a spatial domain space 2 and a frequency domain space 2, and the CSI 3 corresponds to a spatial domain space 3 and a frequency domain space 3. An intersection part of the spatial domain space 1, the spatial domain space 2, and the spatial domain space 3 is a spatial domain common subspace, and an intersection part of the frequency domain space 1, the frequency domain space 2, and the frequency domain space 3 is a frequency domain common subspace. A part other than the spatial domain common subspace in a union of the spatial domain spaces is a spatial domain non-common subspace, where a subspace other than the spatial domain common subspace in the spatial domain space 1 is a spatial domain non-common subspace 1, a subspace other than the spatial domain common subspace in the spatial domain space 2 is a spatial domain non-common subspace 2, and a subspace other than the spatial domain common subspace in the spatial domain space 3 is a spatial domain non-common subspace 3. A part other than the frequency domain common subspace in a union of the frequency domain spaces is a frequency domain non-common subspace, where a subspace other than the frequency domain common subspace in the frequency domain space 1 is a frequency domain non-common subspace 1, a subspace other than the frequency domain common subspace in the frequency domain space 2 is a frequency domain non-common subspace 2, and a subspace other than the frequency domain common subspace in the frequency domain space 3 is a frequency domain non-common subspace 3.

If data can be exchanged between the TRP 1, the TRP 2, and the TRP 3, the UE 1 may feed back projection quantization information A of the spatial domain common subspace (which may be determined through projection for a basis formed by basis vectors used to quantize the spatial domain space 1 (or the spatial domain space 2 or the spatial domain space 3)) and projection quantization information B of the frequency domain common subspace (which may be determined for projection on a basis formed by basis vectors used to quantize the frequency domain space 1 (or the frequency domain space 2 or the frequency domain space 3)) to any one of the TRPs. If data cannot be exchanged between the TRP 1, the TRP 2, and the TRP 3 (which is used as an example to describe (e) in FIG. 13), the UE 1 may feed back the projection quantization information A of the spatial domain common subspace and the projection quantization information B of the frequency domain common subspace to each of the TRPs. In addition, the UE 1 may feed back projection quantization information a.1 of the spatial domain non-common subspace (which may be determined for projection of the spatial domain non-common subspace 1 on a basis formed by basis vectors used to quantize the spatial domain non-common subspace 1) and projection quantization information b.1 of the frequency domain non-common subspace (which may be determined for projection of the frequency domain non-common subspace 1 on a basis formed by basis vectors used to quantize the frequency domain non-common subspace 1) to the TRP 1. The UE 1 may feed back projection quantization information a.2 of the spatial domain non-common subspace (which may be determined for projection of the spatial domain non-common subspace 2 on a basis formed by basis vectors used to quantize the spatial domain non-common subspace 2) and projection quantization information b.2 of the frequency domain non-common subspace (which may be determined for projection of the frequency domain non-common subspace 2 on a basis formed by basis vectors used to quantize the frequency domain non-common subspace 2) to the TRP 2. The UE 1 may feed back projection quantization information a.3 of the spatial domain non-common subspace (which may be determined for projection of the spatial domain non-common subspace 3 on a basis formed by basis vectors used to quantize the spatial domain non-common subspace 3) and projection quantization information b.3 of the frequency domain non-common subspace (which may be determined for projection of the frequency domain non-common subspace 3 on a basis formed by basis vectors used to quantize the frequency domain non-common subspace 3) to the TRP 3. This is merely an example for description herein, and does not specifically limit a difference between the plurality of pieces of CSI.

During feedback of complex coefficients in Manner 1.2 of Implementation 1, (d) in FIG. 13 further shows a joint spatial-frequency domain common subspace and a joint spatial-frequency domain non-common subspace. The CSI 1 corresponds to a joint spatial-frequency domain space 1, the CSI 2 corresponds to a joint spatial-frequency domain space 2, and the CSI 3 corresponds to a joint spatial-frequency domain space 3. An intersection part of the joint spatial-frequency domain space 1, the joint spatial-frequency domain space 2, and the joint spatial-frequency domain space 3 is the joint spatial-frequency domain common subspace, and a part other than the joint spatial-frequency domain common subspace in a union of the joint spatial-frequency domain spaces is the joint spatial-frequency domain non-common subspace. A subspace other than the joint spatial-frequency domain common subspace in the joint spatial-frequency domain space 1 is a joint spatial-frequency domain non-common subspace 1, a subspace other than the joint spatial-frequency domain common subspace in the joint spatial-frequency domain space 2 is a joint spatial-frequency domain non-common subspace 2, and a subspace other than the joint spatial-frequency domain common subspace in the joint spatial-frequency domain space 3 is a joint spatial-frequency domain non-common subspace 3.

If data can be exchanged between the TRP 1, the TRP 2, and the TRP 3, the UE 1 may feed back projection quantization information C of the joint spatial-frequency domain common subspace (which may be determined for projection on a basis formed by basis vectors used to quantize the space 1 (or the space 2 or the space 3)) to any one of the TRPs. If data cannot be exchanged between the TRP 1, the TRP 2, and the TRP 3 (which is used as an example to describe (f) in FIG. 13), the UE 1 may feed back the projection quantization information C of the joint spatial-frequency domain common subspace to each of the TRPs. In addition, the UE 1 may feed back projection quantization information c.1 of the joint spatial-frequency domain non-common subspace (which may be determined for projection of the joint spatial-frequency domain non-common subspace 1 on a basis formed by basis vectors used to quantize the joint spatial-frequency domain non-common subspace 1) to the TRP 1. The UE 1 may feed back projection quantization information c.2 of the joint spatial-frequency domain non-common subspace (which may be determined for projection of the joint spatial-frequency domain non-common subspace 2 on a basis formed by basis vectors used to quantize the joint spatial-frequency domain non-common subspace 2) to the TRP 2. The UE 1 may feed back projection quantization information c.3 of the joint spatial-frequency domain non-common subspace (which may be determined for projection of the joint spatial-frequency domain non-common subspace 3 on a basis formed by basis vectors used to quantize the joint spatial-frequency domain non-common subspace 3) to the TRP 3. This is merely an example for description herein, and does not specifically limit a difference between the plurality of pieces of CSI. It should be understood that FIG. 13 shows only long-periodicity feedback coefficients, and a short-periodicity coefficient may be understood with reference to the foregoing description, and is not shown in FIG. 13. Feedback designed based on correlation between a plurality of pieces of CSI can reduce feedback overheads.

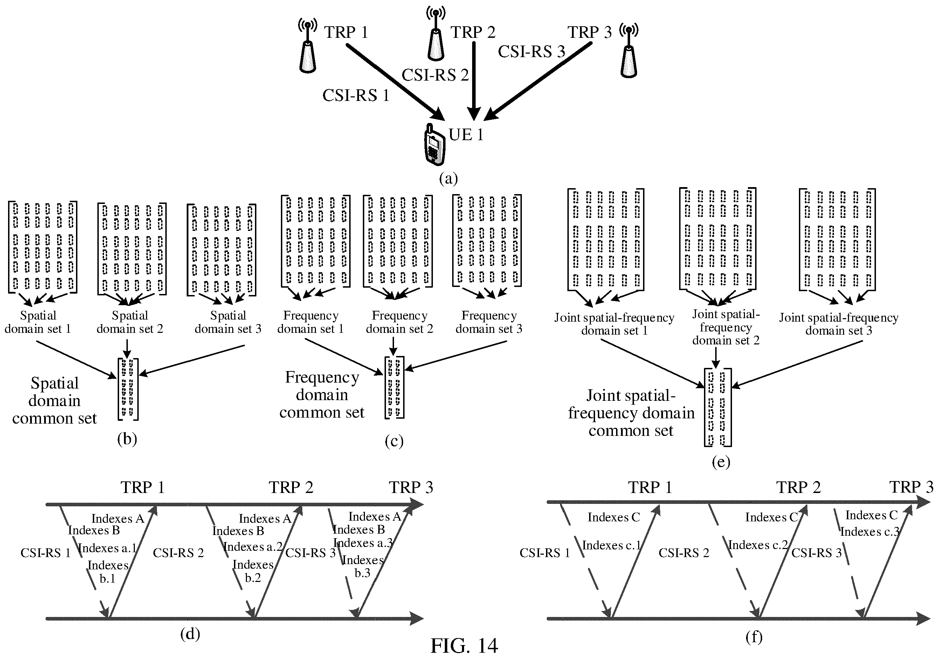

The following uses FIG. 14 as an example for description. (a) in FIG. 14 shows that a UE 1 needs to feed back CSI 1 when receiving a CSI-RS 1 from a TRP 1, and needs to feed back CSI 2 when receiving a CSI-RS 2 from a TRP 2, and needs to feed back CSI 3 when receiving a CSI-RS 3 from a TRP 3, where the CSI 1, the CSI 2, and the CSI 3 are associated in spatial domain.

During feedback of complex coefficients using sets in Manner 2.1 of Implementation 2, (b) and (c) in FIG. 14 further show a spatial domain common set and a frequency domain common set, respectively. The CSI 1 corresponds to a spatial domain set 1 and a frequency domain set 1, the CSI 2 corresponds to a spatial domain set 2 and a frequency domain set 2, and the CSI 3 corresponds to a spatial domain set 3 and a frequency domain set 3. An intersection part of the spatial domain set 1, the spatial domain set 2, and the spatial domain set 3 is a spatial domain common set. An intersection part of the frequency domain set 1, the frequency domain set 2, and the frequency domain set 3 is a frequency domain common set. A part other than the spatial domain common set in a union of the spatial domain sets is a spatial domain non-common set, where a set other than the spatial domain common set in the spatial domain set 1 is a spatial domain non-common set 1, a set other than the spatial domain common set in the spatial domain set 2 is a spatial domain non-common set 2, and a set other than the spatial domain common set in the spatial domain set 3 is a spatial domain non-common set 3. A part other than the frequency domain common set in a union of the frequency domain sets is a frequency domain non-common set, where a set other than the frequency domain common set in the frequency domain set 1 is a frequency domain non-common set 1, a set other than the frequency domain common set in the frequency domain set 2 is a frequency domain non-common set 2, and a set other than the frequency domain common set in the frequency domain set 3 is a frequency domain non-common set 3.

If data can be exchanged between the TRP 1, the TRP 2, and the TRP 3, the UE 1 may feed back codebook indexes A in the spatial domain common set and codebook indexes B in the frequency domain common set to any one of the TRPs. If data cannot be exchanged between the TRP 1, the TRP 2, and the TRP 3 (which is used as an example to describe (d) in FIG. 14), the UE 1 may feed back the codebook indexes A in the spatial domain common set and the codebook indexes B in the frequency domain common set to each of the TRPs. Then, the UE 1 may feed back codebook indexes a.1 corresponding to the spatial domain non-common set and codebook indexes b.1 corresponding to the frequency domain non-common set to the TRP 1. The UE 1 may feed back codebook indexes a.2 corresponding to the spatial domain non-common set and codebook indexes b.2 corresponding to the frequency domain non-common set to the TRP 2. The UE 1 may feed back codebook indexes a.3 corresponding to the spatial domain non-common set and codebook indexes b.3 corresponding to the frequency domain non-common set to the TRP 3. Herein, only an example is provided for description.

During feedback of complex coefficients using sets in Manner 2.2 of Implementation 2, in (e) in FIG. 14, the CSI 1 corresponds to a joint spatial-frequency domain set 1, the CSI 2 corresponds to a joint spatial-frequency domain set 2, and the CSI 3 corresponds to a joint spatial-frequency domain set 3. An intersection part of the joint spatial-frequency domain set 1, the joint spatial-frequency domain set 2, and the joint spatial-frequency domain set 3 is a joint spatial-frequency domain common set, where a set other than the joint spatial-frequency domain common set in the joint spatial-frequency domain set 1 is a joint spatial-frequency domain non-common set 1, a set other than the joint spatial-frequency domain common set in the joint spatial-frequency domain set 2 is a joint spatial-frequency domain non-common set 2, and a set other than the joint spatial-frequency domain common set in the joint spatial-frequency domain set 3 is a joint spatial-frequency domain non-common set 3. A part other than the joint spatial-frequency domain common set in a union of the joint spatial-frequency domain sets is a joint spatial-frequency domain non-common set, where a set other than the joint spatial-frequency domain common set in the joint spatial-frequency domain set 1 is a joint spatial-frequency domain non-common set 1, a set other than the joint spatial-frequency domain common set in the joint spatial-frequency domain set 2 is a joint spatial-frequency domain non-common set 2, and a set other than the joint spatial-frequency domain common set in the joint spatial-frequency domain set 3 is a joint spatial-frequency domain non-common set 3.

If data can be exchanged between the TRP 1, the TRP 2, and the TRP 3, the UE 1 may feed back codebook indexes C in the joint spatial-frequency domain common set to any one of the TRPs. If data cannot be exchanged between the TRP 1, the TRP 2, and the TRP 3 (which is used as an example to describe (f) in FIG. 14), the UE 1 may feed back the codebook indexes C in the joint spatial-frequency domain common set to each of the TRPs. Then, the UE 1 may feed back codebook indexes c.1 corresponding to the joint spatial-frequency domain non-common set to the TRP 1. The UE 1 may feed back codebook indexes c.2 corresponding to the joint spatial-frequency domain non-common set to the TRP 2. The UE 1 may feed back codebook indexes c.3 corresponding to the joint spatial-frequency domain non-common set to the TRP 3. This is merely an example for description herein, and does not specifically limit a difference between the plurality of pieces of CSI. FIG. 14 shows only long-periodicity feedback coefficients, and a short-periodicity coefficient may be understood with reference to the foregoing description, and is not shown in FIG. 14. Differential feedback based on a plurality of pieces of CSI can reduce feedback overheads.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in the form of a software functional unit.

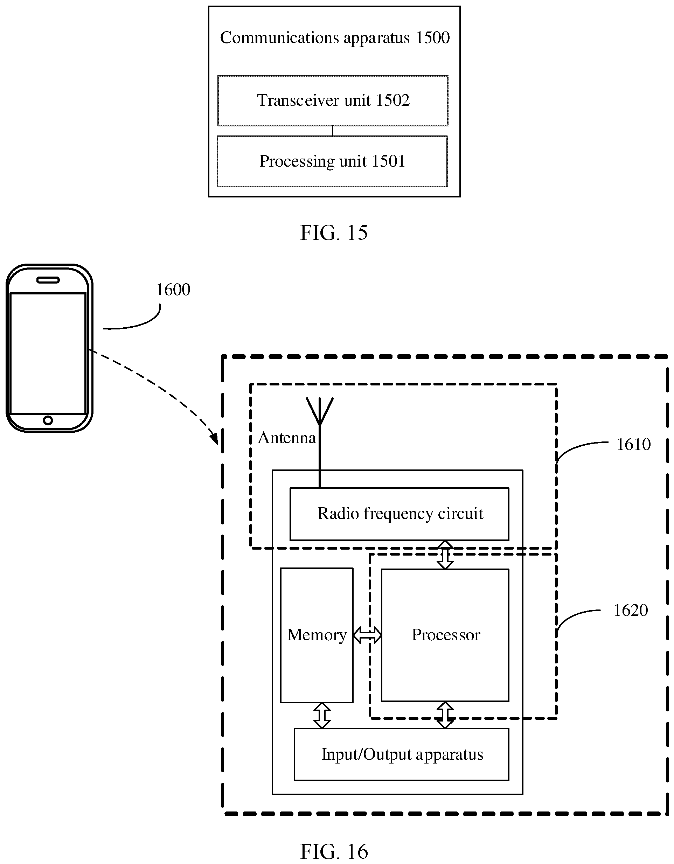

When an integrated unit is used, FIG. 15 is a possible example block diagram of a communications apparatus according to an embodiment of this application. As shown in FIG. 15, the communications apparatus 1500 may include a processing unit 1501 and a transceiver unit 1502. The processing unit 1501 is configured to control and manage actions of the communications apparatus 1500. The transceiver unit 1502 is configured to support communication between the communications apparatus 1500 and another device. Optionally, the transceiver unit 1502 may include a receiving unit and/or a sending unit, configured to perform a receiving operation and a sending operation, respectively. Optionally, the communications apparatus 1500 may further include a storage unit, configured to store program code and/or data of the communications apparatus 1500. The transceiver unit may be referred to as an input/output unit, a communications unit, or the like, and the transceiver unit may be a transceiver. The processing unit may be a processor. When the communications apparatus is a module (for example, a chip) in a communications device, the transceiver unit may be an input/output interface, an input/output circuit, an input/output pin, or the like, and may also be referred to as an interface, a communications interface, an interface circuit, or the like; and the processing unit may be a processor, a processing circuit, a logic circuit, or the like. Specifically, the apparatus may be the foregoing terminal device, a network device, or the like.

In an embodiment, the processing unit 1501 of the communications apparatus 1500 is configured to obtain first CSI and second CSI, and is further configured to determine reference information, where the reference information is determined based on the first CSI and the second CSI, the first CSI is correlated with the second CSI, the reference information includes first quantization information and second quantization information, the first quantization information includes projection quantization information of a common subspace, the second quantization information includes projection quantization information of a first non-common subspace, the common subspace includes an intersection of a first space for the first CSI and a second space for the second CSI, and the first non-common subspace includes a subspace other than the common subspace in the first space; and the transceiver unit 1502 is configured to send the reference information.

In another embodiment, the processing unit 1501 of the communications apparatus 1500 is configured to obtain second CSI; the transceiver unit 1502 is configured to receive reference information, where the reference information is determined based on first CSI and the second CSI, the first CSI is correlated with the second CSI, the reference information includes first quantization information and second quantization information, the first quantization information includes projection quantization information of a common subspace, the second quantization information includes projection quantization information of a first non-common subspace, the common subspace includes an intersection of a first space for the first CSI and a second space for the second CSI, and the first non-common subspace includes a subspace other than the common subspace in the first space; and the processing unit 1501 is configured to determine the first CSI based on the reference information and the second CSI.

In an optional manner, that the first CSI is correlated with the second CSI includes one or more of the following: the first CSI is associated with the second CSI in time domain, the first CSI is associated with the second CSI in spatial domain, or the first CSI is associated with the second CSI in frequency domain.

In an optional manner, one or more first basis vectors used to quantize the first space form a first basis, and one or more second basis vectors used to quantize the second space form a second basis.

In an optional manner, the projection quantization information of the common subspace includes a first projection quantization parameter of the common subspace on the second basis, and the projection quantization information of the first non-common subspace includes index information of a third basis vector forming a third basis and a second projection quantization parameter of the first non-common subspace on the third basis, where the third basis is formed by one or more third basis vectors used to quantize the first non-common subspace.

In an optional manner, the first space includes a first spatial domain space and a first frequency domain space, the second space includes a second spatial domain space and a second frequency domain space, the common subspace includes a spatial domain common subspace and a frequency domain common subspace, the first basis includes a first spatial domain basis and a first frequency domain basis, the second basis includes a second spatial domain basis and a second frequency domain basis, the third basis includes a third spatial domain basis and a third frequency domain basis, the first non-common subspace includes a first spatial domain non-common subspace and a first frequency domain non-common subspace, the spatial domain common subspace includes an intersection of the first spatial domain space and the second spatial domain space, the frequency domain common subspace includes an intersection of the first frequency domain space and the second frequency domain space, the first spatial domain non-common subspace includes a subspace other than the spatial domain common subspace in the first spatial domain space, the first frequency domain non-common subspace includes a subspace other than the frequency domain common subspace in the first frequency domain space, the third basis vector includes a third spatial domain basis vector and a third frequency domain basis vector, the third spatial domain basis is formed by one or more third spatial domain basis vectors used to quantize the first spatial domain non-common subspace, and the third frequency domain basis is formed by one or more third frequency domain basis vectors used to quantize the first frequency domain non-common subspace; and

the projection quantization information of the common subspace includes a projection quantization parameter of the spatial domain common subspace on the second spatial domain basis and a projection quantization parameter of the frequency domain common subspace on the second frequency domain basis, and the projection quantization information of the first non-common subspace includes index information of the third spatial domain basis vector forming the third spatial domain basis, index information of the third frequency domain basis vector forming the third frequency domain basis, a projection quantization parameter of the first spatial domain non-common subspace on the third spatial domain basis, and a projection quantization parameter of the first frequency domain non-common subspace on the third frequency domain basis.

In an optional manner, the spatial domain common subspace is determined based on a projection matrix of the first spatial domain space and a projection matrix of the second spatial domain space, the frequency domain common subspace is determined based on a projection matrix of the first frequency domain space and a projection matrix of the second frequency domain space, the first spatial domain non-common subspace includes a subspace of the first spatial domain space that is orthogonal to the spatial domain common subspace, and the first frequency domain non-common subspace includes a subspace of the first frequency domain space that is orthogonal to the frequency domain common subspace; the projection quantization parameter of the spatial domain common subspace on the second spatial domain basis is determined by quantizing a projection coefficient of the spatial domain common subspace on a quantization basis of the second spatial domain basis; the projection quantization parameter of the frequency domain common subspace on the second frequency domain basis is determined by quantizing a projection coefficient of the frequency domain common subspace on a quantization basis of the second frequency domain basis; the projection quantization parameter of the first spatial domain non-common subspace on the third spatial domain basis is determined by quantizing a projection coefficient of the first spatial domain common subspace on the third spatial domain basis; and the projection quantization parameter of the first frequency domain non-common subspace on the third frequency domain basis is determined by quantizing a projection coefficient of the first frequency domain common subspace on the third frequency domain basis.

In an optional manner, the first space includes a first joint spatial-frequency domain space, the second space includes a second joint spatial-frequency domain space, the common subspace includes a joint spatial-frequency domain common subspace, the first basis includes a first joint spatial-frequency domain basis, the second basis includes a second joint spatial-frequency domain basis, the third basis includes a third joint spatial-frequency domain basis, the first non-common subspace includes a first joint spatial-frequency domain non-common subspace, the joint spatial-frequency domain common subspace includes an intersection of the first joint spatial-frequency domain space and the second joint spatial-frequency domain space, the first joint spatial-frequency domain non-common subspace includes a subspace other than the joint spatial-frequency domain common subspace in the first joint spatial-frequency domain space, the third basis vector includes a third joint spatial-frequency domain basis vector, and the third joint spatial-frequency domain basis is formed by one or more third joint spatial-frequency domain basis vectors used to quantize the first joint spatial-frequency domain non-common subspace; and

the projection quantization information of the common subspace includes a projection quantization parameter of the joint spatial-frequency domain common subspace on the second joint spatial-frequency domain basis, and the projection quantization information of the first non-common subspace includes index information of the third joint spatial-frequency domain basis vector forming the third joint spatial-frequency domain basis and a projection quantization parameter of the first joint spatial-frequency domain non-common subspace on the third joint spatial-frequency domain basis.

In an optional manner, the joint spatial-frequency domain common subspace is determined based on a projection matrix of the first joint spatial-frequency domain space and a projection matrix of the second joint spatial-frequency domain space, and the first joint spatial-frequency domain non-common subspace includes a subspace of the first joint spatial-frequency domain space that is orthogonal to the joint spatial-frequency domain common subspace; the projection quantization parameter of the joint spatial-frequency domain common subspace on the second joint spatial-frequency domain basis is determined by quantizing a projection coefficient of the joint spatial-frequency domain common subspace on a quantization basis of the second joint spatial-frequency domain basis; and the projection quantization parameter of the first joint spatial-frequency domain non-common subspace on the third joint spatial-frequency domain basis is determined by quantizing a second projection coefficient of the first joint spatial-frequency domain non-common subspace on the third spatial domain basis.

In an optional manner, the first basis, the second basis, and the third basis are bases of a same type, and the bases of the same type include one or a combination of the following:

a spatial domain basis, an angular domain basis, a frequency domain basis, a delay domain basis, a time domain basis, or a Doppler domain basis.

In an optional manner, the first basis vector, the second basis vector, and the third basis vector are basis vectors of a same type, and the basis vectors of the same type include one of the following:

a DFT basis vector, an FFT basis vector, an oversampled DFT basis vector, an oversampled FFT basis vector, a vector determined based on a preset rule, or a basis vector determined based on the second CSI.

In still another embodiment, the processing unit 1501 of the communications apparatus 1500 is configured to obtain first CSI and second CSI, and is further configured to determine reference information, where the reference information is determined based on the first CSI and the second CSI, the first CSI is correlated with the second CSI, the reference information includes index information of basis vectors forming a third set and a third projection quantization parameter of a first basis on a fourth basis, the fourth basis includes a basis corresponding to a fourth space, the fourth space includes a union of a second space used to quantize the second CSI and a space formed by basis vectors corresponding to the third set, the index information of the basis vectors of the third set belongs to a first set but does not belong to a second set, the first set is formed by index information of basis vectors for projection quantization of the first basis, the second set is formed by index information of basis vectors for projection quantization of a second basis, the first basis is formed by one or more first basis vectors used to quantize a first space for the first CSI, and the second basis is formed by one or more second basis vectors used to quantize a second space; and the transceiver unit 1502 is configured to send the reference information.

In yet another embodiment, the transceiver unit 1502 of the communications apparatus 1500 is configured to obtain second CSI, and receive reference information, where the reference information is determined based on first CSI and the second CSI, the first CSI is correlated with the second CSI, the reference information includes index information of basis vectors forming a third set and a third projection quantization parameter of a first basis on a fourth basis, the fourth basis includes a basis corresponding to a fourth space, the fourth space includes a union of a second space used to quantize the second CSI and a space formed by basis vectors corresponding to the third set, the index information of the basis vectors of the third set belongs to a first set but does not belong to a second set, the first set is formed by index information of basis vectors for projection quantization of the first basis, the second set is formed by index information of basis vectors for projection quantization of a second basis, the first basis is formed by one or more first basis vectors used to quantize a first space for the first CSI, and the second basis is formed by one or more second basis vectors used to quantize a second space; and the processing unit 1501 is configured to determine the first CSI based on the reference information and the second CSI.

In an optional manner, the first basis includes the first spatial domain basis and the first frequency domain basis, the second basis includes the second spatial domain basis and the second frequency domain basis, the fourth basis includes a fourth spatial domain basis and a fourth frequency domain basis, the first set includes a first spatial domain set and a first frequency domain set, the second set includes a second spatial domain set and a second frequency domain set, the third set includes a third spatial domain set and a third frequency domain set, the fourth space includes a fourth spatial domain space and a fourth frequency domain space, the first space includes the first spatial domain space and the first frequency domain space, and the second space includes a second spatial domain space and a second frequency domain space.

The reference information includes index information of the basis vectors forming the third spatial domain set, index information of the basis vectors forming the third frequency domain set, a projection quantization parameter of the first spatial domain basis on the fourth spatial domain basis, and a projection quantization parameter of the first frequency domain basis on the fourth spatial domain basis. The second spatial domain set is formed by codebook indexes used to project the second spatial domain basis. The second frequency domain set is formed by codebook indexes used to project the second frequency domain basis. The first spatial domain set is formed by codebook indexes used to project the first spatial domain basis. The first frequency domain set is formed by codebook indexes used to project the first frequency domain basis. The third spatial domain set is formed by codebook indexes that are in the first spatial domain set but are not in the second spatial domain set; the third frequency domain set is formed by codebook indexes that are in the first frequency domain set but are not in the second frequency domain set; the fourth spatial domain space is determined through orthogonalization of the second spatial domain space and a space formed by basis vectors corresponding to the third spatial domain set; and the fourth frequency domain space is determined through orthogonalization of the second frequency domain space and a space formed by basis vectors corresponding to the third frequency domain set.

The projection quantization parameter of the first spatial domain basis on the fourth spatial domain basis is determined by quantizing the projection coefficient of the first spatial domain basis on the fourth spatial domain basis. The projection quantization parameter of the first frequency domain basis on the fourth frequency domain basis is determined by quantizing the projection coefficient of the first frequency domain basis on the fourth frequency domain basis.

In an optional manner, the first basis includes a first joint spatial-frequency domain basis, the second basis includes a second joint spatial-frequency domain basis, the fourth basis includes a fourth joint spatial-frequency domain basis, the first set includes a first joint spatial-frequency domain set, the second set includes a second joint spatial-frequency domain set, the third set includes a third joint spatial-frequency domain set, the fourth space includes a fourth joint spatial-frequency domain space, the first space includes a first joint spatial-frequency domain space, and the second space includes a second joint spatial-frequency domain space.

The reference information includes index information of the basis vectors forming the third joint spatial-frequency domain set and the projection quantization parameter of the first joint spatial-frequency domain basis on the fourth joint spatial-frequency domain basis. The second joint spatial-frequency domain set is formed by codebook indexes used to project the second joint spatial-frequency domain basis. The first joint spatial-frequency domain set is formed by codebook indexes used to project the first joint spatial-frequency domain basis. The third joint spatial-frequency domain set is formed by codebook indexes that are in the first joint spatial-frequency domain set but are not in the second joint spatial-frequency domain set. The fourth joint spatial-frequency domain space is determined through orthogonalization of the second joint spatial-frequency domain space and the space formed by the basis vectors corresponding to the third joint spatial-frequency domain set.

The projection quantization parameter of the first joint spatial-frequency domain basis on the fourth joint spatial-frequency domain basis is determined by quantizing the projection coefficient of the first joint spatial-frequency domain basis on the fourth joint spatial-frequency domain basis.

In an optional manner, the first basis, the second basis, and the fourth basis are bases of the same type, and the bases of the same type include one or a combination of the following:

a spatial domain basis, an angular domain basis, a frequency domain basis, a delay domain basis, a time domain basis, or a Doppler domain basis.

In an optional manner, the first basis vector, the second basis vector, and the fourth basis vector are basis vectors of the same type, and the basis vectors of the same type include one of the following:

a DFT basis vector, an FFT basis vector, an oversampled DFT basis vector, an oversampled FFT basis vector, a vector determined based on a preset rule, or a basis vector determined based on the second CSI.

In an optional manner, that the first CSI is correlated with the second CSI includes one or more of the following: the first CSI is associated with the second CSI in time domain, the first CSI is associated with the second CSI in spatial domain, or the first CSI is associated with the second CSI in frequency domain.

In addition, FIG. 16 is a diagram of a structure of a simplified terminal device according to this application. For ease of understanding and illustration, an example in which the terminal device is a mobile phone is used in FIG. 16. As shown in FIG. 16, the terminal device includes a processor, a memory, a radio frequency circuit, an antenna, and an input/output apparatus.

The processor is mainly configured to: process a communications protocol and communications data, control the terminal device, execute a software program, process data of the software program, and the like.

The memory is mainly configured to store the software program and data.

The radio frequency circuit is mainly configured to: perform conversion between a baseband signal and a radio frequency signal, and process the radio frequency signal.

The antenna is mainly configured to receive and send a radio frequency signal in the form of an electromagnetic wave.

The input/output apparatus, such as a touchscreen, a display, or a keyboard, is mainly configured to receive data input by a user and output data to the user.

It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in the form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

For ease of description, only one memory and one processor are shown in FIG. 16. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 16, the terminal device 1600 includes a transceiver unit 1610 and a processing unit 1620. The transceiver unit 1610 may also be referred to as a transceiver, a transceiver machine, a transceiver apparatus, or the like. The processing unit 1620 may also be referred to as a processor, a processing board, a processing module, a processing apparatus, or the like.

Optionally, a component that is in the transceiver unit 1610 and that is configured to implement a receiving function may be considered as a receiving unit, and a component that is in the transceiver unit 1610 and that is configured to implement a sending function may be considered as a sending unit. In other words, the transceiver unit 1610 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1610 is configured to perform a sending operation and a receiving operation of the terminal device in the foregoing method embodiments, and the processing unit 1620 is configured to perform an operation other than the sending and receiving operations of the terminal device in the foregoing method embodiments.

When the terminal device is a chip, the chip includes the transceiver unit 1610 and the processing unit 1620. The transceiver unit 1610 may be an input/output circuit or a communications interface. The processing unit 1620 is a processor, a microprocessor, an integrated circuit, or a logic circuit integrated on the chip.

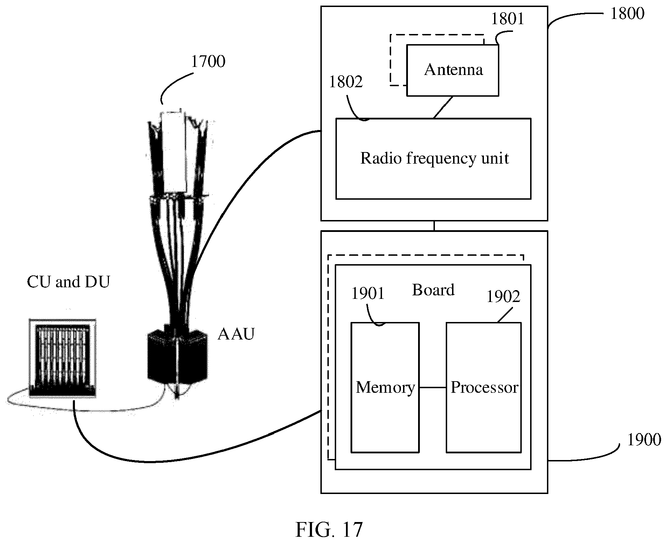

This application further provides a network device. FIG. 17 is a diagram of a structure of a network device 1700 according to an embodiment of this application. The network device 1700 may be applied to the system shown in FIG. 1. For example, the network device 1700 may be the network device in the system shown in FIG. 1, and is configured to perform the functions of the network device in the foregoing method embodiments. It should be understood that the following is merely an example. In a future communications system, the network device may have another form and composition.

For example, in a 5G communications system, the network device 1700 may include a CU, a DU, and an AAU. Compared with a network device in an LTE communications system that includes one or more radio frequency domain units, for example, a remote radio unit (remote radio unit, RRU) and one or more building baseband units (building baseband unit, BBU),

a non-real-time part of the original BBU is split off and redefined as the CU, which is responsible for processing non-real-time protocols and services, some physical layer processing functions of the BBU are combined with the original RRU and a passive antenna into the AAU, and remaining functions of the BBU are redefined as the DU, which is responsible for processing physical layer protocols and real-time services. In short, the CU and the DU are distinguished based on real-time performance of processed content, and the AAU is a combination of the RRU and the antenna.

The CU, the DU, and the AAU may be deployed separately or together. Therefore, there may be a plurality of network deployment forms. A possible deployment form, as shown in FIG. 17, is consistent with that of a conventional 4G network device. The CU and the DU are deployed on the same hardware. It should be understood that FIG. 17 is merely an example, and constitutes no limitation on the scope of protection of this application. For example, a deployment form may alternatively be that DUs are deployed in a BBU equipment room, CUs or DUs are deployed together, or CUs are centralized at a higher level.

The AAU 1800 may implement a receiving and sending function, corresponding to the transceiver unit 1502 in FIG. 15. Optionally, the AAU 1800 may also be referred to as a transceiver machine, a transceiver circuit, a transceiver, or the like, and may include at least one antenna 1801 and a radio frequency domain unit 1802. Optionally, the AAU 1800 may include a receiving unit and a sending unit. The receiving unit may correspond to a receiver (or referred to as a receiving machine or a receiving circuit), and the sending unit may correspond to a transmitter (or referred to as a transmitting machine or a transmitting circuit). The CU and DU 1900 may implement an internal processing function, corresponding to the processing unit 1501 in FIG. 15. Optionally, the CU and DU 1900 may control the network device, and may be referred to as a controller. The AAU and the CU and DU may be physically disposed together, or may be physically disposed separately.

In addition, the network device is not limited to the form shown in FIG. 17, and may also be in another form. For example, the network device includes a BBU and an adaptive radio unit (adaptive radio unit, ARU), or includes a BBU and an AAU; or may be a customer premises equipment (customer premises equipment, CPE), or may be in another form. This is not limited in this application.

In an example, the CU and DU 1900 may include one or more boards. A plurality of boards may jointly support a radio access network (such as an LTE network) of a single access standard, or may separately support radio access networks (such as an LTE network, a 5G network, a future network, or another network) of different access standards. The CU and DU 1900 further includes a memory 1901 and a processor 1902. The memory 1901 is configured to store necessary instructions and data. The processor 1902 is configured to control the network device to perform a necessary action, for example, is configured to control the network device to perform an operation procedure related to the network device in the foregoing method embodiments. The memory 1901 and the processor 1902 may serve one or more boards. In other words, a memory and a processor may be disposed on each board. Alternatively, a plurality of boards may share a same memory and a same processor. In addition, a necessary circuit may further be disposed on each board.

It should be understood that the network device 1700 shown in FIG. 17 can implement the functions of the network device in the method embodiment of FIG. 9. Operations and/or functions of the units in the network device 1700 are intended to implement corresponding procedures performed by the network device in the method embodiments of this application. To avoid repetition, detailed descriptions are appropriately omitted herein. The structure of the network device shown in FIG. 17 is merely a possible form, and shall not constitute any limitation on embodiments of this application. This application does not exclude a possibility that there may be a network device structure in another form in the future.

The CU and DU 1900 may be configured to perform an action that is implemented inside the network device and that is described in the foregoing method embodiments, and the AAU 1800 may be configured to perform an action of receiving or sending that is performed by the network device from or to the terminal device and that is described in the foregoing method embodiments. For details, refer to the descriptions in the foregoing method embodiments. Details are not described herein again.

An embodiment of this application further provides a communications system. The communications system includes a terminal device and a network device. The terminal device is configured to perform all or some of the steps performed by the terminal device in the embodiment shown in FIG. 9. The network device is configured to perform all or some of the steps performed by the network device in the embodiment shown in FIG. 9.

Based on the foregoing embodiments, embodiments of this application further provide a readable storage medium. The readable storage medium stores instructions. When the instructions are executed, the method in any one of the foregoing embodiments is implemented. The readable storage medium may include any medium that can store program code, such as a USB flash drive, a removable hard disk, a read-only memory, a random access memory, a magnetic disk, or an optical disc.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a compact disc read-only memory (compact disc read-only memory, CD-ROM), an optical memory, and the like) that include computer-usable program code.

This application is described with reference to the flowcharts and/or the block diagrams of the method, the apparatus (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general purpose computer, a dedicated computer, an embedded processor, or a processor of another programmable data processing apparatus to generate a machine, so that the instructions executed by a computer or the processor of any other programmable data processing apparatus generate an apparatus for implementing a specific function in one or more procedures in the flowcharts and/or in one or more blocks in the block diagrams.

These computer program instructions may be alternatively stored in a computer-readable memory that can indicate the computer or another programmable data processing apparatus to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more procedures in the flowcharts and/or in one or more blocks in the block diagrams.

## Claims

1. A channel state information reporting method, comprising:

   obtaining first channel state information CSI and second CSI;
   determining reference information, wherein the reference information is determined based on the first CSI and the second CSI, the first CSI is correlated with the second CSI, the reference information comprises first quantization information and second quantization information, the first quantization information comprises projection quantization information of a common subspace, the second quantization information comprises projection quantization information of a first non-common subspace, the common subspace comprises an intersection of a first space used to quantize the first CSI and a second space used to quantize the second CSI, and the first non-common subspace comprises a subspace other than the common subspace in the first space; and
   sending the reference information.

2. A channel state information reporting method, comprising:

   obtaining second channel state information CSI;
   receiving reference information, wherein the reference information is determined based on first CSI and the second CSI, the first CSI is correlated with the second CSI, the reference information comprises first quantization information and second quantization information, the first quantization information comprises projection quantization information of a common subspace, the second quantization information comprises projection quantization information of a first non-common subspace, the common subspace comprises an intersection of a first space used to quantize the first CSI and a second space used to quantize the second CSI, and the first non-common subspace comprises a subspace other than the common subspace in the first space; and

determining the first CSI based on the reference information and the second CSI.

3. The method according to claim 1 or 2, wherein one or more first basis vectors used to quantize the first space form a first basis, and one or more second basis vectors used to quantize the second space form a second basis.

4. The method according to claim 3, wherein the projection quantization information of the common subspace comprises a projection quantization parameter of the common subspace on the second basis, and the projection quantization information of the first non-common subspace comprises index information of a third basis vector forming a third basis and a projection quantization parameter of the first non-common subspace on the third basis, wherein the third basis is formed by one or more third basis vectors used to quantize the first non-common subspace.

5. The method according to claim 4, wherein the first space comprises a first spatial domain space and a first frequency domain space, the second space comprises a second spatial domain space and a second frequency domain space, the common subspace comprises a spatial domain common subspace and a frequency domain common subspace, the first basis comprises a first spatial domain basis and a first frequency domain basis, the second basis comprises a second spatial domain basis and a second frequency domain basis, the third basis comprises a third spatial domain basis and a third frequency domain basis, the first non-common subspace comprises a first spatial domain non-common subspace and a first frequency domain non-common subspace, the spatial domain common subspace comprises an intersection of the first spatial domain space and the second spatial domain space, the frequency domain common subspace comprises an intersection of the first frequency domain space and the second frequency domain space, the first spatial domain non-common subspace comprises a subspace other than the spatial domain common subspace in the first spatial domain space, the first frequency domain non-common subspace comprises a subspace other than the frequency domain common subspace in the first frequency domain space, the third basis vector comprises a third spatial domain basis vector and a third frequency domain basis vector, the third spatial domain basis is formed by one or more third spatial domain basis vectors used to quantize the first spatial domain non-common subspace, and the third frequency domain basis is formed by one or more third frequency domain basis vectors used to quantize the first frequency domain non-common subspace; and

the projection quantization information of the common subspace comprises a projection quantization parameter of the spatial domain common subspace on the second spatial domain basis and a projection quantization parameter of the frequency domain common subspace on the second frequency domain basis, and the projection quantization information of the first non-common subspace comprises index information of the third spatial domain basis vector forming the third spatial domain basis, index information of the third frequency domain basis vector forming the third frequency domain basis, a projection quantization parameter of the first spatial domain non-common subspace on the third spatial domain basis, and a projection quantization parameter of the first frequency domain non-common subspace on the third frequency domain basis.

6. The method according to claim 5, wherein the spatial domain common subspace is determined based on a projection matrix of the first spatial domain space and a projection matrix of the second spatial domain space, the frequency domain common subspace is determined based on a projection matrix of the first frequency domain space and a projection matrix of the second frequency domain space, the first spatial domain non-common subspace comprises a subspace of the first spatial domain space that is orthogonal to the spatial domain common subspace, and the first frequency domain non-common subspace comprises a subspace of the first frequency domain space that is orthogonal to the frequency domain common subspace;

the projection quantization parameter of the spatial domain common subspace on the second spatial domain basis is determined by quantizing a projection coefficient of the spatial domain common subspace on a quantization basis of the second spatial domain basis;

the projection quantization parameter of the frequency domain common subspace on the second frequency domain basis is determined by quantizing a projection coefficient of the frequency domain common subspace on a quantization basis of the second frequency domain basis;

the projection quantization parameter of the first spatial domain non-common subspace on the third spatial domain basis is determined by quantizing a projection coefficient of the first spatial domain common subspace on the third spatial domain basis; and
the projection quantization parameter of the first frequency domain non-common subspace on the third frequency domain basis is determined by quantizing a projection coefficient of the first frequency domain common subspace on the third frequency domain basis.

7. The method according to claim 4, wherein the first space comprises a first joint spatial-frequency domain space, the second space comprises a second joint spatial-frequency domain space, the common subspace comprises a joint spatial-frequency domain common subspace, the first basis comprises a first joint spatial-frequency domain basis, the second basis comprises a second joint spatial-frequency domain basis, the third basis comprises a third joint spatial-frequency domain basis, the first non-common subspace comprises a first joint spatial-frequency domain non-common subspace, the joint spatial-frequency domain common subspace comprises an intersection of the first joint spatial-frequency domain space and the second joint spatial-frequency domain space, the first joint spatial-frequency domain non-common subspace comprises a subspace other than the joint spatial-frequency domain common subspace in the first joint spatial-frequency domain space, the third basis vector comprises a third joint spatial-frequency domain basis vector, and the third joint spatial-frequency domain basis is formed by one or more third joint spatial-frequency domain basis vectors used to quantize the first joint spatial-frequency domain non-common subspace; and
the projection quantization information of the common subspace comprises a projection quantization parameter of the joint spatial-frequency domain common subspace on the second joint spatial-frequency domain basis, and the projection quantization information of the first non-common subspace comprises index information of the third joint spatial-frequency domain basis vector forming the third joint spatial-frequency domain basis and a projection quantization parameter of the first joint spatial-frequency domain non-common subspace on the third joint spatial-frequency domain basis.

8. The method according to claim 7, wherein the joint spatial-frequency domain common subspace is determined based on a projection matrix of the first joint spatial-frequency domain space and a projection matrix of the second joint spatial-frequency domain space, and the first joint spatial-frequency domain non-common subspace comprises a subspace of the first joint spatial-frequency domain space that is orthogonal to the joint spatial-frequency domain common subspace;

the projection quantization parameter of the joint spatial-frequency domain common subspace on the second joint spatial-frequency domain basis is determined by quantizing a projection coefficient of the joint spatial-frequency domain common subspace on a quantization basis of the second joint spatial-frequency domain basis; and
the projection quantization parameter of the first joint spatial-frequency domain non-common subspace on the third joint spatial-frequency domain basis is determined by quantizing a second projection coefficient of the first joint spatial-frequency domain non-common subspace on the third spatial domain basis.

9. The method according to any one of claims 4 to 8, wherein the first basis, the second basis, and the third basis are bases of a same type, and the bases of the same type comprise one or a combination of the following:
a spatial domain basis, an angular domain basis, a frequency domain basis, a delay domain basis, a time domain basis, or a Doppler domain basis.

10. The method according to any one of claims 4 to 9, wherein the first basis vector, the second basis vector, and the third basis vector are basis vectors of a same type, and the basis vectors of the same type comprise one of the following:
a discrete Fourier transform DFT basis vector, a fast Fourier transform FFT basis vector, an oversampled DFT basis vector, an oversampled FFT basis vector, a vector determined based on a preset rule, or a basis vector determined based on the second CSI.

11. The method according to any one of claims 1 to 10, wherein that the first CSI is correlated with the second CSI comprises one or more of the following:
the first CSI is associated with the second CSI in time domain, the first CSI is associated with the second CSI in spatial domain, or the first CSI is associated with the second CSI in frequency domain.

12. A communications apparatus, comprising:

a processing unit, configured to obtain first channel state information CSI and second CSI, wherein the processing unit is further configured to determine reference information, wherein the reference information is determined based on the first CSI and the second CSI, the first CSI is correlated with the second CSI, the reference information comprises first quantization information and second quantization information, the first quantization information comprises projection quantization information of a common subspace, the second quantization information comprises projection quantization information of a first non-common subspace, the common subspace comprises an intersection of a first space used to quantize the first CSI and a second space used to quantize the second CSI, and the first non-common subspace comprises a subspace other than the common subspace in the first space; and
a transceiver unit, configured to send the reference information.

13. A communications apparatus, comprising:

a processing unit, configured to obtain second channel state information CSI; and
a transceiver unit, configured to receive reference information, wherein the reference information is determined based on first CSI and the second CSI, the first CSI is correlated with the second CSI, the reference information comprises first quantization information and second quantization information, the first quantization information comprises projection quantization information of a common subspace, the second quantization information comprises projection quantization information of a first non-common subspace, the common subspace comprises an intersection of a first space used to quantize the first CSI and a second space used to quantize the second CSI, and the first non-common subspace comprises a subspace other than the common subspace in the first space, wherein
the processing unit is further configured to determine the first CSI based on the reference information and the second CSI.

14. The apparatus according to claim 12 or 13, wherein one or more first basis vectors used to quantize the first space form a first basis, and one or more second basis vectors used to quantize the second space form a second basis.

15. The apparatus according to claim 14, wherein the projection quantization information of the common subspace comprises a projection quantization parameter of the common subspace on the second basis, and the projection quantization information of the first non-common subspace comprises index information of a third basis vector forming a third basis and a projection quantization parameter of the first non-common subspace on the third basis, wherein the third basis is formed by one or more third basis vectors used to quantize the first non-common subspace.

16. The apparatus according to claim 15, wherein the first space comprises a first spatial domain space and a first frequency domain space, the second space comprises a second spatial domain space and a second frequency domain space, the common subspace comprises a spatial domain common subspace and a frequency domain common subspace, the first basis comprises a first spatial domain basis and a first frequency domain basis, the second basis comprises a second spatial domain basis and a second frequency domain basis, the third basis comprises a third spatial domain basis and a third frequency domain basis, the first non-common subspace comprises a first spatial domain non-common subspace and a first frequency domain non-common subspace, the spatial domain common subspace comprises an intersection of the first spatial domain space and the second spatial domain space, the frequency domain common subspace comprises an intersection of the first frequency domain space and the second frequency domain space, the first spatial domain non-common subspace comprises a subspace other than the spatial domain common subspace in the first spatial domain space, the first frequency domain non-common subspace comprises a subspace other than the frequency domain common subspace in the first frequency domain space, the third basis vector comprises a third spatial domain basis vector and a third frequency domain basis vector, the third spatial domain basis is formed by one or more third spatial domain basis vectors used to quantize the first spatial domain non-common subspace, and the third frequency domain basis is formed by one or more third frequency domain basis vectors used to quantize the first frequency domain non-common subspace; and
the projection quantization information of the common subspace comprises a projection quantization parameter of the spatial domain common subspace on the second spatial domain basis and a projection quantization parameter of the frequency domain common subspace on the second frequency domain basis, and the projection quantization information of the first non-common subspace comprises index information of the third spatial domain basis vector forming the third spatial domain basis, index information of the third frequency domain basis vector forming the third frequency domain basis, a projection quantization parameter of the first spatial domain non-common subspace on the third spatial domain basis, and a projection quantization parameter of the first frequency domain non-common subspace on the third frequency domain basis.

17. The apparatus according to claim 16, wherein the spatial domain common subspace is determined based on a projection matrix of the first spatial domain space and a projection matrix of the second spatial domain space, the frequency domain common subspace is determined based on a projection matrix of the first frequency domain space and a projection matrix of the second frequency domain space, the first spatial domain non-common subspace comprises a subspace of the first spatial domain space that is orthogonal to the spatial domain common subspace, and the first frequency domain non-common subspace comprises a subspace of the first frequency domain space that is orthogonal to the frequency domain common subspace;

the projection quantization parameter of the spatial domain common subspace on the second spatial domain basis is determined by quantizing a projection coefficient of the spatial domain common subspace on a quantization basis of the second spatial domain basis;
the projection quantization parameter of the frequency domain common subspace on the second frequency domain basis is determined by quantizing a projection coefficient of the frequency domain common subspace on a quantization basis of the second frequency domain basis;
the projection quantization parameter of the first spatial domain non-common subspace on the third spatial domain basis is determined by quantizing a projection coefficient of the first spatial domain common subspace on the third spatial domain basis; and
the projection quantization parameter of the first frequency domain non-common subspace on the third frequency domain basis is determined by quantizing a projection coefficient of the first frequency domain common subspace on the third frequency domain basis.

18. The apparatus according to claim 15, wherein the first space comprises a first joint spatial-frequency domain space, the second space comprises a second joint spatial-frequency domain space, the common subspace comprises a joint spatial-frequency domain common subspace, the first basis comprises a first joint spatial-frequency domain basis, the second basis comprises a second joint spatial-frequency domain basis, the third basis comprises a third joint spatial-frequency domain basis, the first non-common subspace comprises a first joint spatial-frequency domain non-common subspace, the joint spatial-frequency domain common subspace comprises an intersection of the first joint spatial-frequency domain space and the second joint spatial-frequency domain space, the first joint spatial-frequency domain non-common subspace comprises a subspace other than the joint spatial-frequency domain common subspace in the first joint spatial-frequency domain space, the third basis vector comprises a third joint spatial-frequency domain basis vector, and the third joint spatial-frequency domain basis is formed by one or more third joint spatial-frequency domain basis vectors used to quantize the first joint spatial-frequency domain non-common subspace; and
the projection quantization information of the common subspace comprises a projection quantization parameter of the joint spatial-frequency domain common subspace on the second joint spatial-frequency domain basis, and the projection quantization information of the first non-common subspace comprises index information of the third joint spatial frequency domain basis vector forming the third joint spatial-frequency domain basis and a projection quantization parameter of the first joint spatial-frequency domain non-common subspace on the third joint spatial-frequency domain basis.

19. The apparatus according to claim 18, wherein the joint spatial-frequency domain common subspace is determined based on a projection matrix of the first joint spatial-frequency domain space and a projection matrix of the second joint spatial-frequency domain space, and the first joint spatial-frequency domain non-common subspace comprises a subspace of the first joint spatial-frequency domain space that is orthogonal to the joint spatial-frequency domain common subspace;

the projection quantization parameter of the joint spatial-frequency domain common subspace on the second joint spatial-frequency domain basis is determined by quantizing a projection coefficient of the joint spatial-frequency domain common subspace on a quantization basis of the second joint spatial-frequency domain basis; and
the projection quantization parameter of the first joint spatial-frequency domain non-common subspace on the third joint spatial-frequency domain basis is determined by quantizing a second projection coefficient of the first joint spatial-frequency domain non-common subspace on the third joint spatial domain basis.

20. The apparatus according to any one of claims 15 to 19, wherein the first basis, the second basis, and the third basis are bases of a same type, and the bases of the same type comprise one or a combination of the following:
a spatial domain basis, an angular domain basis, a frequency domain basis, a delay domain basis, a time domain basis, or a Doppler domain basis.

21. The apparatus according to any one of claims 15 to 20, wherein the first basis vector, the second basis vector, and the third basis vector are basis vectors of a same type, and the basis vectors of the same type comprise one of the following:

a discrete Fourier transform DFT basis vector, a fast Fourier transform FFT basis vector, an oversampled DFT basis vector, an oversampled FFT basis vector, a vector determined based on a preset rule, or a basis vector determined based on the second CSI.

22. The apparatus according to any one of claims 12 to 21, wherein that the first CSI is correlated with the second CSI comprises one or more of the following:

the first CSI is associated with the second CSI in time domain, the first CSI is associated with the second CSI in spatial domain, or the first CSI is associated with the second CSI in frequency domain.

23. A communications apparatus, comprising at least one processor and an interface circuit, wherein

the interface circuit is configured to communicate with a module outside the communications apparatus; and
the at least one processor is configured to execute a computer program or instructions, so that the communications apparatus performs the method according to any one of claims 1 to 11.

24. A communications apparatus, comprising at least one processor and a memory, wherein

the memory is configured to store a computer program or instructions; and
the at least one processor is configured to execute the computer program or the instructions, so that the method according to any one of claims 1 to 11 is performed.

25. A chip system, wherein the chip system comprises a processing circuit coupled to a storage medium; and
the processing circuit is configured to execute a part or all of a computer program or instructions in the storage medium that, when executed, are used to implement the method according to any one of claims 1 to 11.

26. A computer-readable storage medium, wherein the computer-readable storage medium stores instructions that, when executed by a computer, cause the method according to any one of claims 1 to 11 to be performed.

27. A computer program product containing a computer program or instructions, wherein when the computer program product runs on a computer, the method according to any one of claims 1 to 11 is performed.

FIG. 1

FIG. 2

Long-periodicity feedback

CSI-RS

s'

$C_1$

$C_2$

$C_3$

F'

$C_2$

s'

$C_1$

$C_3$

$C_2$

F'

Short-periodicity feedback

FIG. 3

| Terminal device | Network device |

Send signaling for a configuration
of channel measurement

Send a reference signal

Perform measurement based on the reference
signal sent by the network device, and obtain
CSI through calculation

The network device sends data based on the
CSI fed back by the terminal device

FIG. 4

FIG. 5

FIG. 6

FIG. 7

Second space

First space

Common subspace

FIG. 8

Terminal device

Network device

900: Obtain first CSI and second CSI

901: Determine reference information, where the reference information is determined based on the first CSI and the second CSI, and the first CSI is correlated with the second CSI

902: Send the reference information

903: Obtain the second CSI

904: Determine the first CSI based on the reference information and the second CSI

FIG. 9

Spatial domain common subspace

Frequency domain common subspace

FIG. 10

Long-periodicity feedback

CSI-RS

$W_{d,s}^{n'}$ $\widetilde{C}_{s,c}^{n}$

$W_{d,f}^{n'}$ $\widetilde{C}_{f,c}^{n}$

$\widetilde{C}_{s,d}^{n}$

$\widetilde{C}_{f,d}^{n}$ $\widetilde{C}_{2}^{n}$

$\widetilde{C}_{2}^{n+z}$

$W_{d,s}^{n+1'}$ $\widetilde{C}_{s,c}^{n+1}$

$W_{d,f}^{n+1'}$ $\widetilde{C}_{f,c}^{n+1}$

$\widetilde{C}_{s,d}^{n+1}$

$\widetilde{C}_{f,d}^{n+1}$ $\widetilde{C}_{2}^{n+m}$

...

Short-periodicity feedback

FIG. 11A

FIG. 11B

FIG. 12A

Long-periodicity feedback

CSI-RS

$\breve{C}_1^n$

$W_l^n$

$\breve{C}_2^n$

$\breve{C}_1^{n+1}$

$W_l^{n+1}$

$\breve{C}_2^{n+z}$

$\breve{C}_2^{n+m}$

$\cdots$

Short-periodicity feedback

FIG. 12B

FIG. 13

(a)

Spatial domain set 1    Spatial domain set 2    Spatial domain set 3

Spatial domain common set

(b)

Frequency domain set 1    Frequency domain set 2    Frequency domain set 3

Frequency domain common set

(c)

Joint spatial-frequency domain set 1    Joint spatial-frequency domain set 2    Joint spatial-frequency domain set 3

Joint spatial-frequency domain common set

(e)

TRP 1      TRP 2      TRP 3

Indexes A
Indexes B
CSI-RS 1   Indexes a.1   CSI-RS 2   Indexes a.2   CSI-RS 3
Indexes b.1

Indexes A
Indexes B
Indexes a.2
Indexes b.2

Indexes A
Indexes B
Indexes a.3
Indexes b.3

(d)

TRP 1      TRP 2      TRP 3

Indexes C
CSI-RS 1   Indexes c.1   CSI-RS 2   Indexes c.2   CSI-RS 3

Indexes C
Indexes c.3

(f)

FIG. 14

Communications apparatus 1500

Transceiver unit 1502

Processing unit 1501

FIG. 15

1600

Antenna

Radio frequency circuit

1610

Memory

Processor

1620

Input/Output apparatus

FIG. 16

FIG. 17

## INTERNATIONAL SEARCH REPORT

| | International application No. |
|---|---|
| | **PCT/CN2023/099696** |

**A.    CLASSIFICATION OF SUBJECT MATTER**

H04B 7/06(2006.01)i

According to International Patent Classification (IPC) or to both national classification and IPC

**B.    FIELDS SEARCHED**

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNTXT; DWPI; ENTXTC; ENTXT; CNKI: 第二, 获取, 接收, 信道状态信息, 参考, 相关, 量化, 投影, 空间, 公共, CSI, second, obtain, receive, channel state information, reference, correlation, quantization, projection, spatial

**C.    DOCUMENTS CONSIDERED TO BE RELEVANT**

| Category* | Citation of document, with indication, where appropriate, of the relevant passages | Relevant to claim No. |
|---|---|---|
| A | CN 112054831 A (HUAWEI TECHNOLOGIES CO., LTD.) 08 December 2020 (2020-12-08)<br>entire document | 1-27 |
| A | CN 105991231 A (ZTE CORP.) 05 October 2016 (2016-10-05)<br>entire document | 1-27 |
| A | CN 113840324 A (HUAWEI TECHNOLOGIES CO., LTD.) 24 December 2021 (2021-12-24)<br>entire document | 1-27 |
| A | WO 2021238576 A1 (HUAWEI TECHNOLOGIES CO., LTD.) 02 December 2021<br>(2021-12-02)<br>entire document | 1-27 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 August 2023** | **11 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

<table>
<tr><td colspan="2"><strong>INTERNATIONAL SEARCH REPORT</strong><br>Information on patent family members</td><td>International application No.<br><strong>PCT/CN2023/099696</strong></td></tr>
</table>

| Patent document cited in search report | Publication date (day/month/year) | Patent family member(s) | Publication date (day/month/year) |
|---|---|---|---|
| CN 112054831 A | 08 December 2020 | None | |
| CN 105991231 A | 05 October 2016 | US 2018115389 A1 | 26 April 2018 |
| | | WO 2016134585 A1 | 01 September 2016 |
| CN 113840324 A | 24 December 2021 | WO 2021259180 A1 | 30 December 2021 |
| WO 2021238576 A1 | 02 December 2021 | CN 113746514 A | 03 December 2021 |

Form PCT/ISA/210 (patent family annex) (July 2022)

**EP 4 535 682 A1**

**Patent documents cited in the description**

- CN 202210784942